# EUROPEAN PATENT APPLICATION

(11) **EP 4 575 869 A1**
(43) Date of publication of application: **25.06.2025**
(21) Application number: 24209110.6
(22) Date of filing: 28.10.2024
(51) Int. Cl.: G06F 21/72, G09C 1/00, H04L 9/06, G06F 21/57, G06F 21/75

(54) **APPARATUS AND METHOD FOR ATTACK-RESISTANT ENCRYPTION AND DECRYPTION**

(30) Priority: 22.12.2023 US 202318395393
(71) Applicant: INTEL Corporation, Santa Clara, CA 95054 (US)
(72) Inventor: Kumar, Raghavan, Hillsboro OR, 97124 (US); Mathew, Sanu K., Portland OR, 97229 (US)
(74) Representative: Samson & Partner Patentanwälte mbB

(57) **Abstract**

An apparatus and method for attack-resistant encryption and decryption. For example, one embodiment of an apparatus comprises: execution circuitry to execute instructions and generate memory access requests including load requests to read data from memory and store requests to store data to memory; and cryptographic circuitry to perform a plurality of rounds of encryption or decryption to encrypt or decrypt the data, respectively, the cryptographic circuitry to perform one or more redundant rounds for a corresponding one or more of the plurality of rounds, the one or more redundant rounds to include spatial or temporal differences relative to the corresponding one or more rounds; the cryptographic circuitry to generate a fault upon detecting a mismatch between an output of a redundant round output and an output of a corresponding round.

## Description

### BACKGROUND

### Field of the Invention

This invention relates generally to the field of computer processors. More particularly, the invention relates to an apparatus and method for attack-resistant encryption and decryption.

### Description of the Related Art

Fault-injection attacks (FIA) are becoming increasingly prevalent as a practical physical attack on secret keys used by AES hardware accelerators. FIAs reduces the key search space by employing differential fault analysis (DFA) of ciphertexts corrupted by external stimulus. FIA on conventional AES-256 engines typically targets the last 3 round iterations to induce bitflips on intermediate circuit nodes using external stimulus. Faults injected during upstream AES rounds (0-10) rapidly cascade out due to the avalanche effect of AES encryption, rendering first-order DFA impractical for realistic attacks. However, faults injected during round13, round12, and round11 computations propagate down the AES logic cone probabilistically corrupting 1, 4 and 16 ciphertext bytes, respectively. Current AES attack countermeasures for fault-injection incurs significant silicon and power overheads, limiting the adoption of such countermeasures.

### BRIEF DESCRIPTION OF THE DRAWINGS

A better understanding of the present invention can be obtained from the following detailed description in conjunction with the following drawings, in which:
FIG. 1 illustrates a block diagram of a computer system including a processor, a memory controller circuit, and cryptographic circuitry according to examples of the disclosure.
FIG. 2 illustrates a format of a data line including a locator value for encoding a repeated value according to examples of the disclosure.
FIG. 3 illustrates the format of the data line from FIG. 2 including an additional locator bit used for the encoding of a repeated value according to examples of the disclosure.
FIG. 4 illustrates an example of operations for a method of performing a read from memory with repeated value encoding according to examples of the disclosure.
FIG. 5 illustrates an example of operations for a method of performing a write to memory with repeated value encoding according to examples of the disclosure.
FIG. 6 illustrates another example of operations for a method of performing a read from memory with repeated value encoding according to examples of the disclosure.
FIG. 7 illustrates an example computing system.
FIG. 8 illustrates a block diagram of an example processor and/or System on a Chip (SoC) that may have one or more cores and an integrated memory controller.
FIG. 9 is a block diagram illustrating a computing system 900 configured to implement one or more aspects of the examples described herein.
FIG. 10A illustrates examples of a parallel processor.
FIG. 10B illustrates examples of a block diagram of a partition unit.
FIG. 10C illustrates examples of a block diagram of a processing cluster within a parallel processing unit.
FIG. 10D illustrates examples of a graphics multiprocessor in which the graphics multiprocessor couples with the pipeline manager of the processing cluster.
FIGS. 11A-C illustrate additional graphics multiprocessors, according to examples.
FIG. 12 shows a parallel compute system 1200, according to some examples.
FIGS. 13A-13B illustrate a hybrid logical/physical view of a disaggregated parallel processor, according to examples described herein.
FIG. 14A is a block diagram illustrating both an example in-order pipeline and an example register renaming, out-of-order issue/execution pipeline according to examples.
FIG. 14B is a block diagram illustrating both an example in-order architecture core and an example register renaming, out-of-order issue/execution architecture core to be included in a processor according to examples.
FIG. 15 illustrates examples of execution unit(s) circuitry, such as execution unit(s) circuitry.
FIG. 16 is a block diagram of a register architecture according to some examples.
FIG. 17 illustrates examples of an instruction format.
FIG. 18 illustrates examples of an addressing information field.
FIG. 19 illustrates examples of a first prefix.
FIGS. 20A-20D illustrate examples of how the R. X, and B fields of the first prefix are used.
FIGS. 21A-21B illustrate examples of a second prefix.
FIG. 22 illustrates examples of a third prefix.
FIGS. 23A-23B illustrate thread execution logic including an array of processing elements employed in a graphics processor core according to examples described herein.
FIG. 24 illustrates an additional execution unit, according to an example.
FIG. 25 is a block diagram illustrating a graphics processor instruction formats according to some examples.
FIG. 26 is a block diagram of another example of a graphics processor.
FIG. 27A is a block diagram illustrating a graphics processor command format according to some examples.
FIG. 27B is a block diagram illustrating a graphics processor command sequence according to an example.
FIG. 28 is a block diagram illustrating the use of a software instruction converter to convert binary instructions in a source ISA to binary instructions in a target ISA according to examples.
FIG. 29 is a block diagram illustrating an IP core development system that may be used to manufacture an integrated circuit to perform operations according to some examples.
FIG. 30 illustrates an architecture including cryptographic circuitry in accordance with embodiments of the invention.
FIG. 31 illustrates cryptography circuitry in accordance with some embodiments of the invention.
FIG. 32 illustrates an example in which cryptographic rounds and redundant cryptographic rounds are interleaved.
FIG. 33 illustrates an example of cryptographic circuitry based on composite field representations.
FIG. 34 illustrates one example showing circuitry subjected to injected faults.
FIG. 35 illustrates results in accordance with some embodiments of the invention.
FIG. 36 illustrates a method in accordance with some embodiments of the invention.

### DETAILED DESCRIPTION

In the following description, for the purposes of explanation, numerous specific details are set forth in order to provide a thorough understanding of the embodiments of the invention described below. It will be apparent, however, to one skilled in the art that the embodiments of the invention may be practiced without some of these specific details. In other instances, well-known structures and devices are shown in block diagram form to avoid obscuring the underlying principles of the embodiments of the invention.

The present disclosure relates to methods, apparatus, systems, and non-transitory computer-readable storage media for matching pair asymmetrical encryption in a computing system based on the higher probability of finding matching pairs according to the Birthday Problem. Examples herein are directed to memory controller circuitry and methods for data encryption that select between a set of matching tuples (e.g., pairs or triples of bytes with the same value) to be encoded to create different ciphertexts across encryptions of the same input plaintext. This confounds adversaries that expect to see the same ciphertext given the same plaintext when encrypted with symmetric ciphers. Furthermore, the examples herein detect ciphertext corruption and prevent software replay attacks. Examples herein are directed to a novel data encryption mode that select from a set of matching pairs (e.g., within birthday bounds) that are encoded to create different ciphertexts across encryptions of the same input plaintext, for example, where the novel data encryption mode is in addition to or alternatively to an XOR-encrypt-XOR (XEX) Tweakable block ciphertext Stealing (XTS) mode, Electronic Code Book (ECB) mode, Cipher Block Chaining (CBC) mode, etc. of the computer system (e.g., memory controller circuitry). Memory operations by a processor to external system memory may be protected via encryption and integrity, e.g., with integrity using additional metadata for storing integrity tags.

In certain examples, a processor includes an AES-XTS mode (e.g., XEX-based tweaked- codebook mode with ciphertext stealing) for memory encryption, e.g., including Intel^{®} Total Memory Encryption (TME), Intel^{®} Software Guard Extensions, and Intel^{®} Trust Domain Extensions (TDX), and other storage encryption solutions. In certain examples, encryption in XTS mode uses the memory address as a tweak to create different ciphertext for different memory locations despite the input data being the same, whereas certain examples in ECB mode produce the same ciphertext for the same plaintext. However, a technical issue is that the same plaintext for the same address encrypted with the same key will still yield the same ciphertext, e.g., allowing an adversary (e.g., attacker) to use this symmetry to attempt to circumvent the encryption.

In certain examples, memory controller circuitry (e.g., a memory encryption engine) uses an in-memory version tree to give a unique counter value for every data encryption when storing data to memory. This results in a unique ciphertext for each write, but the version tree takes about twenty-five percent of memory for metadata and lowers performance by about three times. The high memory overheads and performance impact prevent real world use of such examples.

To overcome the above technical problems, examples herein take advantage of the seemingly paradoxical high probability of finding a matching pair of values in a set of random of matching values (e.g., bytes) in a cache line and/or memory line are used to break symmetries, e.g., even when using a symmetric cipher. In certain examples, when multiple pairs arise, (e.g., only) one pair is chosen to be encoded within a memory line or portion thereof. In certain examples, the pair to be encoded is chosen at random to change the resulting ciphertext, e.g., even when the input plaintext is the same. While many pairs are typical in non-random appearing computer data (for example, unencrypted and/or uncompressed data, such as, but not limited to, code, pictures, text files, memory initialized to zero, etc.) creating a large number of choices for an encoded (e.g., byte) pair, pairs also appear in random data (e.g., already encrypted data and/or compressed data). In certain examples, these choices allow for different encodings resulting in different ciphertexts across repeated encryptions of the same plaintext. In certain examples, rule(s) are applied to detect when the wrong pair was encoded, e.g., providing integrity or authenticity. In certain examples, a matching pair mode (e.g., "birthday pair" mode) of data encryption provides integrity, replay prevention, and/or ciphertext differentiation, for example, in contrast to an (e.g., XTS) mode does not provide integrity, replay prevention, and/or ciphertext differentiation and thus allowing adversarial code books to be generated or ciphertext corruption to go undetected. In certain examples, a processor (e.g., memory controller circuit) with a matching pair mode (e.g., "birthday pair" mode) of data encryption disclosed herein provides a more secure encryption, against even hardware adversaries, with the best performance and lowest cost. In certain examples, a physical circuit (e.g., memory controller circuit) for memory encryption (e.g., and decryption) includes a matching pair mode (e.g., "birthday pair" mode) of data encryption disclosed herein. In certain examples, a memory controller circuit in matching pair mode (e.g., "birthday pair" mode) of data encryption writing the same data to memory will result in different ciphertexts (e.g., with high probability). In certain examples, a memory controller circuit in matching pair mode (e.g., "birthday pair" mode) of data encryption is able to encrypt (e.g., encode) greater than about 98% of memory lines, e.g., and even about 70% of random data can be encoded, for example, virtually eliminating sequestered storage and accesses thereto, providing lower (e.g., XTS like) overhead and performance with much better security properties by constantly changing the ciphertext. A memory controller circuit (e.g., operating according to a matching pair mode disclosed herein) cannot practically be performed in the human mind (or with pen and paper).

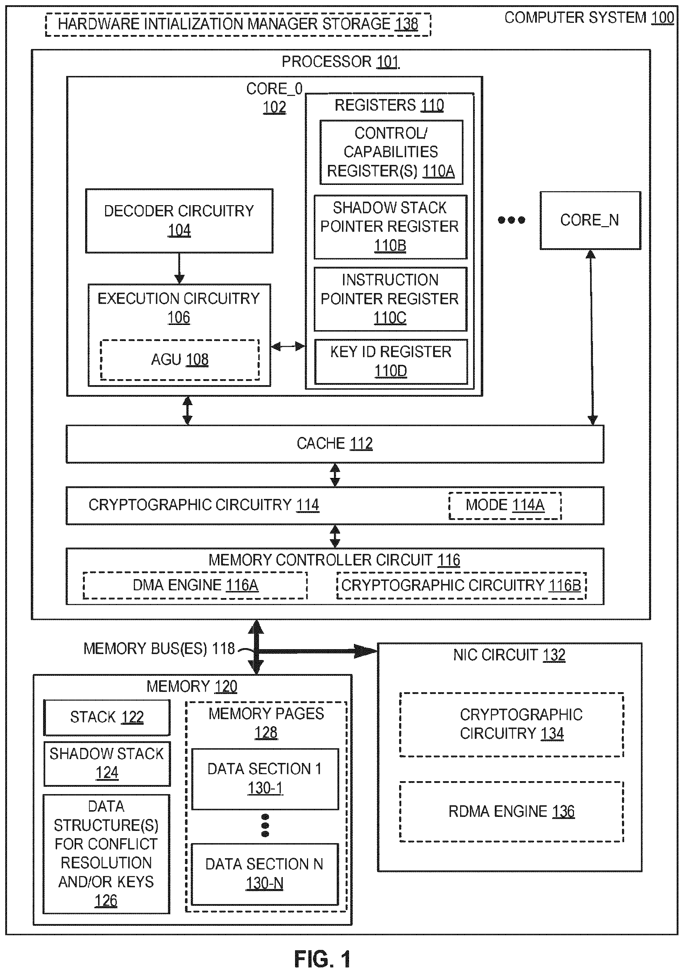

Turning now to the figures, FIG. 1 illustrates a block diagram of a computer system 100 including a processor 101, a memory controller circuit 116, and cryptographic circuitry (e.g., cryptographic circuitry 114, cryptographic circuitry 116B, and/or cryptographic circuitry 134) according to examples of the disclosure.

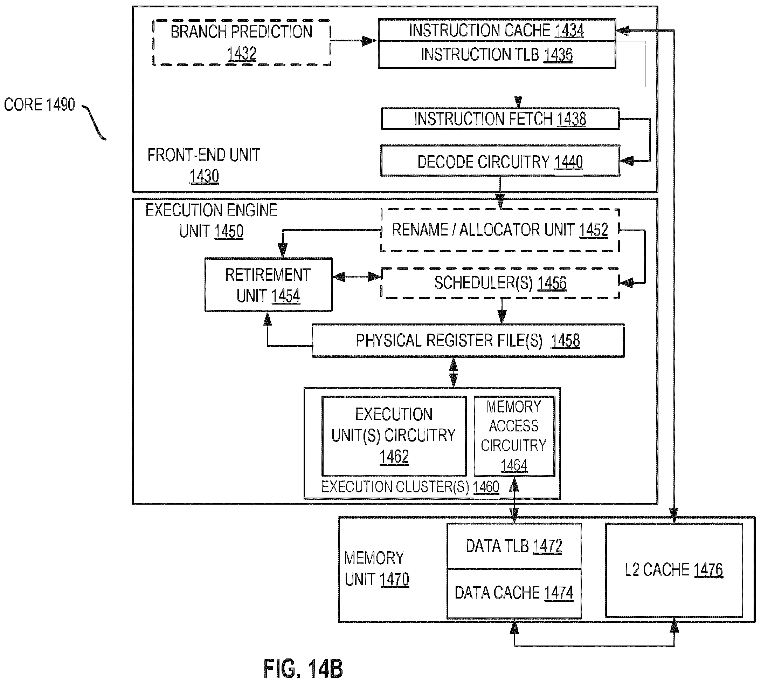

A core may be any hardware processor core, e.g., as an instance of core 1490 in FIG. 14B. Although multiple cores are shown, processor 101 may have a single or any plurality of cores (e.g., where N is any positive integer greater than 1).

Computer system 100 includes registers 110. In certain examples, registers 110 (e.g., for a particular core) includes one or any combination of: control/capabilities register(s) 110A, shadow stack pointer register 110B, instruction pointer (IP) register 1 IOC, and/or key identification (key ID) register 110D.

In certain examples, each of control/capabilities register(s) 110A of core 102 includes the same data as corresponding control/capabilities register(s) of other cores (e.g., core_N). In certain examples, control/capabilities registers store the control values and/or capability indicating values for cryptographic circuitry (e.g., an encryption circuit and/or decryption circuit) or other component(s). For example, where capabilities register(s) store value(s) (e.g., provided by execution of hardware initialization manager storage 138) that indicate the functionality that a corresponding cryptographic circuitry (e.g., cryptographic circuitry 114, cryptographic circuitry 116B, and/or cryptographic circuitry 134) is capable of and/or control register(s) store values that control the corresponding cryptographic circuitry (e.g., cryptographic circuitry 114, cryptographic circuitry 116B, and/or cryptographic circuitry 134).

In certain examples, memory 120 is to store a (e.g., data) stack 122 and/or a shadow stack 124. In certain examples, shadow stack 124 stores a context for a thread, for example, that includes a shadow stack pointer, e.g., for that context. Shadow stack pointer may be an address, e.g., a linear address or other value to indicate a value of the stack pointer. In certain examples, each respective linear address specifies a different byte in memory (e.g., in a stack). In certain examples, the current shadow stack pointer is stored in a shadow stack pointer register 110B.

In certain examples, a (e.g., user level) request (e.g., from a thread that is a user level privilege thread) to switch a context (e.g., push and/or pop a stack pointer) may be received. In certain examples, a request to switch a context includes pushing or popping from stack 122 one or more other items of data in addition to a stack pointer. In certain examples, program code (e.g., software) executing in user level may request a push or a pop of a (e.g., non-shadow) stack 122. In certain examples, a request is the issuance of an instruction to a processor for decode and/or execution. For example, a request for a pop of a stack pointer from stack 122 may include executing a restore stack pointer instruction. For example, a request for a push of a stack pointer to stack 122 may include executing a save stack pointer instruction. In certain examples, shadow stack 124 is a second separate stack that "shadows" the (e.g., program call) stack 122. In certain

In certain examples, a function loads the return address from both the call stack 122 and the shadow stack 124, e.g., and the processor 101 compares them, and if the two records of the return address differ, then an attack is detected (e.g., and an exception reported to the OS), and if they match, the access (e.g., push or pop) is allowed to proceed.

In certain examples, instruction pointer (IP) register 110C is to store the (e.g., current) IP value, e.g., RIP value for 64 bit address modes or EIP value for 32 bit addressing modes.

In certain examples, memory access (e.g., store or load) requests for memory 120 are generated by processor 101 (e.g., a core), e.g., a memory access request generated by execution circuitry 106 of core 102 (e.g., caused by the execution of an instruction decoded by decoder circuitry 104) and/or a memory access request may be generated by execution circuit of another core_N. In certain examples, a memory address for the memory access is generated by an address generation unit (AGU) 108 of the execution circuitry 106.

In certain examples, a memory access request is serviced by a cache, e.g., cache within a core and/or cache 112 shared by multiple cores. Additionally or alternatively (e.g., for a cache miss), memory access request may be serviced by memory 120 separate from a cache. In certain examples, a memory access request is a load of data from memory 120 into a cache of a processor, e.g., cache 112. In certain examples, a memory access request is a store of data to memory 120 from (e.g., a cache of) a processor, e.g., cache 112.

In certain examples, computer system 100 includes cryptographic circuitry (e.g., that utilizes encryption to store encrypted information and decryption to decrypt that stored and encrypted information). In certain examples, cryptographic circuitry is included within a processor 101. In certain examples, cryptographic circuitry 116B is included within memory controller circuit 116. In certain examples, cryptographic circuitry is included between levels of a cache hierarchy. In certain examples, cryptographic circuitry 134 is included within a network interface controller (NIC) circuit 132, e.g., a NIC circuit 132 that is to control the sending and/or receiving of data over a network. In certain examples, single cryptographic circuitry is utilized for both (e.g., all) cores of computer system 100. In certain examples, cryptographic circuitry includes a control to set it into a particular mode, for example, mode 114A to set cryptographic circuitry 114 into a particular mode (e.g., such as a matching pair mode (e.g., "birthday pair" mode) of data encryption and/or decryption discussed herein) or similarly for other cryptographic circuitry.

Certain systems (e.g., processors) utilize encryption and decryption of data to provide security. In certain examples, cryptographic circuitry is separate from a processor core, for example, as an offload circuit controlled by a command sent from processor core, e.g., cryptographic circuitry 114 separate from any cores. Cryptographic circuitry 114 may receive a memory access (e.g., store) request from one or more of its cores (e.g., from address generation unit 108 of execution circuitry 106). In certain examples, cryptographic circuitry is to, e.g., for an input of a destination address and text to be encrypted (e.g., plaintext) (e.g., and a key), perform an encryption to generate a ciphertext (e.g., encrypted data). The ciphertext may then be stored in storage, e.g., in memory 120. In certain examples, cryptographic circuitry performs a decryption operation, e.g., for a memory load request. The cryptographic circuitry may include a tweaked mode of operation, such as AES-XTS, using the memory address as a tweak to the cryptographic operation, e.g., ensuring that even the same data encrypted for different addresses results in different ciphertext. Other modes such as AES-CBC may be used to extend across an entire memory line that is larger than a single block of data, e.g., allowing an initial locator value for a pair encoding to be distributed across the ciphertext for an entire memory line.

In certain examples, a processor (e.g., as an instruction set architecture (ISA) extension) supports total memory encryption (TME) (for example, memory encryption with a single ephemeral key) and/or multiple-key TME (TME-MK or MKTME) (for example, memory encryption that supports the use of multiple keys for page granular memory encryption, e.g., with additional support for software provisioned keys).

In certain examples, TME provides the capability to encrypt the entirety of the physical memory of a system. For example, with this capability enabled in the very early stages of the boot process with a small change to hardware initialization manager code (e.g., Basic Input/Output System (BIOS) firmware), e.g., stored in storage 138. In certain examples, once TME is configured and locked in, it will encrypt all the data on external memory buses of computer system 100 using an encryption standard/algorithm (e.g., an Advanced Encryption Standard (AES), such as, but not limited to, one using 128-bit keys). In certain examples, the encryption key used for TME uses a hardware random number generator implemented in the computer system (e.g., processor), and the key(s) (e.g., to be stored in data structure 126) are not accessible by software or by using external interfaces to the computer system (e.g., system-on-a-chip (SoC)). In certain examples, TME capability provides protections of encryption to external memory buses and/or memory.

In certain examples, multi-key TME (TME-MK) adds support for multiple encryption keys. In certain examples, the computer system implementation supports a fixed number of encryption keys, and software can configure the computer system to use a subset of available keys. In certain examples, software manages the use of keys and can use each of the available keys for MK allow page granular encryption of memory where the physical address specifies the key ID (KeyID). In certain examples (e.g., by default), cryptographic circuitry (e.g., TME-MK) uses the (e.g., TME) encryption key unless explicitly specified by software. In addition to supporting a processor (e.g., central processing unit (CPU)) generated ephemeral key (e.g., not accessible by software or by using external interfaces to a computer system), examples ofTME-MK also support software provided keys. In certain examples, software provided keys are used with non-volatile memory or when combined with attestation mechanisms and/or used with key provisioning services. In certain examples, a tweak key used for TME-MK is supplied by software. Certain examples (e.g., platforms) herein use TME and/or TME-MK to prevent an attacker with physical access to the machine from reading memory (e.g., and stealing any confidential information therein). In one example, an AES-XTS standard is used as the encryption algorithm to provide the desired security.

In certain examples, each page of memory pages 128 includes a key used to encrypt information, e.g., and thus can be used to decrypt that encrypted information. In certain examples, the keyID register is used with page tables (e.g., extended and/or non-extended page tables). In certain examples, the keyID register specifies the key itself, e.g. where the cryptographic engine (e.g., cryptographic circuitry) is part of the processor pipeline. In certain examples, the keyID register provides the keyID, e.g., the page table entries do not provide the keyID.

In certain examples, TME-MK cryptographic (e.g., encryption) circuitry maintains an internal key table not accessible by software to store the information (e.g., key and encryption mode) associated with each KeyID (e.g., a corresponding KeyID for a corresponding encrypted memory block/page) (for example, where a key ID is incorporated into the physical address, e.g., in the page tables, and also in every other storage location such as the caches and TLB). In one example, each KeyID is associated with one of three encryption modes: (i) encryption using the key specified, (ii) do not encrypt at all (e.g., memory will be plain text), or (iii) encrypt using the TME Key. In certain examples, unless otherwise specified by software, TME (e.g., TME-MK) uses a hardware-generated ephemeral key by default which is inaccessible by software or external interfaces, e.g., and TME-MK also supports software-provided keys.

In certain examples, the PCONFIG is used to program KeyID attributes for TME-MK.

Table 1 below indicates an example TME-MK Key Table:

| KeyID | Key | Encryption Mode |
|---|---|---|
| (entry 1) | (entry 1) | (entry 1) |
| (entry 2) | (entry 2) | (entry 2) |

Table 2 below indicates example PCONFIG Leaf Encodings:

| Leaf | Encoding | Description |
|---|---|---|
| TME-MK_KEY_PROGRAM | 0x00000000 | This leaf is used to program |
| | | the key and encryption mode associated with a KeyID. |
| RESERVED | 0x00000001-0xFFFFFFFF | Reserved for future use (#GP(0) if used). |

Table 3 below indicates example PCONFIG targets (e.g., TME-MK encryption circuit):

| Target Identifier | Value | Description |
|---|---|---|
| INVALID_TARGET | 0x00000000 | Invalid target identifier |
| TME-MK | 0x00000001 | Multi-Key Total Memory |
| | | Encryption Engine |
| RESERVED | 0x00000002-0xFFFFFFFF | Reserved for future use. |

In a virtualization scenario, certain examples herein allow a virtual machine monitor (VMM) or hypervisor to manage the use of keys to transparently support (e.g., legacy) operating systems without any changes (e.g., such that TME-MK can also be viewed as TME virtualization in such a deployment scenario). In certain examples, an operating system (OS) is enabled to take additional advantage of TME-MK capability, both in native and virtualized environments. In certain examples, TME-MK is available to each guest OS in a virtualized environment, and the guest OS can take advantage of TME-MK in the same ways as a native OS.

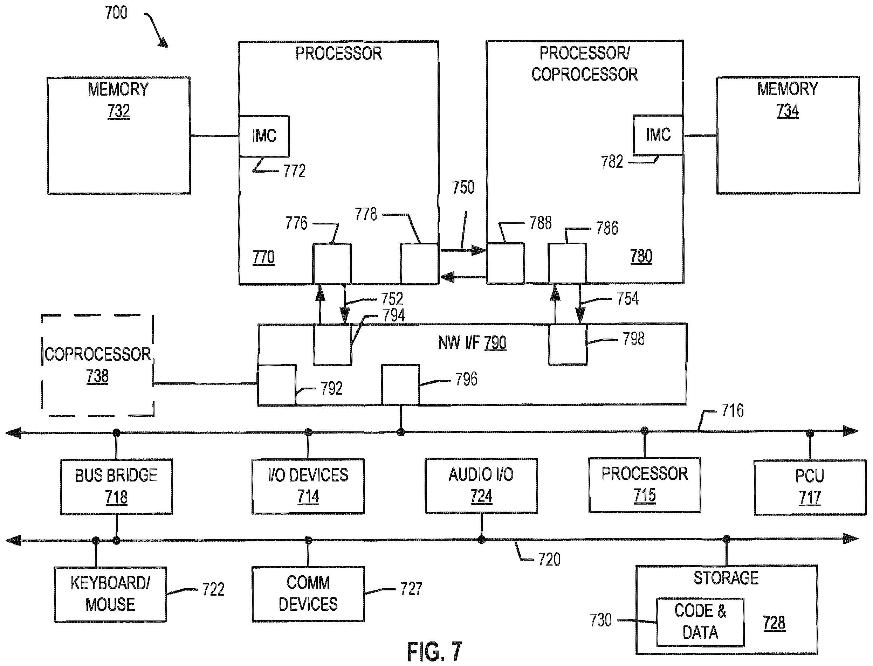

In certain examples, computer system 100 includes a memory controller circuit 116. In one example, a single memory controller circuit is utilized for a plurality of cores of computer system 100. Memory controller circuit 116 of processor 101 may receive an address for a memory access request, e.g., and for a store request also receiving the payload data (e.g., ciphertext) to be stored at the address, and then perform the corresponding access into memory 120, e.g., via one or more memory buses 118. Each memory controller (MC) may have an identification value, e.g., "MC ID". Memory and/or memory bus(es) (e.g., a memory channel thereof) may have an identification value, e.g., "channel ID". Each memory device (e.g., non-volatile memory 120 device) may have its own channel ID. Each processor (e.g., socket) (e.g., of a single SoC) may have an identification value, e.g., "socket ID". In certain examples, memory controller circuit 116 includes a direct memory access engine 116A, e.g., for performing memory accesses into memory 120. Memory may be a volatile memory (e.g., DRAM), non-volatile memory (e.g., non-volatile DIMM or non-volatile DRAM) and/or secondary (e.g., external) memory (e.g., not directly accessible by a processor), for example, a disk and/or solid-state drive (e.g., memory unit 728 in FIG. 7). In certain examples, memory controller circuit 116 is to perform compression and/or decompression of data, e.g., where multiple bits (e.g., one or more bytes) of data that are repeated in a data line are removed to allow for compression according to that repetition (e.g., repetition- based compression/decompression).

In certain examples, computer system 100 includes a NIC circuit 132, e.g., to transfer data over a network. In certain examples, a NIC circuit 132 includes cryptographic circuitry 134 (e.g., encryption and/or decryption circuit), e.g., to encrypt (and/or decrypt) data, but without a core and/or encryption (or decryption) circuit of a processor (e.g., processor die) performing the encryption (or decryption). In the case where a NIC circuit that is supplied by a different vendor (e.g., manufacturer) than a socket (e.g., processor), the NIC circuit is viewed as a security risk for the vendor (e.g., manufacturer) of the socket in certain examples. In certain examples, encryption (and decryption) performed by NIC circuit 132 is enabled or disabled (e.g., via a request sent by socket). In certain examples, NIC circuit 132 includes a remote DMA engine 136, e.g., to send data via a network.

In one example, the hardware initialization manager (non-transitory) storage 138 stores hardware initialization manager firmware (e.g., or software). In one example, the hardware initialization manager (non-transitory) storage 138 stores Basic Input/Output System (BIOS) firmware. In another example, the hardware initialization manager (non-transitory) storage 138 stores Unified Extensible Firmware Interface (UEFI) firmware. In certain examples (e.g., triggered by the power-on or reboot of a processor), computer system 100 (e.g., core 102) executes the hardware initialization manager firmware (e.g., or software) stored in hardware initialization manager (non-transitory) storage 138 to initialize the system 100 for operation, for example, to begin executing an operating system (OS) and/or initialize and test the (e.g., hardware) components of system 100.

In certain examples, data is stored as a single unit in memory 120, e.g., a first data section 130-1 stored on a first memory page and a second data section 130-N (e.g., where N is any integer greater than 1) stored (e.g., at least in part) on a second memory page.

In certain examples, a computer system (e.g., memory controller circuit thereof) implements a matching pair mode (e.g., "birthday pair" mode) of data encryption and/or decryption. The below examples (e.g., modes or sub-modes) refer to a cache line width of data memory line) may be utilized. In some examples, a cache line or memory line may be larger or smaller. Certain examples herein modify the input plaintext according to one or more of the examples (e.g., modes or sub-modes) herein to generate a modified plaintext. Certain examples herein use circuitry in a birthday mode to modify a same input plaintext differently (e.g., when that same plaintext is to be encoded) to generate a different output (e.g., ciphertext) in multiple encryptions of that same input plaintext. In certain examples, a locator value (e.g., 8 bits/ 1 Byte wide) is used within the data line (e.g., cache line), for example, not within separate metadata or additional memory. In certain examples, a locator value (e.g., 8 bits/ 1 Byte wide) is to (i) identify a location of the repeated value that is still within the modified plaintext (e.g., the modified plaintext that includes the locator value) and (ii) identify a location of the repeated value that is not within the modified plaintext to make space for the locator value.

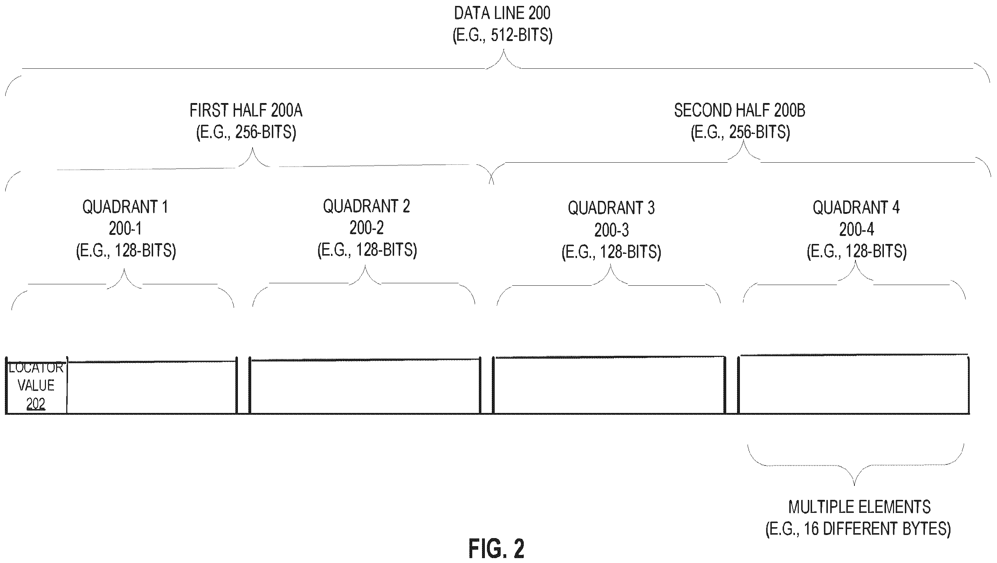

FIG. 2 illustrates a format of a data line 200 including a locator value 202 for encoding a repeated value according to examples of the disclosure. Although the locator value is shown at the beginning of the first (e.g., leftmost) end of the data line 200, it should be understood that other locations may be used, e.g., where the mode indicates to the memory controller circuit where the locator value is to be located in a modified data line (e.g., modified cache line). In certain examples, the data line 200 (e.g., 512 bits) includes a first half 200A (e.g., upper 256 bits) and a second half 200B (e.g., lower 256 bits). In certain examples, the data line 200 (e.g., first half 200A) includes a first quadrant 200-1 (e.g., upper 128 bits of the first half 200A), a second quadrant 200-2 (e.g., lower 128 bits of the first half 200A), a third quadrant 200-3 (e.g., upper 128 bits of the second half 200B), and a fourth quadrant 200-4 (e.g., lower 128 bits of the second half 200B). Note that the quadrants are shown spaced apart to illustrate their boundaries, but it should be understood that all four quadrants are concatenated together within data line 200.

In certain examples, a data line 200 includes multiple elements (e.g., a 512-bit data line 200 including 64 elements where each element is 8 bits/ 1 Byte wide).

In certain examples, a memory controller circuit (e.g., memory controller circuit 116 in FIG. 1) is to receive a data line 200 (e.g., single cache line) for writing to the memory (e.g., memory 120), search the data line for a repeated value, determine that the repeated value in the data line is identifiable using a locator value 202 for a repeated value in the data line, in response to the determination, generate the locator value for the repeated value in the data line, remove a second instance of the repeated value from the data line and insert the locator value into the data line to generate a modified data line (e.g., modified plaintext), encrypt the modified data line (e.g., modified plaintext) into an encrypted data line, and cause a write of the encrypted data line to the

### Modes

In certain examples, one value of a repeated pair of values in a data line 200 is removed to make room (e.g., space) in the modified data line for the locator value. In certain examples, the format of the locator value is according to one or more of the examples (e.g., modes or sub-modes) herein to generate a modified data line (e.g., modified plaintext).

In certain examples, in a first mode (e.g., first sub-mode) (e.g., first algorithm), a certain number of (e.g., 16) bits of a data line (e.g., plaintext) are encoded, based on two sets of repeated values (e.g., bytes) (e.g., any "birthday pair"). In certain examples, those number of bits (e.g., 16b/2B) recovered (e.g., removed) is for a locator value. In certain examples, the locator value includes two bits to indicate first and second block locations (e.g., 16B), e.g., first or second block (e.g., quadrant) indicated by a first bit set to 0 or 1 (e.g., respectively) of the locator value and third or fourth block (e.g., quadrant) indicated by a second bit set to 0 or 1 (e.g., respectively) of the locator value.

In certain examples, the locator value includes four bits location first in block and 3 bits of offset location of second byte in same block (e.g., can extend to wraparound or adjacent block, extending to adjacent block may give more options as these are all random bytes)

In certain examples, the locator value includes 4 bits and 3 bits for identifying bytes in second identified block (e.g., last block may wraparound to first).

In certain examples, if there are not two sets of valid repeated values (e.g., pairs that are encodable according to a format of the locator values), then set a first value of the locator value to indicate no encoding with an invalid (e.g., 16b) locator value (e.g., xFFFF). In certain examples, a memory controller circuit uses an error correction code (ECC) to correct this replaced (e.g., 16b) value as if it was corrupted data. In certain examples, the replaced original (e.g., byte) value may instead be stored in sequestered memory (e.g., data structure 126 for conflict resolution in FIG. 1) so that the memory line may be restored to its original value.

In certain examples, it is assumed that across all four blocks (e.g., quadrants), there are often more than 2 pairs of repeated values, e.g., even for random data (e.g., where approximately 40% of the time a byte value repeats within a quadrant). In certain examples, a memory controller circuit utilizes multiple sets of repeated values for asymmetrical encryption because on a write, the memory controller circuit (e.g., randomly) chooses a first set (e.g., first pair) of matching values for encoding, and leaves the second (or third, fourth, etc.) set of matching values for next choice, e.g., where this choice results in different/asymmetric ciphertext across writes in
comparison to what was read. In certain examples, the modified data (e.g., modified plaintext) is encoded, e.g., based on the domain key to prevent controlled replay across domains by an adversary.

In certain examples, in a second mode (e.g., second sub-mode) (e.g., second algorithm), a data line (e.g., plaintext) (e.g., 64 bytes) is split into four equal sized quadrants (e.g., each of 128b / 16B) and the memory controller circuit (e.g., encoding algorithm thereof) searches for the collision of values (e.g., on a single byte granularity) in the first quadrant with the second and a collision with one value (e.g., one byte) of the third quadrant with one value (e.g., one byte) of the fourth. In certain examples, the memory controller circuit is then to compress the data line by two bytes (16 bits), and is thus to use four times four bits to locate the matching bytes in the quadrants. In certain examples, the memory controller circuit is to find one matching pair on average for both bytes that encode (e.g., 16*16/2"8). In certain examples, one location value (e.g., OxFFFF) is taken (e.g., reserved) to indicate that there were no found matching values and would not encode. In certain examples, the one location value is reclaimed as the locator position.

In certain examples, in a third mode (e.g., third sub-mode) (e.g., third algorithm), the memory controller circuit is only to encode one pair (e.g., one byte) in one half of a data line (e.g., plaintext) (e.g., 64 bytes), for example, in one mode, both the repeated values of a single pair are required to be in the same half of a data line (e.g., and the locator value is included in that half of the data line).

In certain examples, in a fourth mode (e.g., fourth sub-mode) (e.g., fourth algorithm), the memory controller circuit is to extend the one pair encoding of the third mode across the data line (e.g., 64B cache line). In certain examples, for a single byte encoding (e.g., single byte locator value), having multiple pairs gives a choice on which pair to encode. This choice can also carry information when there are multiple alternate pairs available (e.g., encoding one pair but not knowing which half it is in, there are two possible locations). For example, always choose the highest byte value for the encoded pair in certain examples. That means, on a read, when the memory controller circuit determines there are multiple (e.g., unencoded) pairs, there are two alternative locations for the encoded byte, e.g., presuming that the correct alternate encoded location is the one with the larger byte value of the two possible locations. Certain examples herein chose to encode the pair with this property on a write. Examples herein further increase the efficiency of a single pair encoding to cover the whole data line (e.g., cache line) (e.g., to cover all four quadrants) when multiple pairs exist. In certain examples, the remaining unencoded pairs indicate to the memory controller circuit which encoded location (e.g., half) is the correct one.

In certain examples, for data not following a uniform distribution, it is assumed that the the probability distribution leading to the smallest number of collisions. In certain examples, if the data follows any other probability distribution, e.g., like the characters in English texts, it can be expected that many collisions to occur (e.g., the space character repeats frequently). This means that the fraction of cache lines that are encodable rises for non-random data, e.g., with 98% of lines being encodable according to the examples herein, minimizing the need to access a conflict table, and avoiding any associated performance impact.

In certain examples, the memory controller circuit determines that a data line 200 includes only one set of matching values (e.g., one pair) and they are both in the first half 200A of the data line. In certain examples, such an encode is achieved with an eight bit locator, e.g., such that the first five bits of the locator indicate which of 32 different bytes within the 256 bytes (e.g., 8 bits per slot x 32 slots=256 bits) includes the first instance of the matching values that is still within the modified plaintext and the other three bits of the locator indicate an offset (e.g., a three bit offset) within that half (e.g., within that quadrant) of the second instance of the matching values that is removed (for example, to utilize, e.g., with shifting as discussed herein, that removed space to store the locator value 202). In certain examples, such a decode is achieved by the memory controller circuit because it detects no other pair, it uses an eight bit encode of the one pair in the first half only, e.g., and recreates the single pair in the first half using the locator value. In certain examples, a locator value is selected to indicate any split of bits for absolute or relative indexing, for example, an 8-bit locator value to cumulatively identify two different byte locations, e.g., (i) using five bits to identify a first byte and three bits to identify (e.g., an offset to) a second byte or (ii) using six bits to identify one out of 64 different bytes and two bits to identify (e.g., an offset to) a second byte (e.g., 2 bytes of relative offset to this byte).

In certain examples, the memory controller circuit determines that a data line 200 includes no matching values or only one set of matching values (e.g., one pair) and they are both in the second half 200B of the data line. In certain examples, such an encode is not achieved with an eight bit locator format, e.g., and the locator value field 202 indicates that the memory line address is to be used as an index into data structure 126 for conflict resolution in FIG. 1 to determine the data value of the original plaintext that was removed (e.g., in the same bit positions) (e.g., overwritten) by the locator value field 202 (e.g., index into data structure 126 stored in that field 202). In certain examples, such a decode is not achieved with the eight bit locator format, e.g., and the locator value field 202 is instead used to store a value that indicates no compression of the plaintext was performed, e.g., the value indicating that the memory line address being an index into data structure 126 for conflict resolution in FIG. 1 storing the data value of the original plaintext that is removed (e.g., in the same bit positions) (e.g., overwritten) by the locator/conflict value field 202 (e.g., index into data structure 126 stored in that field 202). In some examples, the locator conflict value is followed by an index into data structure 126 for conflict resolution, e.g., where the conflict value and index replace the original data now stored in the data structure 126 allowing the full memory line to be recovered while optimizing the memory usage for data structure 126.

In certain examples, the format of the pair encoding (e.g., and locator value) used for an encoding is the same as that used for a decoding, e.g., according to the mode.

### Additional Locator Bit(s)

In certain examples, an additional locator bit (e.g., 9th bit) is desired to be used, however, the removal of the single value (e.g., eight bits/byte) of a pair of repeated values only creates that amount (e.g., eight bits) of space in the modified data line (e.g., modified plain text). In certain examples, a memory controller circuit includes a mode that utilizes an additional locator bit.

In certain examples, when two or more pairs exist on a write, the additional locator bit (e.g., 9th bit) is used to deterministically locate the encoded pair by identifying which half it is located. In certain examples, the additional locator bit overlaps with more data, so the memory controller circuit is to reconstruct the original data according to a rule, for example, where the rule is if the original data bit was a one, then the largest or highest pair is encoded (e.g., larger value of the two pairs of repeated value or the pair is in the farthest/highest position from the beginning of the data line), else, the smallest or lowest pair is encoded (e.g. the smallest byte value or the pair closest to the beginning of the data line). In certain examples, if more than two pairs exist, then the encoded pair is in the top half for a one in that bit position (e.g., 9th bit) in the original data (e.g., unmodified data) versus the encoded pair in the bottom half for zero in that bit position (e.g., 9th bit) in the original data (e.g., unmodified data).

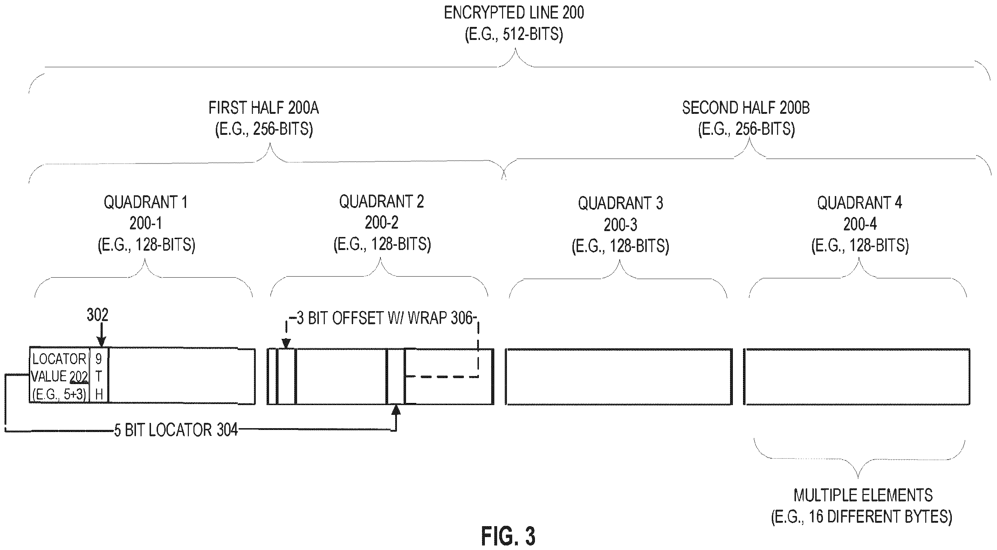

FIG. 3 illustrates the format of the data line 200 from FIG. 2 including an additional locator bit 302 conditionally used for the encoding of a repeated value according to examples of the disclosure. In certain examples, the additional locator bit 302 (e.g., the 9th bit) is adjacent to the locator value 202 (e.g., bits 1-8) of the modified data line (e.g., modified plaintext).

In certain examples, if multiple pairs of repeated values (e.g., a first pair having a repeated byte value of six and a second pair having a repeated byte value of zero in a pair), the additional locator bit 302 (e.g., ninth bit) determines which half of the data line (e.g., cache line) the encoded pair is located (e.g., otherwise assume single pair is in first half encoded with just an of locator value 202, which locate the repeated byte value, and a three-bit offset value 306 of the locator value 202, e.g., with wraparound within that quadrant to locate byte replaced by locator. This allows any one pair within any quadrant to be encoded.

In certain examples, a memory controller circuit (e.g., in an "additional locator bit" mode) determines that there are two pairs of matching values (e.g., a first pair with a first matching value and a second pair with a second matching value), so, as there are two or more pairs, it is to use the additional locator bit 302 (e.g., 9th bit). In certain examples, the reason two or more pairs are required to use the locator (e.g., 9th) bit is that the choice of which pair to encode is used to recover the data bit replaced by the ninth locator bit.

### Two (or more) pairs in first half ( no pair in second half)

In certain examples, on a memory write, if the original (e.g., ninth) data bit (e.g., in the data line at position 302) is a zero, the memory controller circuit is to encode the lowest pair (e.g., the pair at the lower relative position compared to the other pair), and if that pair is in the first half of the cache line 200A, the ninth bit 302 is set to zero, else the ninth bit 302 is set to one indicating the encoded pair is in the second half of the cache line 200B, and if the original data bit is a one, the memory controller circuit is to encode the highest pair (e.g., the pair at the higher relative position) and if that encoded pair is in the first half of the cache line 200A the ninth bit 302 is set to zero, else if the highest pair is in the second half of the cache line 200B, the ninth bit 302 is set to one. In this way, the ninth bit locates which half the encoded pair is, and the original data bit replaced by the ninth bit is determined by which pair (e.g. the higher or lower location) was encoded.

In certain examples, a decode of a modified data line (e.g., modified plaintext) using the additional locator value 302 includes the memory controller circuit determining if the modified data line includes an unencoded pair of values, (e.g. a visible pair of matching byte values within the same quadrant), and thus the memory controller circuit is to presume that the additional locator value 302 is used if so, allowing the encoded pair to be located across both halves of the cache line.

In certain examples, on decode, the additional locator value 302 being set to a zero indicates to the memory controller circuit that the pair of matching (e.g., repeated) values that is encoded by the locator value 202 is within the first half of the data line. In certain examples, the memory controller circuit determines that the pair encoded by the locator value 202 and ninth bit 302 is at a lower position versus the second (e.g., unencoded) pair, and sets the bit position formerly storing the additional locator value 302 to a zero, else sets the bit to a one, e.g., to generate the original plaintext (e.g., where the memory controller circuit is further to restore the data (e.g., byte) encoded by the locator value 202.

### Two (or more) pairs in second half ( and none in first half)

In certain examples, if the original (e.g., ninth) data bit (e.g., in the data line) is a zero, the memory controller circuit is to encode the smallest pair (e.g., the pair at the lower relative position), and if that encoded pair is located in the second half, overwrites the data bit with one, and if the original data bit is a one, the memory controller circuit is to encode the highest pair (e.g., the pair at the higher relative position), and if that encoded pair is in the second half, overwrites the data bit with a one.

In certain examples, a decode of a modified data line (e.g., modified plaintext) using the additional locator value 302 includes the memory controller circuit determining if the modified data line includes an unencoded pair of values, (e.g. a visible pair of matching byte values within the same quadrant), and thus the memory controller circuit is to presume that the additional locator value 302 is used if so, allowing the encoded pair to be located across both halves of the cache line.

In certain examples, the additional locator value 302 being set to a one indicates to the memory controller circuit that the pair of matching (e.g., repeated) values that is encoded by the locator value 202 is within the second half of the data line. In certain examples, the memory controller circuit determines that the pair encoded by the locator value 202 is at a lower position versus the second (e.g., unencoded) pair, and sets the bit 302 formerly storing the additional locator value to a zero, else sets the bit to a one, e.g., to generate the original plaintext (e.g., where the memory controller circuit is further to restore the data (e.g., byte) encoded by the locator value 202).

### Two pairs, with one pair in each half

In certain examples, if the original data bit 302 (e.g., in the data line) is a zero, the memory controller circuit is to encode the pair in the lower half (e.g., lower position) setting the ninth bit to zero, and if the original data bit is a one, the memory controller circuit is to encode the pair in the upper half (e.g., higher position), setting the ninth bit to one.

In certain examples, a decode of a modified data line (e.g., modified plaintext) using the additional locator value 302 includes the memory controller circuit determining if the modified data line includes an unencoded pair of values, e.g., and thus the memory controller circuit is to presume that the additional locator value 302 is used if so.

In certain examples, the additional locator value 302 being set to a zero indicates to the memory controller circuit that the pair of matching (e.g., repeated) values that is encoded by the locator value 202 is within the first half of the data line, and the additional locator value 302 being set to a one indicates to the memory controller circuit that the pair of matching (e.g., repeated) values that is encoded by the locator value 202 is within the second half of the data line.

In certain examples, the memory controller circuit determines that the pair encoded by the locator value 202 and additional locator (e.g., ninth) bit 302 is at lower position (e.g., lower half), and sets the bit formerly storing the additional locator value 302 to a zero, else sets the bit to a one, e.g., to generate the plaintext (e.g., where the memory controller circuit is further to restore the data (e.g., byte) encoded by the locator value 202).

In certain examples, such a formal can be extended to a data line (e.g., cache line) having three or more pairs. For example, where with more pairs, more choices can be made, e.g., if the encoded pair is in the higher half set of all pair positions, restore the additional (e.g., 9th) data bit to 1, if encoded pair in lower half set of all pair positions, restore the additional (e.g., 9th) data to 0. In certain examples, the memory controller circuit (e.g., during creation of the modified data line) can choose any pair from the higher or lower set of pair positions, e.g., where all pairs can be in the same quadrant, still half will be in higher set and half in lower set of pair positions.

In certain examples, the solution for the off-by-one problem relies on maintaining quadrants, e.g., move the quadrant with the compressed/encoded pair to the front (e.g., next to the locator which is the first byte in FIGS. 2 and 3). In this way, only the byte positions of the compressed quadrant are shifted (e.g. to the right) to make room for the locator byte at position 202. In certain examples, since with the ninth bit, the location of the encoded pair is deterministic, it is also deterministic which quadrant should be moved to the beginning of the line. For example, if quadrant 1 is where the encoded pair is located, then no quadrants need to move. For example, if quadrant 2 is where the encoded pair is located, it is swapped with quadrant I's location. For example, if quadrant 3 is where the encoded pair is located, its position is swapped with quadrant I's location. For example, if quadrant 4 is where the encode pair is located, it is swapped with quadrant I's location, assuring the locator value is always located at the beginning of the memory line (or at the same position) along with the affected quadrant. This leaves the byte positions in

In certain examples, the locator value 202 includes four bits to identify the repeated byte within a quadrant, three bits to identify the offset within the quadrant to this pair's compressed/missing byte, and 1 bit to identify which half of the data line the quadrant is located (e.g., and the optional additional locator bit (e.g., ninth bit) to identify which half if there are multiple pairs). In certain examples, where the quadrant with the encoded pair is swapped with the first quadrant position adjacent to the locator 202, the remaining quadrants maintain their positions (e.g., no bytes are shifted) and, thus, any visible pairs are valid within their respective quadrant on decode.

In certain examples, assuming all data is apparently random, if the conflict indicator in the matching pair mode (e.g., "birthday pair" mode) flow is set outside of data encryption, that will improve access control (e.g., detection of memory access using the wrong key). In certain examples, a memory lookup step can also store the correct keyID, key hash, or integrity value used to originally encrypt the stored cache line match the key currently used to access the memory line. In certain examples, if a line cannot be encoded, the data is "stamped" with this conflict indicator value. In certain examples, the indicator overwrites data, so the conflict table is used to store the original data (e.g., and in certain examples this causes a performance impact because memory is now accessed twice: once for the data line, and once to get the original data from the conflict table). Certain examples herein use the data line's (e.g., physical) address as an index into this conflict table (e.g., as an indexed array) to find the right entry. In addition to storing the data overwritten by the conflict indicator in the conflict table, certain examples also store the key ID that was used to encrypt the data (or store the key hash or an integrity hash). In certain examples that are performing these two memory operations, the values (e.g., keyID, key hash, or integrity value) can be used to check access control for the data line as well (e.g., to check if the stored key ID in the conflict table for the data line's address matches the key ID used to access the data line).

Certain examples herein (e.g., of a memory controller circuit) detect access control violations by decoding the data line and observing if the encoding rules were not followed (e.g., based on which pair was chosen to be encoded, e.g., if there were three pairs with a ninth bit algorithm on encode, either the pair in the highest or lowest position should have been encoded, but if on decode the pair in the middle position were found to be encoded, an access control violation or ciphertext corruption may be detected) or noting that the line could not be encoded in the first place, e.g., thus using a memory lookup anyway, which can also perform an access control check.

In certain examples, a data line is all zeros, and a memory controller circuit in matching encodings for an all zero line as every byte can be paired as they are all the same value (0) as well as a 100% encoding rate (and there is always a pair to encode). Randomly picking which byte pair to encode results in the different ciphertext for the same plaintext (all zeros). In certain examples, with a ninth bit algorithm, it is possible to pick from the half of pair locations corresponding to the encoding of the ninth bit, again allowing for 255 possible encodings for an all zero line resulting in 255 different possible ciphertexts. Note also, if the encrypted zero line were corrupted or read using the wrong key, it would decrypt to the random case where the access control check can be applied in certain examples. In certain examples, there is a threshold on the number of pairs (e.g., three pairs) to determine when to use access control (e.g., where it only applies to random or corrupted data, e.g., as decrypted data revealing many matching pairs is unlikely to be corrupt).

In certain examples, a modified data line (e.g., modified cache line) including a locator value is then to be encrypted, e.g., according to a key as discussed herein, and then the encrypted version of the modified data line is stored. In certain examples, an encrypted version of the modified data line is decrypted, and then the modified data line is returned by a memory controller circuit in matching pair mode (e.g., "birthday pair" mode) back to the original data line (e.g., plaintext), e.g., according to the examples (e.g., sub modes) discussed herein.

In certain examples, the modified data line (e.g., the entire data line) is encrypted by a block cipher (for example, a symmetric-key tweakable block cipher, e.g., the Threefish cipher). In certain examples, the memory address may also be used as a tweak. In certain examples, a block cipher will diffuse the change due to the alternate pair encoding across the entire memory line, and the result is completely different ciphertext for any change in the pair encoded. In certain examples, a CBC mode fully diffuses the encoding across the whole memory line. CBC mode may also include the memory line address to further localize the ciphertext. In some examples, additional bits beyond the ninth bit can be similarly encoded, e.g., when a cache line is 128 bytes long, a tenth bit may be used to determine which side of the line the encoded pair is located when 4 or more pairs are available to reconstitute the original ninth and tenth data bit values, and so on.

### Rules for data integrity:

With multiple pairs there can be rules that also function as access control and/or integrity without requiring any additional encoding, e.g., if the rule is the highest value pair is the one encoded, then on an invalid read (e.g., using wrong key or reading a corrupted written line from memory), if the encoded byte value is lower than another encodable pair it is in violation of the rule and detected as a violation of access control and/or integrity. In certain examples of a ninth bit algorithm, if there are three pairs on encode, the rule is either the highest or lowest pair position is encoded. This means on a decode, if the middle pair position was found to be encoded, an access control violation or data corruption is detected. In certain examples, when many pairs are detected on decode, the data is assumed to be legitimate as incorrectly decrypted ciphertext should result in random decrypted data with minimal matching pairs.

To cover the entire 64-byte cacheline, embodiments may also use a nine-bit locator, displacing 9-bits of repeated data. Byte alignment may still be preserved where the first 6 bits of the nine-bit locator locate the byte-aligned repeating 9-bit value within the 64-byte cacheline, and the remaining 3-bits of the nine-bit locator identify the byte-aligned location within the same quadrant (with wrap-around) of the repeated 9-bit value to be replaced by the nine-bit locator. The locator may then be located at the beginning (or in embodiments, the end) of the cacheline, concatenating (shifting) all the remaining bits together to fill the hole left by the repeating 9-bit value that was removed to make room for the nine-bit locator. For the special case of adjacencies, where the last bit of the first byte aligned 9-bit value overlaps with the first bit for the repeated byte aligned 9-bit value, the second 9-bit value is assumed to not be byte aligned but shifted one bit over so as not to overlap with the last bit of the first repeating 9-bit value. Similarly, if the 6-bits of the locator identify the last byte location within a quadrant as the location of the first repeated 9-bit value, the last bit of the repeated 9-bit value may be assumed to wrap-around to the beginning of the quadrant it is within. In this way, an encoding rate of of ~60%% can be achieved for even random data based on the birthday bounds probability of a 9-bit value collision within a quadrant (~20%), for all four quadrants, while maintaining byte alignments typical for computer data. Similar embodiments exist for ten-bit locators, 11-bit locators and so on, allowing for encodings covering larger sized cachelines.

### Key Refresh:

In certain examples, the matching pair mode (e.g., "birthday pair" mode) is used with a key refresh, e.g., where periodically the memory encryption key is changed. In certain examples, because the matching pair mode (e.g., "birthday pair" mode) can produce numerous (e.g., 100s) of alternate ciphertexts for the same plaintext, it fills the gap between periodic key refreshes. In certain examples, when the encryption key changes, entirely new ciphertexts are produced even for the exact same plaintexts.

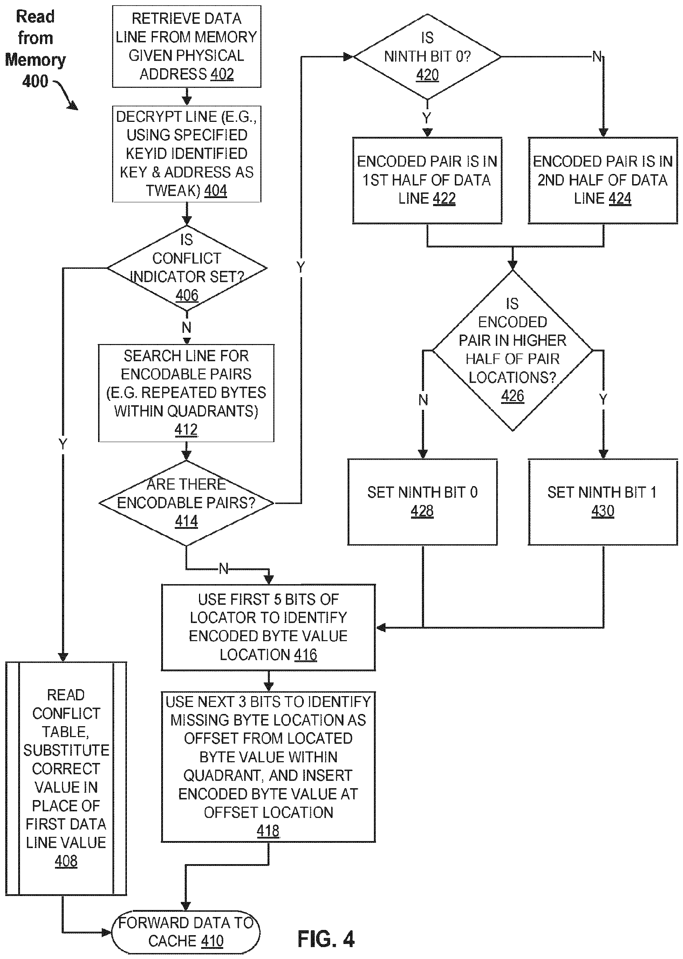

FIG. 4 illustrates an example of operations 400 for a method of performing a read from memory with repeated value encoding according to examples of the disclosure. Some or all of the operations 400 (or other processes described herein, or variations, and/or combinations thereof) are performed under the control of one or more computer systems configured with executable instructions and are implemented as code (e.g., executable instructions, one or more computer programs, or one or more applications) executing collectively on one or more processors, by hardware or combinations thereof. The code is stored on a computer-readable storage medium, for example, in the form of a computer program comprising instructions executable by one or more processors. The computer-readable storage medium is non-transitory. In some examples, one or more (or all) of the operations 400 are performed by a component(s) of the other figures (e.g., memory controller circuit 116).

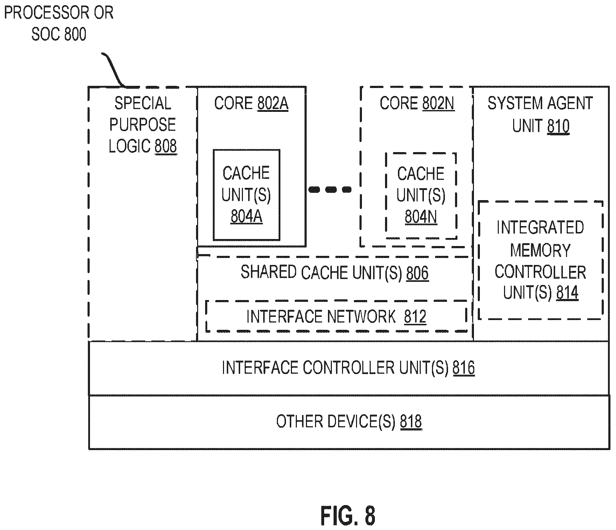

The operations 400 include, at block 402, retrieving a data line from memory given a particular (e.g., physical) address. The operations 400 further include, at block 404, decrypting the data line (e.g., using a specified keyID, identified key, and/or tweak). The operations 400 further include, at block 406, checking if a portion of the data line is a conflict indicator value (e.g., lookup indicator (IL)), and if yes, proceeding to block 408, and if no, proceeding to block 412. Some examples place the conflict indicator test 406 before decryption of the line 404. The operations 400 further include, at block 408, reading the conflict resolution data structure, e.g. by using the data line's address as an index into an array structure, to determine the corresponding (e.g., original) value, and substituting that correct value in place of the conflict indicator value reproducing the original data line. The operations 400 further include, at block 410, forwarding the data to a cache (e.g., cache 112 in FIG. 1 or a one or more caches in the other figures, e.g., in FIG. 8). The operations 400 further include, at block 412, searching the decrypted data line for encodable pairs (for example, repeated values (e.g., repeated byte values), e.g., repeated within a single quadrant). The operations 400 further include, at block 414, checking if there are one or more encodable pairs (e.g., one or more than one set of repeated values within quadrants), and if yes, proceeding to block 420, and if no (there are no encodable pairs), proceeding to block 416, e.g., remembering that the encoded pair is in the first half of the data line. The operations 400 further include, at block 416, knowing which half of the cache line contains the encoded pair, using a first portion of the locator value within the data line (e.g., 5 bit locator value 304 of locator value 202 in data line 200 in FIG. 3) to identify the encoded (e.g., byte) value location (e.g., the location of the repeated value in the data line whose value is to be copied/inserted to re-fill the deleted instance of that value). The operations 400 further include, at block 418, using a second portion of the locator value within the data line (e.g., 3 bit locator value 306 of locator value 202 in data line 200 in FIG. 3) to identify the location of the missing (e.g., byte) value (e.g., the location where the repeated value in the data line is to be copied/inserted into to re-fill the deleted instance of that value within a quadrant to restore the original data line to be forwarded to cache at 410). The operations 400 further include, at block 420, checking if the additional locator value (e.g., additional locator value 302 (e.g., 9th bit) in FIG. 3) is a zero, and if yes, proceeding to block 422, and if no, proceeding to block 424. The operations 400 further include, at block 422, if the additional locator value is zero, determining that the encoded pair is in the first half of the data line 200A. The operations 400 further include, at block 424, if the additional locator value is zero, determining that the encoded pair is in the second half of the data line 200B. The operations 400 further include, at block 426, checking if the encoded pair (e.g., encoded position determined by the locator value and ninth bit) is in the higher half of all pair positions (e.g., the highest position) in the data line, and if no (the encoded pair is not the highest or in the higher half of pair positions as compared to all the other encodable pairs discovered at step 412), proceeding to block 428, and if yes, proceeding to block 430. Examples enforcing access control may further check if there are two encodable pairs that the position of the third encodable pair is in the middle position, neither the highest nor the lowest position, triggering an access control violation error by e.g. poisoning the cache line. The operations 400 further include, at block 428, if the check at 426 is no, setting then, remembering which half of the data line contained the encoded pair (422 or 424), sending that modified data line to block 416. The operations 400 further include, at block 430, if the check at 426 is yes, setting the additional locator bit position 302 to one, (e.g. restoring the original data value to one), and then, remembering which half the data line contained the encode pair (422 or 424), sending that modified data line to block 416.

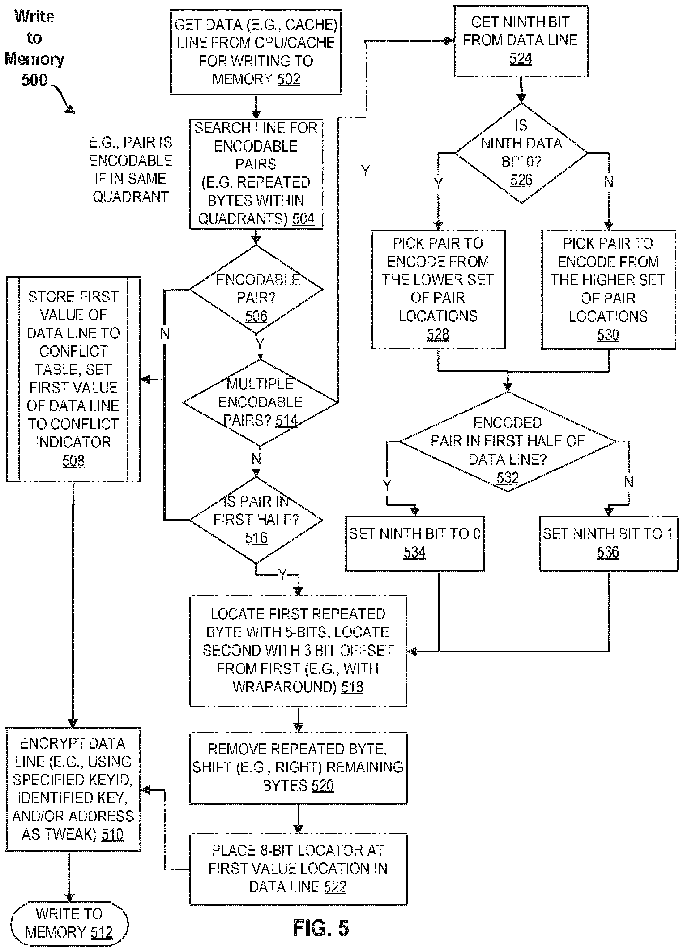

FIG. 5 illustrates an example of operations 500 for a method of performing a write to memory with repeated value encoding according to examples of the disclosure. Some or all of the operations 500 (or other processes described herein, or variations, and/or combinations thereof) are performed under the control of one or more computer systems configured with executable instructions and are implemented as code (e.g., executable instructions, one or more computer programs, or one or more applications) executing collectively on one or more processors, by hardware or combinations thereof. The code is stored on a computer-readable storage medium, for example, in the form of a computer program comprising instructions executable by one or more processors. The computer-readable storage medium is non-transitory. In some examples, one or more (or all) of the operations 500 are performed by a component(s) of the other figures (e.g., memory controller circuit 116).

The operations 500 include, at block 502, receiving a data line (e.g., from a processor or processor cache) for writing to memory. The operations 500 further include, at block 504, searching the data line for encodable pairs (for example, repeated values (e.g., repeated byte), e.g., repeated within a single quadrant, for all quadrants). The operations 500 further include, at block 506, checking if there is at least one encodable pair (e.g., one set of repeated values within a quadrant), and if yes, proceeding to block 514, and ifno, proceeding to block 508. The operations 500 further include, at block 508, storing an original value of the data line (e.g., value at the same location and same width as a locator value) into a data structure (e.g., conflict table indexed by the memory line address) (e.g., data structure 126 in FIG. 1), and replacing the original value in the data line with a locator value that identifies there was a conflict with the encoding scheme and the data could not be encoded because there were no matching pairs. The operations 500 further include, at block 510, encrypting the modified data line (e.g., using a specified keyID, identified key, and/or tweak (e.g., physical address of the data line as the tweak)). Some examples alternatively set the conflict indicator after encrypting the data line and storing the encrypted portion after 510 corresponding to the locator value position and size in the conflict table such that the conflict table need not be additionally encrypted and improving access control. The at the address. The operations 500 further include, at block 514, checking if there are multiple encodable pairs (e.g., multiple respective sets of repeated values within one or more quadrants), and if yes, proceeding to block 524, and if no, proceeding to block 516 in the case there is only one encodable pair. The operations 500 further include, at block 516, checking if there is a pair in a first half of the data line, and if so, proceeding to block 518, and if no, proceeding to block 508 as there is no encoding for only one pair that is in the second half of the data line. The operations 500 further include, at block 518, knowing what half the encodable pair is in, locating a first instance of the repeated value of the encodable pair within the half (e.g., of the repeated values) and generating a first portion of a locator value (e.g., 5 bit locator value 304 of locator value 202 in data line 200 in FIG. 3) to identify the repeated (e.g., byte) value location (e.g., the location of the repeated value in the data line), and locating a second instance of the repeated value of the encodable pair within the same quadrant (e.g., of the repeated value within a quadrant) and generating a second portion of the locator value within the data line (e.g., 3 bit locator value 306 of locator value 202 in data line 200 in FIG. 3) to identify the location of the to-be-deleted (e.g., byte) value (and in certain examples, swapping the quadrant with the encoded pair with the first quadrant 200-1). The operations 500 further include, at block 520, shifting (e.g., right shifting) the leftmost bits to remove the second instance of the repeated value of the encodable pair, e.g., thus deleting the second instance of the repeated value of the encodable pair to make room for the locator value in the data line (or quadrant with the encoded pair in it). The operations 500 further include, at block 522, inserting (e.g., concatenating) the locator value (e.g., 8 bits wide) into the space created by the shift at block 520, e.g., to generate a modified data line including the locator value (e.g., where the modified data line is the same width as the data line (e.g., 512-bits) retrieved at block 502). Examples may further swap the quadrant with the encoded pair with the first quadrant to the byte shifting to just the affected quadrant. The operations 500 further include, at block 524, reading the data bit value (e.g., the 9th bit) in the data line that is to be used for an additional locator bit (e.g., additional locator value 302 (e.g., 9th bit) in FIG. 3). The operations 500 further include, at block 526, checking if that data bit is a zero, and if yes, proceeding to block 528, and if no, proceeding to block 530. The operations 500 further include, at block 528, if the check at 526 is yes, picking a pair to encode from the lower set (e.g., lowest set) of the encodable pair locations. The operations 500 further include, at block 530, if the check at 526 is no, picking a pair to encode (e.g. at random) from the higher set (e.g., highest set) of the encodable pair locations. In certain examples, a list of encodable pairs (e.g., where each pair is within a same quadrant) is generated at block 504, and this list is then sorted based on the positions of the pairs. In certain examples, this sorted list is divided into half, with the lower positions (e.g., closer to the of the cache line 200. In certain examples, a (e.g., 512b) data line has 64 elements indexed 1 to 64 and the list generated at block 504 indicates a first pair of matching values at indices 3 and 6 [3,6] and a second pair of matching values at indices 4 and 11 [4,11], and thus the first index from both of the pairs is used to sort the list {3, 4}. In certain examples, the pair picked to encode from a set of encodable pairs is varied for a same plaintext, e.g., to generate different cyphertext for multiple encodings of a same plaintext. As another example, for a "ninth bit" algorithm, the memory controller circuit is to encode what the original data bit the ninth bit is replacing, so it would encode the lowest set (e.g., the pair starting at index 3 in the example above) if the data bit is 0, and the highest set (e.g., the pair starting at index 4 in the example above) if the data bit is 1. Examples that wish to perform access control may additionally check if there are three encodable pairs and, as a rule, only encode either the highest or lowest pair position depending on the value of the ninth data bit. The operations 500 further include, at block 532, checking if the encoded pair is in the first half (e.g., 200A) or second half (e.g., 200B) of the data line, and if yes, it is in the first half, proceeding to block 534, and if no, proceeding to block 536. The operations 500 further include, at block 534, if the check at 532 is yes, setting the additional locator bit position (e.g., 9th bit) to zero, e.g. indicating the encoded pair is in the first half 200A, and then sending that modified data line to block 518 remembering in which half it is located. The operations 500 further include, at block 536, if the check at 532 is no, setting the additional locator bit (e.g., 9th bit) to one, e.g. indicating the encoded pair is in the second half 200B, and then sending that modified data line to block 518.

In certain examples, there are triplets of the same value (e.g. 3 elements (e.g., bytes) with the same value within a quadrant), and those triplets are encoded as multiple pairs, e.g. the first value and the middle value produces one locator value, and the middle value and the last value produce a different locator value becoming alternate pairs. In certain examples, the first value and the last value can be a third pair.

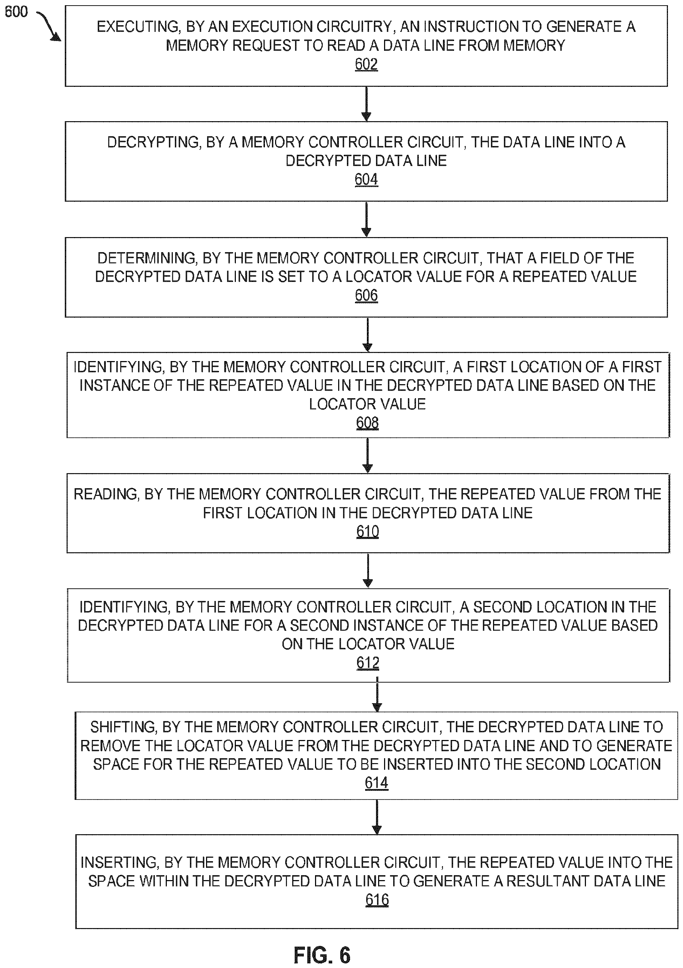

FIG. 6 illustrates another example of operations 600 for a method of performing a read from memory with repeated value encoding according to examples of the disclosure. Some or all of the operations 600 (or other processes described herein, or variations, and/or combinations thereof) are performed under the control of one or more computer systems configured with executable instructions and are implemented as code (e.g., executable instructions, one or more computer programs, or one or more applications) executing collectively on one or more processors, by hardware or combinations thereof. The code is stored on a computer-readable executable by one or more processors. The computer-readable storage medium is non-transitory. In some examples, one or more (or all) of the operations 600 are performed by a component(s) of the other figures (e.g., memory controller circuit 116).

The operations 600 include, at block 602, executing, by an execution circuitry, an instruction to generate a memory request to read a data line from memory. The operations 600 further include, at block 604, decrypting, by a memory controller circuit, the data line into a decrypted data line. The operations 600 further include, at block 606, determining, by the memory controller circuit, that a field of the decrypted data line is set to a locator value for a repeated value. The operations 600 further include, at block 608, identifying, by the memory controller circuit, a first location of a first instance of the repeated value in the decrypted data line based on the locator value. The operations 600 further include, at block 610, reading, by the memory controller circuit, the repeated value from the first location in the decrypted data line. The operations 600 further include, at block 612, identifying, by the memory controller circuit, a second location in the decrypted data line for a second instance of the repeated value based on the locator value. The operations 600 further include, at block 614, shifting, by the memory controller circuit, the decrypted data line to remove the locator value from the decrypted data line and to generate space for the repeated value to be inserted into the second location. The operations 600 further include, at block 616, inserting, by the memory controller circuit, the repeated value into the space within the decrypted data line to generate a resultant data line.

Some examples utilize instruction formats described herein. Some examples are implemented in one or more computer architectures, cores, accelerators, etc. Some examples are generated or are IP cores. Some examples utilize emulation and/or translation.

At least some examples of the disclosed technologies can be described in view of the following examples.

In one set of examples, an apparatus (e.g., a hardware processor) includes an execution circuitry to execute an instruction to generate a memory request to read a data line from memory; and a memory controller circuit to decrypt the data line into a decrypted data line, determine that a field of the decrypted data line is set to a locator value for a repeated value, identify a first location of a first instance of the repeated value in the decrypted data line based on the locator value, read the repeated value from the first location in the decrypted data line, identify a second value, shift the decrypted data line to remove the locator value from the decrypted data line and to generate space for the repeated value to be inserted into the second location, and insert the repeated value into the space within the decrypted data line to generate a resultant data line. In certain examples, the memory controller circuit is to shift bits in the decrypted data line to the left of the second location by a width of the repeated value to remove the locator value and generate the space for the repeated value to be inserted into the second location, and not shift bits in the decrypted data line to the right of the second location. In certain examples, the memory controller circuit is to determine that the field of the decrypted data line is not set to a conflict indicator value, and perform the identify the first location, the read, the identify the second location, the shift, and the insert in response to the determination that the field of the decrypted data line is not set to the conflict indicator value. In certain examples, the locator value comprises a first value to indicate the first location of the first instance of the repeated value within a first proper subset of the decrypted data line, and a second value to indicate an offset within a second proper subset of the decrypted data line. In certain examples, the memory controller circuit is further to check another locator bit of the decrypted data line, wherein the bit being set to a first value indicates to the memory controller circuit that the first location and the second location of the repeated value are in a first half of the decrypted data line, and the bit being set to a second value indicates to the memory controller circuit that the first location and the second location of the repeated value are in a second half of the decrypted data line. In certain examples, the memory controller circuit is further to receive a second data line for writing to the memory; search the second data line for a repeated value; determine that the repeated value in the second data line is identifiable using a second locator value for a repeated value in the second data line; in response to the determination, generate the second locator value for the repeated value in the second data line, remove a second instance of the repeated value from the second data line, and insert the second locator value into the second data line; encrypt the second data line that includes the second locator value into an encrypted data line; and cause a write of the encrypted data line to the memory. In certain examples, the memory controller circuit is further to, before the encrypt, set another locator bit of the second data line to a first value in response to a first instance and a second instance of the repeated value in the second data line being in a first half of the second data line, and to a second value in response to the first instance and the second instance of the repeated value in the second data line being in a second half of the second data line.

In another set of examples, a method includes executing, by an execution circuitry, an instruction to generate a memory request to read a data line from memory; decrypting, by a memory controller circuit, the data line into a decrypted data line; determining, by the memory value; identifying, by the memory controller circuit, a first location of a first instance of the repeated value in the decrypted data line based on the locator value; reading, by the memory controller circuit, the repeated value from the first location in the decrypted data line; identifying, by the memory controller circuit, a second location in the decrypted data line for a second instance of the repeated value based on the locator value; shifting, by the memory controller circuit, the decrypted data line to remove the locator value from the decrypted data line and to generate space for the repeated value to be inserted into the second location; and inserting, by the memory controller circuit, the repeated value into the space within the decrypted data line to generate a resultant data line. In certain examples, the shifting comprising shifting bits in the decrypted data line to the left of the second location by a width of the repeated value to remove the locator value and generate the space for the repeated value to be inserted into the second location, and not shifting bits in the decrypted data line to the right of the second location. In certain examples, the method includes determining, by the memory controller circuit, that the field of the decrypted data line is not set to a conflict indicator value, and performing the identify the first location, the read, the identify the second location, the shift, and the insert in response to the determining that the field of the decrypted data line is not set to the conflict indicator value. In certain examples, the locator value comprises a first value to indicate the first location of the first instance of the repeated value within a first proper subset of the decrypted data line, and a second value to indicate an offset within a second proper subset of the decrypted data line. In certain examples, the method includes checking, by the memory controller circuit, another locator bit of the decrypted data line, wherein the bit being set to a first value indicates to the memory controller circuit that the first location and the second location of the repeated value are in a first half of the decrypted data line, and the bit being set to a second value indicates to the memory controller circuit that the first location and the second location of the repeated value are in a second half of the decrypted data line. In certain examples, the method includes receiving, by the memory controller circuit, a second data line for writing to the memory; search the second data line for a repeated value; determining, by the memory controller circuit, that the repeated value in the second data line is identifiable using a second locator value for a repeated value in the second data line; in response to the determining, generating, by the memory controller circuit, the second locator value for the repeated value in the second data line, remove a second instance of the repeated value from the second data line, and insert the second locator value into the second data line; encrypting, by the memory controller circuit, the second data line that includes the second locator value into an encrypted data line; and causing, by the memory controller circuit, a write of the encrypted data line to the memory. In certain examples, the method includes, before the encrypting, setting, by to a first instance and a second instance of the repeated value in the second data line being in a first half of the second data line, and to a second value in response to the first instance and the second instance of the repeated value in the second data line being in a second half of the second data line.

In yet another set of examples, a system includes a memory; an execution circuitry to execute an instruction to generate a memory request to read a data line from the memory; and a memory controller circuit to decrypt the data line into a decrypted data line, determine that a field of the decrypted data line is set to a locator value for a repeated value, identify a first location of a first instance of the repeated value in the decrypted data line based on the locator value, read the repeated value from the first location in the decrypted data line, identify a second location in the decrypted data line for a second instance of the repeated value based on the locator value, shift the decrypted data line to remove the locator value from the decrypted data line and to generate space for the repeated value to be inserted into the second location, and insert the repeated value into the space within the decrypted data line to generate a resultant data line. 16. The system of claim 15, wherein the memory controller circuit is to shift bits in the decrypted data line to the left of the second location by a width of the repeated value to remove the locator value and generate the space for the repeated value to be inserted into the second location, and not shift bits in the decrypted data line to the right of the second location. In certain examples, the memory controller circuit is to determine that the field of the decrypted data line is not set to a conflict indicator value, and perform the identify the first location, the read, the identify the second location, the shift, and the insert in response to the determination that the field of the decrypted data line is not set to the conflict indicator value. In certain examples, the locator value comprises a first value to indicate the first location of the first instance of the repeated value within a first proper subset of the decrypted data line, and a second value to indicate an offset within a second proper subset of the decrypted data line. In certain examples, the memory controller circuit is further to check another locator bit of the decrypted data line, wherein the bit being set to a first value indicates to the memory controller circuit that the first location and the second location of the repeated value are in a first half of the decrypted data line, and the bit being set to a second value indicates to the memory controller circuit that the first location and the second location of the repeated value are in a second half of the decrypted data line. In certain examples, the memory controller circuit is further to receive a second data line for writing to the memory; search the second data line for a repeated value; determine that the repeated value in the second data line is identifiable using a second locator value for a repeated value in the second data line; in response to the determination, generate the second locator value for the repeated value in the second data line, remove a second the second data line; encrypt the second data line that includes the second locator value into an encrypted data line; and cause a write of the encrypted data line to the memory. In certain examples, the memory controller circuit is further to, before the encrypt, set another locator bit of the second data line to a first value in response to a first instance and a second instance of the repeated value in the second data line being in a first half of the second data line, and to a second value in response to the first instance and the second instance of the repeated value in the second data line being in a second half of the second data line.

FIG. 5 illustrates an example of operations 500 for a method of performing a write to memory with repeated value encoding according to examples of the disclosure. Some or all of the operations 500 (or other processes described herein, or variations, and/or combinations thereof) are performed under the control of one or more computer systems configured with executable instructions and are implemented as code (e.g., executable instructions, one or more computer programs, or one or more applications) executing collectively on one or more processors, by hardware or combinations thereof. The code is stored on a computer-readable storage medium, for example, in the form of a computer program comprising instructions executable by one or more processors. The computer-readable storage medium is non-transitory. In some examples, one or more (or all) of the operations 500 are performed by a component(s) of the other figures (e.g., memory controller circuit 116).

The operations 500 include, at block 502, receiving a data line (e.g., from a processor or processor cache) for writing to memory. The operations 500 further include, at block 504, searching the data line for encodable pairs (for example, repeated values (e.g., repeated byte), e.g., repeated within a single quadrant, for all quadrants). The operations 500 further include, at block 506, checking if there is at least one encodable pair (e.g., one set of repeated values within a quadrant), and if yes, proceeding to block 514, and ifno, proceeding to block 508. The operations 500 further include, at block 508, storing an original value of the data line (e.g., value at the same location and same width as a locator value) into a data structure (e.g., conflict table indexed by the memory line address) (e.g., data structure 126 in FIG. 1), and replacing the original value in the data line with a locator value that identifies there was a conflict with the encoding scheme and the data could not be encoded because there were no matching pairs. The operations 500 further include, at block 510, encrypting the modified data line (e.g., using a specified keyID, identified key, and/or tweak (e.g., physical address of the data line as the tweak)). Some examples alternatively set the conflict indicator after encrypting the data line and storing the encrypted portion after 510 corresponding to the locator value position and size in the conflict table such that the conflict table need not be additionally encrypted and improving access control. The at the address. The operations 500 further include, at block 514, checking if there are multiple encodable pairs (e.g., multiple respective sets of repeated values within one or more quadrants), and if yes, proceeding to block 524, and if no, proceeding to block 516 in the case there is only one encodable pair. The operations 500 further include, at block 516, checking if there is a pair in a first half of the data line, and if so, proceeding to block 518, and if no, proceeding to block 508 as there is no encoding for only one pair that is in the second half of the data line. The operations 500 further include, at block 518, knowing what half the encodable pair is in, locating a first instance of the repeated value of the encodable pair within the half (e.g., of the repeated values) and generating a first portion of a locator value (e.g., 5 bit locator value 304 of locator value 202 in data line 200 in FIG. 3) to identify the repeated (e.g., byte) value location (e.g., the location of the repeated value in the data line), and locating a second instance of the repeated value of the encodable pair within the same quadrant (e.g., of the repeated value within a quadrant) and generating a second portion of the locator value within the data line (e.g., 3 bit locator value 306 of locator value 202 in data line 200 in FIG. 3) to identify the location of the to-be-deleted (e.g., byte) value (and in certain examples, swapping the quadrant with the encoded pair with the first quadrant 200-1). The operations 500 further include, at block 520, shifting (e.g., right shifting) the leftmost bits to remove the second instance of the repeated value of the encodable pair, e.g., thus deleting the second instance of the repeated value of the encodable pair to make room for the locator value in the data line (or quadrant with the encoded pair in it). The operations 500 further include, at block 522, inserting (e.g., concatenating) the locator value (e.g., 8 bits wide) into the space created by the shift at block 520, e.g., to generate a modified data line including the locator value (e.g., where the modified data line is the same width as the data line (e.g., 512-bits) retrieved at block 502). Examples may further swap the quadrant with the encoded pair with the first quadrant to the byte shifting to just the affected quadrant. The operations 500 further include, at block 524, reading the data bit value (e.g., the 9th bit) in the data line that is to be used for an additional locator bit (e.g., additional locator value 302 (e.g., 9th bit) in FIG. 3). The operations 500 further include, at block 526, checking if that data bit is a zero, and if yes, proceeding to block 528, and if no, proceeding to block 530. The operations 500 further include, at block 528, if the check at 526 is yes, picking a pair to encode from the lower set (e.g., lowest set) of the encodable pair locations. The operations 500 further include, at block 530, if the check at 526 is no, picking a pair to encode (e.g. at random) from the higher set (e.g., highest set) of the encodable pair locations. In certain examples, a list of encodable pairs (e.g., where each pair is within a same quadrant) is generated at block 504, and this list is then sorted based on the positions of the pairs. In certain examples, this sorted list is divided into half, with the lower positions (e.g., closer to the of the cache line 200. In certain examples, a (e.g., 512b) data line has 64 elements indexed 1 to 64 and the list generated at block 504 indicates a first pair of matching values at indices 3 and 6 [3,6] and a second pair of matching values at indices 4 and 11 [4,11], and thus the first index from both of the pairs is used to sort the list {3, 4}. In certain examples, the pair picked to encode from a set of encodable pairs is varied for a same plaintext, e.g., to generate different cyphertext for multiple encodings of a same plaintext. As another example, for a "ninth bit" algorithm, the memory controller circuit is to encode what the original data bit the ninth bit is replacing, so it would encode the lowest set (e.g., the pair starting at index 3 in the example above) if the data bit is 0, and the highest set (e.g., the pair starting at index 4 in the example above) if the data bit is 1. Examples that wish to perform access control may additionally check if there are three encodable pairs and, as a rule, only encode either the highest or lowest pair position depending on the value of the ninth data bit. The operations 500 further include, at block 532, checking if the encoded pair is in the first half (e.g., 200A) or second half (e.g., 200B) of the data line, and if yes, it is in the first half, proceeding to block 534, and if no, proceeding to block 536. The operations 500 further include, at block 534, if the check at 532 is yes, setting the additional locator bit position (e.g., 9th bit) to zero, e.g. indicating the encoded pair is in the first half 200A, and then sending that modified data line to block 518 remembering in which half it is located. The operations 500 further include, at block 536, if the check at 532 is no, setting the additional locator bit (e.g., 9th bit) to one, e.g. indicating the encoded pair is in the second half 200B, and then sending that modified data line to block 518.

In certain examples, there are triplets of the same value (e.g. 3 elements (e.g., bytes) with the same value within a quadrant), and those triplets are encoded as multiple pairs, e.g. the first value and the middle value produces one locator value, and the middle value and the last value produce a different locator value becoming alternate pairs. In certain examples, the first value and the last value can be a third pair.

FIG. 6 illustrates another example of operations 600 for a method of performing a read from memory with repeated value encoding according to examples of the disclosure. Some or all of the operations 600 (or other processes described herein, or variations, and/or combinations thereof) are performed under the control of one or more computer systems configured with executable instructions and are implemented as code (e.g., executable instructions, one or more computer programs, or one or more applications) executing collectively on one or more processors, by hardware or combinations thereof. The code is stored on a computer-readable executable by one or more processors. The computer-readable storage medium is non-transitory. In some examples, one or more (or all) of the operations 600 are performed by a component(s) of the other figures (e.g., memory controller circuit 116).

The operations 600 include, at block 602, executing, by an execution circuitry, an instruction to generate a memory request to read a data line from memory. The operations 600 further include, at block 604, decrypting, by a memory controller circuit, the data line into a decrypted data line. The operations 600 further include, at block 606, determining, by the memory controller circuit, that a field of the decrypted data line is set to a locator value for a repeated value. The operations 600 further include, at block 608, identifying, by the memory controller circuit, a first location of a first instance of the repeated value in the decrypted data line based on the locator value. The operations 600 further include, at block 610, reading, by the memory controller circuit, the repeated value from the first location in the decrypted data line. The operations 600 further include, at block 612, identifying, by the memory controller circuit, a second location in the decrypted data line for a second instance of the repeated value based on the locator value. The operations 600 further include, at block 614, shifting, by the memory controller circuit, the decrypted data line to remove the locator value from the decrypted data line and to generate space for the repeated value to be inserted into the second location. The operations 600 further include, at block 616, inserting, by the memory controller circuit, the repeated value into the space within the decrypted data line to generate a resultant data line.

Some examples utilize instruction formats described herein. Some examples are implemented in one or more computer architectures, cores, accelerators, etc. Some examples are generated or are IP cores. Some examples utilize emulation and/or translation.

FIG. 5 illustrates an example of operations 500 for a method of performing a write to memory with repeated value encoding according to examples of the disclosure. Some or all of the operations 500 (or other processes described herein, or variations, and/or combinations thereof) are performed under the control of one or more computer systems configured with executable instructions and are implemented as code (e.g., executable instructions, one or more computer programs, or one or more applications) executing collectively on one or more processors, by hardware or combinations thereof. The code is stored on a computer-readable storage medium, for example, in the form of a computer program comprising instructions executable by one or more processors. The computer-readable storage medium is non-transitory. In some examples, one or more (or all) of the operations 500 are performed by a component(s) of the other figures (e.g., memory controller circuit 116).

The operations 500 include, at block 502, receiving a data line (e.g., from a processor or processor cache) for writing to memory. The operations 500 further include, at block 504, searching the data line for encodable pairs (for example, repeated values (e.g., repeated byte), e.g., repeated within a single quadrant, for all quadrants). The operations 500 further include, at block 506, checking if there is at least one encodable pair (e.g., one set of repeated values within a quadrant), and if yes, proceeding to block 514, and ifno, proceeding to block 508. The operations 500 further include, at block 508, storing an original value of the data line (e.g., value at the same location and same width as a locator value) into a data structure (e.g., conflict table indexed by the memory line address) (e.g., data structure 126 in FIG. 1), and replacing the original value in the data line with a locator value that identifies there was a conflict with the encoding scheme and the data could not be encoded because there were no matching pairs. The operations 500 further include, at block 510, encrypting the modified data line (e.g., using a specified keyID, identified key, and/or tweak (e.g., physical address of the data line as the tweak)). Some examples alternatively set the conflict indicator after encrypting the data line and storing the encrypted portion after 510 corresponding to the locator value position and size in the conflict table such that the conflict table need not be additionally encrypted and improving access control. The at the address. The operations 500 further include, at block 514, checking if there are multiple encodable pairs (e.g., multiple respective sets of repeated values within one or more quadrants), and if yes, proceeding to block 524, and if no, proceeding to block 516 in the case there is only one encodable pair. The operations 500 further include, at block 516, checking if there is a pair in a first half of the data line, and if so, proceeding to block 518, and if no, proceeding to block 508 as there is no encoding for only one pair that is in the second half of the data line. The operations 500 further include, at block 518, knowing what half the encodable pair is in, locating a first instance of the repeated value of the encodable pair within the half (e.g., of the repeated values) and generating a first portion of a locator value (e.g., 5 bit locator value 304 of locator value 202 in data line 200 in FIG. 3) to identify the repeated (e.g., byte) value location (e.g., the location of the repeated value in the data line), and locating a second instance of the repeated value of the encodable pair within the same quadrant (e.g., of the repeated value within a quadrant) and generating a second portion of the locator value within the data line (e.g., 3 bit locator value 306 of locator value 202 in data line 200 in FIG. 3) to identify the location of the to-be-deleted (e.g., byte) value (and in certain examples, swapping the quadrant with the encoded pair with the first quadrant 200-1). The operations 500 further include, at block 520, shifting (e.g., right shifting) the leftmost bits to remove the second instance of the repeated value of the encodable pair, e.g., thus deleting the second instance of the repeated value of the encodable pair to make room for the locator value in the data line (or quadrant with the encoded pair in it). The operations 500 further include, at block 522, inserting (e.g., concatenating) the locator value (e.g., 8 bits wide) into the space created by the shift at block 520, e.g., to generate a modified data line including the locator value (e.g., where the modified data line is the same width as the data line (e.g., 512-bits) retrieved at block 502). Examples may further swap the quadrant with the encoded pair with the first quadrant to the byte shifting to just the affected quadrant. The operations 500 further include, at block 524, reading the data bit value (e.g., the 9th bit) in the data line that is to be used for an additional locator bit (e.g., additional locator value 302 (e.g., 9th bit) in FIG. 3). The operations 500 further include, at block 526, checking if that data bit is a zero, and if yes, proceeding to block 528, and if no, proceeding to block 530. The operations 500 further include, at block 528, if the check at 526 is yes, picking a pair to encode from the lower set (e.g., lowest set) of the encodable pair locations. The operations 500 further include, at block 530, if the check at 526 is no, picking a pair to encode (e.g. at random) from the higher set (e.g., highest set) of the encodable pair locations. In certain examples, a list of encodable pairs (e.g., where each pair is within a same quadrant) is generated at block 504, and this list is then sorted based on the positions of the pairs. In certain examples, this sorted list is divided into half, with the lower positions (e.g., closer to the of the cache line 200. In certain examples, a (e.g., 512b) data line has 64 elements indexed 1 to 64 and the list generated at block 504 indicates a first pair of matching values at indices 3 and 6 [3,6] and a second pair of matching values at indices 4 and 11 [4,11], and thus the first index from both of the pairs is used to sort the list {3, 4}. In certain examples, the pair picked to encode from a set of encodable pairs is varied for a same plaintext, e.g., to generate different cyphertext for multiple encodings of a same plaintext. As another example, for a "ninth bit" algorithm, the memory controller circuit is to encode what the original data bit the ninth bit is replacing, so it would encode the lowest set (e.g., the pair starting at index 3 in the example above) if the data bit is 0, and the highest set (e.g., the pair starting at index 4 in the example above) if the data bit is 1. Examples that wish to perform access control may additionally check if there are three encodable pairs and, as a rule, only encode either the highest or lowest pair position depending on the value of the ninth data bit. The operations 500 further include, at block 532, checking if the encoded pair is in the first half (e.g., 200A) or second half (e.g., 200B) of the data line, and if yes, it is in the first half, proceeding to block 534, and if no, proceeding to block 536. The operations 500 further include, at block 534, if the check at 532 is yes, setting the additional locator bit position (e.g., 9th bit) to zero, e.g. indicating the encoded pair is in the first half 200A, and then sending that modified data line to block 518 remembering in which half it is located. The operations 500 further include, at block 536, if the check at 532 is no, setting the additional locator bit (e.g., 9th bit) to one, e.g. indicating the encoded pair is in the second half 200B, and then sending that modified data line to block 518.

In certain examples, there are triplets of the same value (e.g. 3 elements (e.g., bytes) with the same value within a quadrant), and those triplets are encoded as multiple pairs, e.g. the first value and the middle value produces one locator value, and the middle value and the last value produce a different locator value becoming alternate pairs. In certain examples, the first value and the last value can be a third pair.

FIG. 6 illustrates another example of operations 600 for a method of performing a read from memory with repeated value encoding according to examples of the disclosure. Some or all of the operations 600 (or other processes described herein, or variations, and/or combinations thereof) are performed under the control of one or more computer systems configured with executable instructions and are implemented as code (e.g., executable instructions, one or more computer programs, or one or more applications) executing collectively on one or more processors, by hardware or combinations thereof. The code is stored on a computer-readable executable by one or more processors. The computer-readable storage medium is non-transitory. In some examples, one or more (or all) of the operations 600 are performed by a component(s) of the other figures (e.g., memory controller circuit 116).

The operations 600 include, at block 602, executing, by an execution circuitry, an instruction to generate a memory request to read a data line from memory. The operations 600 further include, at block 604, decrypting, by a memory controller circuit, the data line into a decrypted data line. The operations 600 further include, at block 606, determining, by the memory controller circuit, that a field of the decrypted data line is set to a locator value for a repeated value. The operations 600 further include, at block 608, identifying, by the memory controller circuit, a first location of a first instance of the repeated value in the decrypted data line based on the locator value. The operations 600 further include, at block 610, reading, by the memory controller circuit, the repeated value from the first location in the decrypted data line. The operations 600 further include, at block 612, identifying, by the memory controller circuit, a second location in the decrypted data line for a second instance of the repeated value based on the locator value. The operations 600 further include, at block 614, shifting, by the memory controller circuit, the decrypted data line to remove the locator value from the decrypted data line and to generate space for the repeated value to be inserted into the second location. The operations 600 further include, at block 616, inserting, by the memory controller circuit, the repeated value into the space within the decrypted data line to generate a resultant data line.

Some examples utilize instruction formats described herein. Some examples are implemented in one or more computer architectures, cores, accelerators, etc. Some examples are generated or are IP cores. Some examples utilize emulation and/or translation.

Exemplary architectures, systems, etc. that the above may be used in are detailed below.

### Example Architectures

Detailed below are descriptions of example computer architectures. Other system designs and configurations known in the arts for laptop, desktop, and handheld personal computers (PC)s, personal digital assistants, engineering workstations, servers, disaggregated servers, network devices, network hubs, switches, routers, embedded processors, digital signal processors (DSPs), graphics devices, video game devices, set-top boxes, micro controllers, cell phones, portable media players, hand-held devices, and various other electronic devices, are also suitable. In general, a variety of systems or electronic devices capable of incorporating a processor and/or other execution logic as disclosed herein are generally suitable.

### Example Systems

FIG. 7 illustrates an example computing system. Multiprocessor system 700 is an interfaced system and includes a plurality of processors or cores including a first processor 770 and a second processor 780 coupled via an interface 750 such as a point-to-point (P-P) interconnect, a fabric, and/or bus. In some examples, the first processor 770 and the second processor 780 are homogeneous. In some examples, first processor 770 and the second processor 780 are heterogenous. Though the example system 700 is shown to have two processors, the system may have three or more processors, or may be a single processor system. In some examples, the computing system is a system on a chip (SoC).

Processors 770 and 780 are shown including integrated memory controller (IMC) circuitry 772 and 782, respectively. Processor 770 also includes interface circuits 776 and 778; similarly, second processor 780 includes interface circuits 786 and 788. Processors 770, 780 may exchange information via the interface 750 using interface circuits 778, 788. IMCs 772 and 782 couple the processors 770, 780 to respective memories, namely a memory 732 and a memory 734, which may be portions of main memory locally attached to the respective processors.

Processors 770, 780 may each exchange information with a network interface (NW 1/F) 790 via individual interfaces 752, 754 using interface circuits 776, 794, 786, 798. The network interface 790 (e.g., one or more of an interconnect, bus, and/or fabric, and in some examples is a chipset) may optionally exchange information with a coprocessor 738 via an interface circuit 792. In some examples, the coprocessor 738 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 770, 780 or outside of both processors, yet connected with the processors via an interface such as P-P interconnect, such that either or both processors' local cache information may be stored in the shared cache if a processor is placed into a low power mode.

Network interface 790 may be coupled to a first interface 716 via interface circuit 796. In some examples, first interface 716 may be an interface such as a Peripheral Component Interconnect (PCI) interconnect, a PCI Express interconnect or another 1/0 interconnect. In some examples, first interface 716 is coupled to a power control unit (PCU) 717, which may include circuitry, software, and/or firmware to perform power management operations with regard to the processors 770, 780 and/or co-processor 738. PCU 717 provides control information to a voltage regulator (not shown) to cause the voltage regulator to generate the appropriate regulated voltage. PCU 717 also provides control information to control the operating voltage generated. In various examples, PCU 717 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 717 is illustrated as being present as logic separate from the processor 770 and/or processor 780. In other cases, PCU 717 may execute on a given one or more of cores (not shown) of processor 770 or 780. In some cases, PCU 717 may be implemented as a microcontroller (dedicated or general-purpose) or other control logic configured to execute its own dedicated power management code, sometimes referred to as P-code. In yet other examples, power processor, such as by way of a separate power management integrated circuit (PMIC) or another component external to the processor. In yet other examples, power management operations to be performed by PCU 717 may be implemented within BIOS or other system software.

Various 1/0 devices 714 may be coupled to first interface 716, along with a bus bridge 718 which couples first interface 716 to a second interface 720. In some examples, one or more additional processor(s) 715, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 716. In some examples, second interface 720 may be a low pin count (LPC) interface. Various devices may be coupled to second interface 720 including, for example, a keyboard and/or mouse 722, communication devices 727 and storage circuitry 728. Storage circuitry 728 may be one or more non-transitory machine-readable storage media as described below, such as a disk drive or other mass storage device which may include instructions/code and data 730 and may implement instruction storage in some examples. Further, an audio 1/0 724 may be coupled to second interface 720. Note that other architectures than the point-to-point architecture described above are possible. For example, instead of the point-to-point architecture, a system such as multiprocessor system 700 may implement a multi-drop interface or other such architecture.

### Example Core Architectures, Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s)

Example core architectures are described next, followed by descriptions of example processors and computer architectures.

FIG. 8 illustrates a block diagram of an example processor and/or SoC 800 that may have one or more cores and an integrated memory controller. The solid lined boxes illustrate a processor 800 with a single core 802A, system agent unit circuitry 810, and a set of one or more interface controller unit(s) circuitry 816, while the optional addition of the dashed lined boxes illustrates an alternative processor 800 with multiple cores 802A-802N, a set of one or more integrated memory controller unit(s) circuitry 814 in the system agent unit circuitry 810, and special purpose logic 808, as well as a set of one or more interface controller units circuitry 816. Note that the processor 800 may be one of the processors 770 or 780, or co-processor 738 or 715 of FIG. 7.

Thus, different implementations of the processor 800 may include: 1) a CPU with the special purpose logic 808 being integrated graphics and/or scientific (throughput) logic (which may include one or more cores, not shown), and the cores 802A-802N being one or more general purpose cores (e.g., general purpose in-order cores, general purpose out-of-order cores, or a combination of the two); 2) a coprocessor with the cores 802A-802N being a large number of special purpose cores intended primarily for graphics and/or scientific (throughput); and 3) a coprocessor with the cores 802A-802N being a large number of general purpose in-order cores. Thus, the processor 800 may be a general-purpose processor, coprocessor or special-purpose processor, such as, for example, a network or communication processor, compression engine, graphics processor, GPGPU (general purpose graphics processing unit), a high throughput many integrated core (MIC) coprocessor (including 30 or more cores), embedded processor, or the like. The processor may be implemented on one or more chips. The processor 800 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 804A-804N within the cores 802A-802N, a set of one or more shared cache unit(s) circuitry 806, and external memory (not shown) coupled to the set of integrated memory controller unit(s) circuitry 814. The set of one or more shared cache unit(s) circuitry 806 may include one or more mid-level caches, such as level 2 (L2), level 3 (L3), level 4 (L4), or other levels of cache, such as a last level cache (LLC), and/or combinations thereof. While in some examples interface network circuitry 812 the set of shared cache unit(s) circuitry 806, and the system agent unit circuitry 810, alternative examples use any number of well-known techniques for interfacing such units. In some examples, coherency is maintained between one or more of the shared cache unit(s) circuitry 806 and cores 802A-802N. In some examples, interface controller units circuitry 816 couple the cores 802 to one or more other devices 818 such as one or more 1/0 devices, storage, one or more communication devices (e.g., wireless networking, wired networking, etc.), etc.

In some examples, one or more of the cores 802A-802N are capable of multi-threading. The system agent unit circuitry 810 includes those components coordinating and operating cores 802A-802N. The system agent unit circuitry 810 may include, for example, power control unit (PCU) circuitry and/or display unit circuitry (not shown). The PCU may be or may include logic and components needed for regulating the power state of the cores 802A-802N and/or the special purpose logic 808 (e.g., integrated graphics logic). The display unit circuitry is for driving one or more externally connected displays.

The cores 802A-802N may be homogenous in terms of instruction set architecture (ISA). Alternatively, the cores 802A-802N may be heterogeneous in terms of ISA; that is, a subset of the cores 802A-802N may be capable of executing an ISA, while other cores may be capable of executing only a subset of that ISA or another ISA.

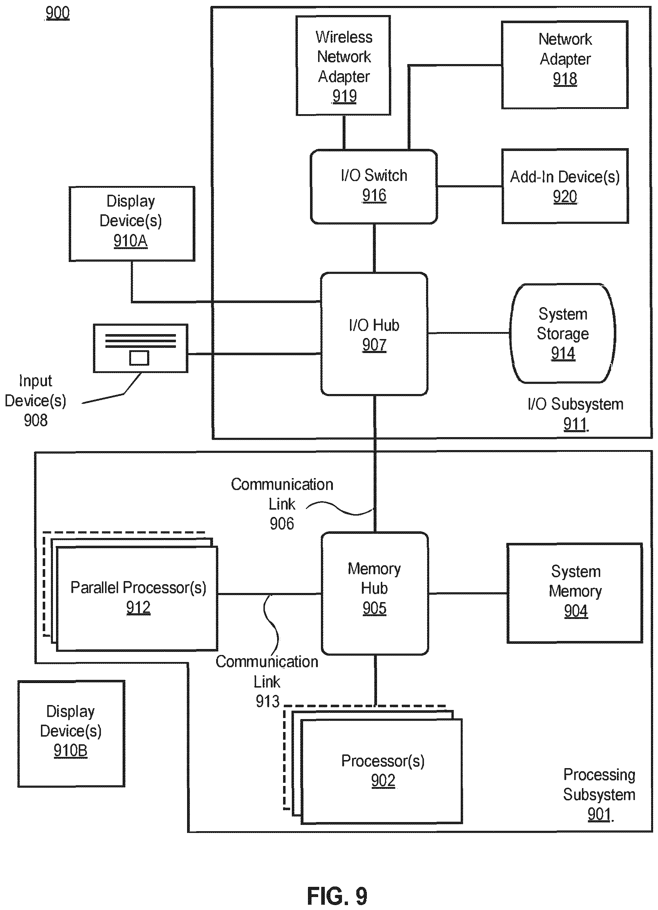

FIG. 9 is a block diagram illustrating a computing system 900 configured to implement one or more aspects of the examples described herein. The computing system 900 includes a processing subsystem 901 having one or more processor(s) 902 and a system memory 904 communicating via an interconnection path that may include a memory hub 905. The memory hub 905 may be a separate component within a chipset component or may be integrated within the one or more processor(s) 902. The memory hub 905 couples with an 1/0 subsystem 911 via a communication link 906. The 1/0 subsystem 911 includes an 1/0 hub 907 that can enable the computing system 900 to receive input from one or more input device(s) 908. Additionally, the 1/0 hub 907 can enable a display controller, which may be included in the one or more processor(s) 902, to provide outputs to one or more display device(s) 910A. In some examples the one or more display device(s) 910A coupled with the 1/0 hub 907 can include a local, internal, or embedded display device.

The processing subsystem 901, for example, includes one or more parallel processor(s) 912 coupled to memory hub 905 via a bus or other communication link 913. The communication link 913 may be one of any number of standards-based communication link technologies or protocols, such as, but not limited to PCI Express, or may be a vendor specific communications computationally focused parallel or vector processing system that can include a large number of processing cores and/or processing clusters, such as a many integrated core (MIC) processor. For example, the one or more parallel processor(s) 912 form a graphics processing subsystem that can output pixels to one of the one or more display device(s) 910A coupled via the 1/0 hub 907. The one or more parallel processor(s) 912 can also include a display controller and display interface (not shown) to enable a direct connection to one or more display device(s) 910B.

Within the 1/0 subsystem 911, a system storage unit 914 can connect to the 1/0 hub 907 to provide a storage mechanism for the computing system 900. An 1/0 switch 916 can be used to provide an interface mechanism to enable connections between the 1/0 hub 907 and other components, such as a network adapter 918 and/or wireless network adapter 919 that may be integrated into the platform, and various other devices that can be added via one or more add-in device(s) 920. The add-in device(s) 920 may also include, for example, one or more external graphics processor devices, graphics cards, and/or compute accelerators. The network adapter 918 can be an Ethernet adapter or another wired network adapter. The wireless network adapter 919 can include one or more of a Wi-Fi, Bluetooth, near field communication (NFC), or other network device that includes one or more wireless radios.

The computing system 900 can include other components not explicitly shown, including USB or other port connections, optical storage drives, video capture devices, and the like, which may also be connected to the 1/0 hub 907. Communication paths interconnecting the various components in FIG. 9 may be implemented using any suitable protocols, such as PCI (Peripheral Component Interconnect) based protocols (e.g., PCI-Express), or any other bus or point-to-point communication interfaces and/or protocol(s), such as the NVLink high-speed interconnect, Compute Express Link^{™} (CXL^{™}) (e.g., CXL.mem), Infinity Fabric (IF), Ethernet (IEEE 802.3), remote direct memory access (RDMA), InfiniBand, Internet Wide Area RDMA Protocol (iWARP), Transmission Control Protocol (TCP), User Datagram Protocol (UDP), quick UDP Internet Connections (QUIC), RDMA over Converged Ethernet (RoCE), Intel QuickPath Interconnect (QPI), Intel Ultra Path Interconnect (UPI), Intel On-Chip System Fabric (IOSF), Omnipath, HyperTransport, Advanced Microcontroller Bus Architecture (AMBA) interconnect, OpenCAPI, Gen-Z, Cache Coherent Interconnect for Accelerators (CCIX), 3GPP Long Term Evolution (LTE) (4G), 3GPP 5G, and variations thereof, or wired or wireless interconnect protocols known in the art. In some examples, data can be copied or stored to virtualized storage nodes using a protocol such as non-volatile memory express (NVMe) over Fabrics (NVMe-oF) or NVMe.

The one or more parallel processor(s) 912 may incorporate circuitry optimized for graphics and video processing, including, for example, video output circuitry, and constitutes a graphics processing unit (GPU). Alternatively or additionally, the one or more parallel processor(s) 912 can incorporate circuitry optimized for general purpose processing, while preserving the underlying computational architecture, described in greater detail herein. Components of the computing system 900 may be integrated with one or more other system elements on a single integrated circuit. For example, the one or more parallel processor(s) 912, memory hub 905, processor(s) 902, and 1/0 hub 907 can be integrated into a system on chip (SoC) integrated circuit. Alternatively, the components of the computing system 900 can be integrated into a single package to form a system in package (SIP) configuration. In some examples at least a portion of the components of the computing system 900 can be integrated into a multi-chip module (MCM), which can be interconnected with other multi-chip modules into a modular computing system.

It will be appreciated that the computing system 900 shown herein is illustrative and that variations and modifications are possible. The connection topology, including the number and arrangement of bridges, the number of processor(s) 902, and the number of parallel processor(s) 912, may be modified as desired. For instance, system memory 904 can be connected to the processor(s) 902 directly rather than through a bridge, while other devices communicate with system memory 904 via the memory hub 905 and the processor(s) 902. In other alternative topologies, the parallel processor(s) 912 are connected to the 1/0 hub 907 or directly to one of the one or more processor(s) 902, rather than to the memory hub 905. In other examples, the 1/0 hub 907 and memory hub 905 may be integrated into a single chip. It is also possible that two or more sets of processor(s) 902 are attached via multiple sockets, which can couple with two or more instances of the parallel processor(s) 912.

Some of the particular components shown herein are optional and may not be included in all implementations of the computing system 900. For example, any number of add-in cards or peripherals may be supported, or some components may be eliminated. Furthermore, some architectures may use different terminology for components similar to those illustrated in FIG. 9. For example, the memory hub 905 may be referred to as a Northbridge in some architectures, while the 1/0 hub 907 may be referred to as a Southbridge.

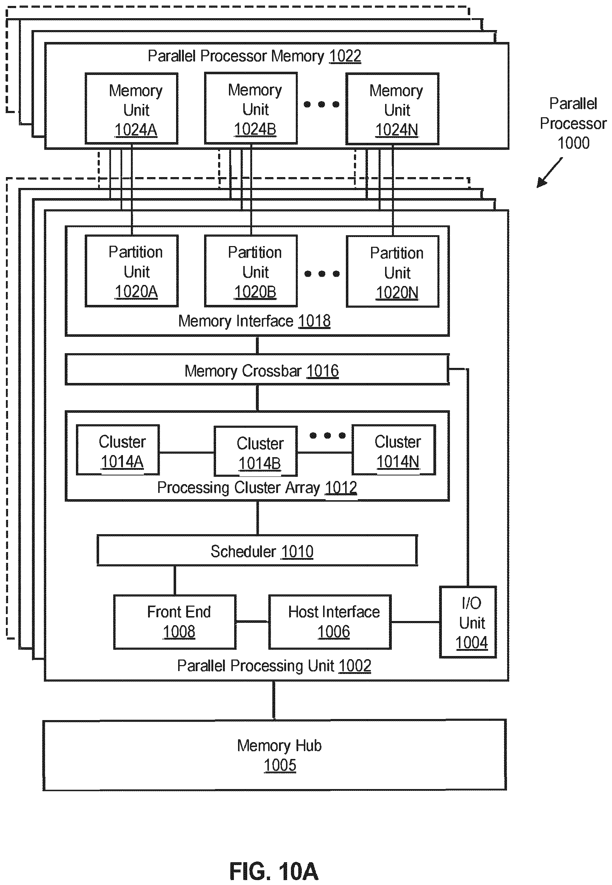

FIG. 10A illustrates examples of a parallel processor 1000. The parallel processor 1000 may be a GPU, GPGPU or the like as described herein. The various components of the parallel processor 1000 may be implemented using one or more integrated circuit devices, such as gate arrays (FPGA). The illustrated parallel processor 1000 may be one or more of the parallel processor(s) 912 shown in FIG. 9.

The parallel processor 1000 includes a parallel processing unit 1002. The parallel processing unit includes an 1/0 unit 1004 that enables communication with other devices, including other instances of the parallel processing unit 1002. The 1/0 unit 1004 may be directly connected to other devices. For instance, the 1/0 unit 1004 connects with other devices via the use of a hub or switch interface, such as memory hub 905. The connections between the memory hub 905 and the 1/0 unit 1004 form a communication link 913. Within the parallel processing unit 1002, the 1/0 unit 1004 connects with a host interface 1006 and a memory crossbar 1016, where the host interface 1006 receives commands directed to performing processing operations and the memory crossbar 1016 receives commands directed to performing memory operations.

When the host interface 1006 receives a command buffer via the 1/0 unit 1004, the host interface 1006 can direct work operations to perform those commands to a front end 1008. In some examples the front end 1008 couples with a scheduler 1010, which is configured to distribute commands or other work items to a processing cluster array 1012. The scheduler 1010 ensures that the processing cluster array 1012 is properly configured and in a valid state before tasks are distributed to the processing clusters of the processing cluster array 1012. The scheduler 1010 may be implemented via firmware logic executing on a microcontroller. The microcontroller implemented scheduler 1010 is configurable to perform complex scheduling and work distribution operations at coarse and fine granularity, enabling rapid preemption and context switching of threads executing on the processing cluster array 1012. Preferably, the host software can prove workloads for scheduling on the processing cluster array 1012 via one of multiple graphics processing doorbells. In other examples, polling for new workloads or interrupts can be used to identify or indicate availability of work to perform. The workloads can then be automatically distributed across the processing cluster array 1012 by the scheduler 1010 logic within the scheduler microcontroller.

The processing cluster array 1012 can include up to "N" processing clusters (e.g., cluster 1014A, cluster 1014B, through cluster 1014N). Each cluster 1014A-1014N of the processing cluster array 1012 can execute a large number of concurrent threads. The scheduler 1010 can allocate work to the clusters 1014A-1014N of the processing cluster array 1012 using various scheduling and/or work distribution algorithms, which may vary depending on the workload arising for each type of program or computation. The scheduling can be handled dynamically by the scheduler 1010 or can be assisted in part by compiler logic during compilation different clusters 1014A-1014N of the processmg cluster array 1012 can be allocated for processing different types of programs or for performing different types of computations.

The processing cluster array 1012 can be configured to perform various types of parallel processing operations. For example, the processing cluster array 1012 is configured to perform general-purpose parallel compute operations. For example, the processing cluster array 1012 can include logic to execute processing tasks including filtering of video and/or audio data, performing modeling operations, including physics operations, and performing data transformations.

The processing cluster array 1012 is configured to perform parallel graphics processing operations. In such examples in which the parallel processor 1000 is configured to perform graphics processing operations, the processing cluster array 1012 can include additional logic to support the execution of such graphics processing operations, including, but not limited to texture sampling logic to perform texture operations, as well as tessellation logic and other vertex processing logic. Additionally, the processing cluster array 1012 can be configured to execute graphics processing related shader programs such as, but not limited to vertex shaders, tessellation shaders, geometry shaders, and pixel shaders. The parallel processing unit 1002 can transfer data from system memory via the 1/0 unit 1004 for processing. The transferred data can be stored to on-chip memory (e.g., parallel processor memory 1022) during processing, then written back to system memory.

In examples in which the parallel processing unit 1002 is used to perform graphics processing, the scheduler 1010 may be configured to divide the processing workload into approximately equal sized tasks, to better enable distribution of the graphics processing operations to multiple clusters 1014A-1014N of the processing cluster array 1012. In some of these examples, portions of the processing cluster array 1012 can be configured to perform different types of processing. For example, a first portion may be configured to perform vertex shading and topology generation, a second portion may be configured to perform tessellation and geometry shading, and a third portion may be configured to perform pixel shading or other screen space operations, to produce a rendered image for display. Intermediate data produced by one or more of the clusters 1014A-1014N may be stored in buffers to allow the intermediate data to be transmitted between clusters 1014A-1014N for further processing.

During operation, the processing cluster array 1012 can receive processing tasks to be executed via the scheduler 1010, which receives commands defining processing tasks from front end 1008. For graphics processing operations, processing tasks can include indices of data to be processed, e.g., surface (patch) data, primitive data, vertex data, and/or pixel data, as well as state executed). The scheduler 1010 may be configured to fetch the indices corresponding to the tasks or may receive the indices from the front end 1008. The front end 1008 can be configured to ensure the processing cluster array 1012 is configured to a valid state before the workload specified by incoming command buffers (e.g., batch-buffers, push buffers, etc.) is initiated.

Each of the one or more instances of the parallel processing unit 1002 can couple with parallel processor memory 1022. The parallel processor memory 1022 can be accessed via the memory crossbar 1016, which can receive memory requests from the processing cluster array 1012 as well as the 1/0 unit 1004. The memory crossbar 1016 can access the parallel processor memory 1022 via a memory interface 1018. The memory interface 1018 can include multiple partition units (e.g., partition unit 1020A, partition unit 1020B, through partition unit 1020N) that can each couple to a portion (e.g., memory unit) of parallel processor memory 1022. The number of partition units 1020A-1020N may be configured to be equal to the number of memory units, such that a first partition unit 1020A has a corresponding first memory unit 1024A, a second partition unit 1020B has a corresponding second memory unit 1024B, and an Nth partition unit 1020N has a corresponding Nth memory unit 1024N. In other examples, the number of partition units 1020A-1020N may not be equal to the number of memory devices.

The memory units 1024A-1024N can include various types of memory devices, including dynamic random-access memory (DRAM) or graphics random access memory, such as synchronous graphics random access memory (SGRAM), including graphics double data rate (GDDR) memory. Optionally, the memory units 1024A-1024N may also include 3D stacked memory, including but not limited to high bandwidth memory (HBM). Persons skilled in the art will appreciate that the specific implementation of the memory units 1024A-1024N can vary and can be selected from one of various conventional designs. Render targets, such as frame buffers or texture maps may be stored across the memory units 1024A-1024N, allowing partition units 1020A-1020N to write portions of each render target in parallel to efficiently use the available bandwidth of parallel processor memory 1022. In some examples, a local instance of the parallel processor memory 1022 may be excluded in favor of a unified memory design that utilizes system memory in conjunction with local cache memory.

Optionally, any one of the clusters 1014A-1014N of the processing cluster array 1012 has the ability to process data that will be written to any of the memory units 1024A-1024N within parallel processor memory 1022. The memory crossbar 1016 can be configured to transfer the output of each cluster 1014A-1014N to any partition unit 1020A-1020N or to another cluster 1014A-1014N, which can perform additional processing operations on the output. Each cluster 1016 to read from or write to various external memory devices. In one of the examples with the memory crossbar 1016 the memory crossbar 1016 has a connection to the memory interface 1018 to communicate with the 1/0 unit 1004, as well as a connection to a local instance of the parallel processor memory 1022, enabling the processing units within the different processing clusters 1014A-1014N to communicate with system memory or other memory that is not local to the parallel processing unit 1002. Generally, the memory crossbar 1016 may, for example, be able to use virtual channels to separate traffic streams between the clusters 1014A-1014N and the partition units 1020A-1020N.

While a single instance of the parallel processing unit 1002 is illustrated within the parallel processor 1000, any number of instances of the parallel processing unit 1002 can be included. For example, multiple instances of the parallel processing unit 1002 can be provided on a single add-in card, or multiple add-in cards can be interconnected. For example, the parallel processor 1000 can be an add-in device, such as add-in device 920 of FIG. 9, which may be a graphics card such as a discrete graphics card that includes one or more GPUs, one or more memory devices, and device-to-device or network or fabric interfaces. The different instances of the parallel processing unit 1002 can be configured to inter-operate even if the different instances have different numbers of processing cores, different amounts of local parallel processor memory, and/or other configuration differences. Optionally, some instances of the parallel processing unit 1002 can include higher precision floating point units relative to other instances. Systems incorporating one or more instances of the parallel processing unit 1002 or the parallel processor 1000 can be implemented in a variety of configurations and form factors, including but not limited to desktop, laptop, or handheld personal computers, servers, workstations, game consoles, and/or embedded systems. An orchestrator can form composite nodes for workload performance using one or more of: disaggregated processor resources, cache resources, memory resources, storage resources, and networking resources.

In some examples, the parallel processing unit 1002 can be partitioned into multiple instances. Those multiple instances can be configured to execute workloads associated with different clients in an isolated manner, enabling a predetermined quality of service to be provided for each client. For example, each cluster 1014A-1014N can be compartmentalized and isolated from other clusters, allowing the processing cluster array 1012 to be divided into multiple compute partitions or instances. In such configuration, workloads that execute on an isolated partition are protected from faults or errors associated with a different workload that executes on a different partition. The partition units 1020A-1020N can be configured to enable a dedicated and/or isolated path to memory for the clusters 1014A-1014N associated with the respective compute partitions. This datapath isolation enables the compute resources within a partition can communicate with one or more assigned memory units 1024A-1024N without being subjected to inference by the activities of other partitions.

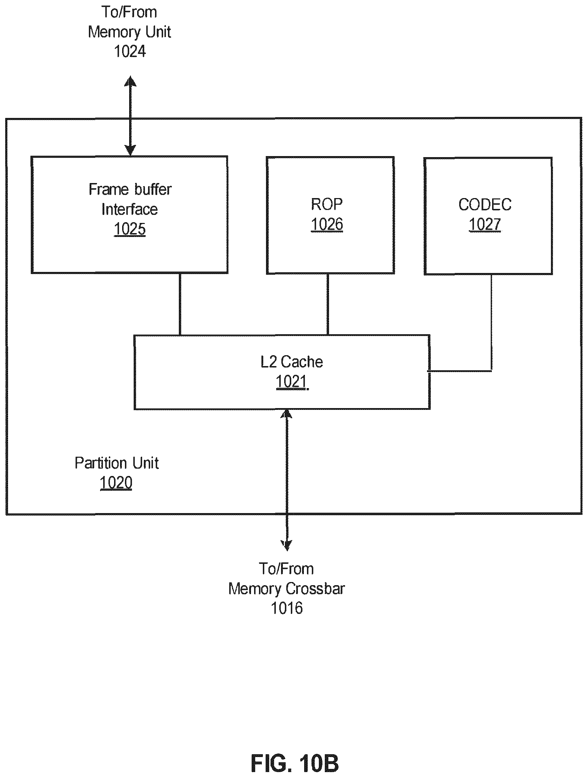

FIG. 10B is a block diagram of a partition unit 1020. The partition unit 1020 may be an instance of one of the partition units 1020A-1020N of FIG. 10A. As illustrated, the partition unit 1020 includes an L2 cache 1021, a frame buffer interface 1025, and a ROP 1026 (raster operations unit). The L2 cache 1021 is a read/write cache that is configured to perform load and store operations received from the memory crossbar 1016 and ROP 1026. Read misses and urgent writeback requests are output by L2 cache 1021 to frame buffer interface 1025 for processing. Updates can also be sent to the frame buffer via the frame buffer interface 1025 for processing. In some examples the frame buffer interface 1025 interfaces with one of the memory units in parallel processor memory, such as the memory units 1024A-1024N of FIG. 10A (e.g., within parallel processor memory 1022). The partition unit 1020 may additionally or alternatively also interface with one of the memory units in parallel processor memory via a memory controller (not shown).

In graphics applications, the ROP 1026 is a processmg unit that performs raster operations such as stencil, z test, blending, and the like. The ROP 1026 then outputs processed graphics data that is stored in graphics memory. In some examples the ROP 1026 includes or couples with a CODEC 1027 that includes compression logic to compress depth or color data that is written to memory or the L2 cache 1021 and decompress depth or color data that is read from memory or the L2 cache 1021. The compression logic can be lossless compression logic that makes use of one or more of multiple compression algorithms. The type of compression that is performed by the CODEC 1027 can vary based on the statistical characteristics of the data to be compressed. For example, in some examples, delta color compression is performed on depth and color data on a per-tile basis. In some examples the CODEC 1027 includes compression and decompression logic that can compress and decompress compute data associated with machine learning operations. The CODEC 1027 can, for example, compress sparse matrix data for sparse machine learning operations. The CODEC 1027 can also compress sparse matrix data that is encoded in a sparse matrix format (e.g., coordinate list encoding (COO), compressed sparse row (CSR), compress sparse column (CSC), etc.) to generate compressed and encoded sparse matrix data. The compressed and encoded sparse matrix data can be decompressed and/or decoded before being processed by processing elements or the processing elements can be configured to consume compressed, encoded, or compressed and encoded data for processing.

The ROP 1026 may be included within each processing cluster (e.g., cluster 1014A- 1014N of FIG. 10A) instead of within the partition unit 1020. In such example, read and write requests for pixel data are transmitted over the memory crossbar 1016 instead of pixel fragment data. The processed graphics data may be displayed on a display device, such as one of the one or more display device(s) 910A-910B of FIG. 9, routed for further processing by the processor(s) 902, or routed for further processing by one of the processing entities within the parallel processor 1000 of FIG. 10A.

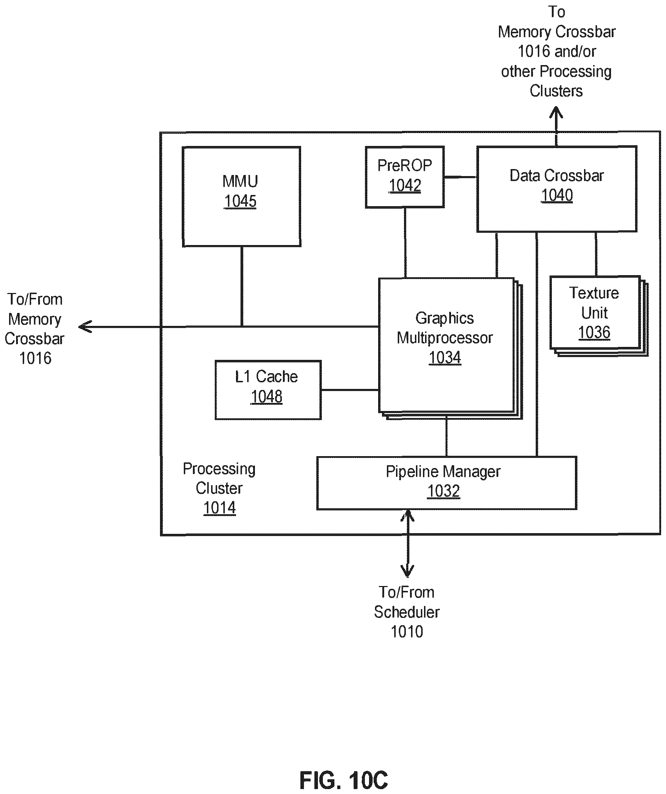

FIG. 10C is a block diagram of a processing cluster 1014 within a parallel processing unit. For example, the processing cluster is an instance of one of the processing clusters 1014A- 1014N of FIG. 10A. The processing cluster 1014 can be configured to execute many threads in parallel, where the term "thread" refers to an instance of a particular program executing on a particular set of input data. Optionally, single-instruction, multiple-data (SIMD) instruction issue techniques may be used to support parallel execution of a large number of threads without providing multiple independent instruction units. Alternatively, single-instruction, multiple- thread (SIMT) techniques may be used to support parallel execution of a large number of generally synchronized threads, using a common instruction unit configured to issue instructions to a set of processing engines within each one of the processing clusters. Unlike a SIMD execution regime, where all processing engines typically execute identical instructions, SIMT execution allows different threads to more readily follow divergent execution paths through a given thread program. Persons skilled in the art will understand that a SIMD processing regime represents a functional subset of a SIMT processing regime.

Operation of the processing cluster 1014 can be controlled via a pipeline manager 1032 that distributes processing tasks to SIMT parallel processors. The pipeline manager 1032 receives instructions from the scheduler 1010 of FIG. 10A and manages execution of those instructions via a graphics multiprocessor 1034 and/or a texture unit 1036. The illustrated graphics multiprocessor 1034 is an exemplary instance of a SIMT parallel processor. However, various types of SIMT parallel processors of differing architectures may be included within the processing cluster 1014. One or more instances of the graphics multiprocessor 1034 can be included within a processing cluster 1014. The graphics multiprocessor 1034 can process data and a data crossbar 1040 can be used to distribute the processed data to one of multiple possible destinations, including other shader units. The pipeline manager 1032 can facilitate the distribution of processed data by specifying destinations for processed data to be distributed via the data crossbar 1040.

Each graphics multiprocessor 1034 within the processing cluster 1014 can include an functional execution logic can be configured in a pipelined manner in which new instructions can be issued before previous instructions are complete. The functional execution logic supports a variety of operations including integer and floating-point arithmetic, comparison operations, Boolean operations, bit-shifting, and computation of various algebraic functions. The same functional-unit hardware could be leveraged to perform different operations and any combination of functional units may be present.

The instructions transmitted to the processing cluster 1014 constitute a thread. A set of threads executing across the set of parallel processing engines is a thread group. A thread group executes the same program on different input data. Each thread within a thread group can be assigned to a different processing engine within a graphics multiprocessor 1034. A thread group may include fewer threads than the number of processing engines within the graphics multiprocessor 1034. When a thread group includes fewer threads than the number of processing engines, one or more of the processing engines may be idle during cycles in which that thread group is being processed. A thread group may also include more threads than the number of processing engines within the graphics multiprocessor 1034. When the thread group includes more threads than the number of processing engines within the graphics multiprocessor 1034, processing can be performed over consecutive clock cycles. Optionally, multiple thread groups can be executed concurrently on the graphics multiprocessor 1034.

The graphics multiprocessor 1034 may include an internal cache memory to perform load and store operations. Optionally, the graphics multiprocessor 1034 can forego an internal cache and use a cache memory (e.g., level 1 (LI) cache 1048) within the processing cluster 1014. Each graphics multiprocessor 1034 also has access to level 2 (L2) caches within the partition units (e.g., partition units 1020A-1020N of FIG. 10A) that are shared among all processing clusters 1014 and may be used to transfer data between threads. The graphics multiprocessor 1034 may also access off-chip global memory, which can include one or more of local parallel processor memory and/or system memory. Any memory external to the parallel processing unit 1002 may be used as global memory. Examples in which the processing cluster 1014 includes multiple instances of the graphics multiprocessor 1034 can share common instructions and data, which may be stored in the LI cache 1048.

Each processing cluster 1014 may include an MMU 1045 (memory management unit) that is configured to map virtual addresses into physical addresses. In other examples, one or more instances of the MMU 1045 may reside within the memory interface 1018 of FIG. 10A. The MMU 1045 includes a set of page table entries (PTEs) used to map a virtual address to a physical translation lookaside buffers (TLB) or caches that may reside within the graphics multiprocessor 1034 or the LI cache 1048 of processing cluster 1014. The physical address is processed to distribute surface data access locality to allow efficient request interleaving among partition units. The cache line index may be used to determine whether a request for a cache line is a hit or miss.

In graphics and computing applications, a processing cluster 1014 may be configured such that each graphics multiprocessor 1034 is coupled to a texture unit 1036 for performing texture mapping operations, e.g., determining texture sample positions, reading texture data, and filtering the texture data. Texture data is read from an internal texture LI cache (not shown) or in some examples from the LI cache within graphics multiprocessor 1034 and is fetched from an L2 cache, local parallel processor memory, or system memory, as needed. Each graphics multiprocessor 1034 outputs processed tasks to the data crossbar 1040 to provide the processed task to another processing cluster 1014 for further processing or to store the processed task in an L2 cache, local parallel processor memory, or system memory via the memory crossbar 1016. A preROP 1042 (pre-raster operations unit) is configured to receive data from graphics multiprocessor 1034, direct data to ROP units, which may be located with partition units as described herein (e.g., partition units 1020A-1020N of FIG. 10A). The preROP 1042 unit can perform optimizations for color blending, organize pixel color data, and perform address translations.

It will be appreciated that the core architecture described herein is illustrative and that variations and modifications are possible. Any number of processing units, e.g., graphics multiprocessor 1034, texture units 1036, preROPs 1042, etc., may be included within a processing cluster 1014. Further, while only one processing cluster 1014 is shown, a parallel processing unit as described herein may include any number of instances of the processing cluster 1014. Optionally, each processing cluster 1014 can be configured to operate independently of other processing clusters 1014 using separate and distinct processing units, LI caches, L2 caches, etc.

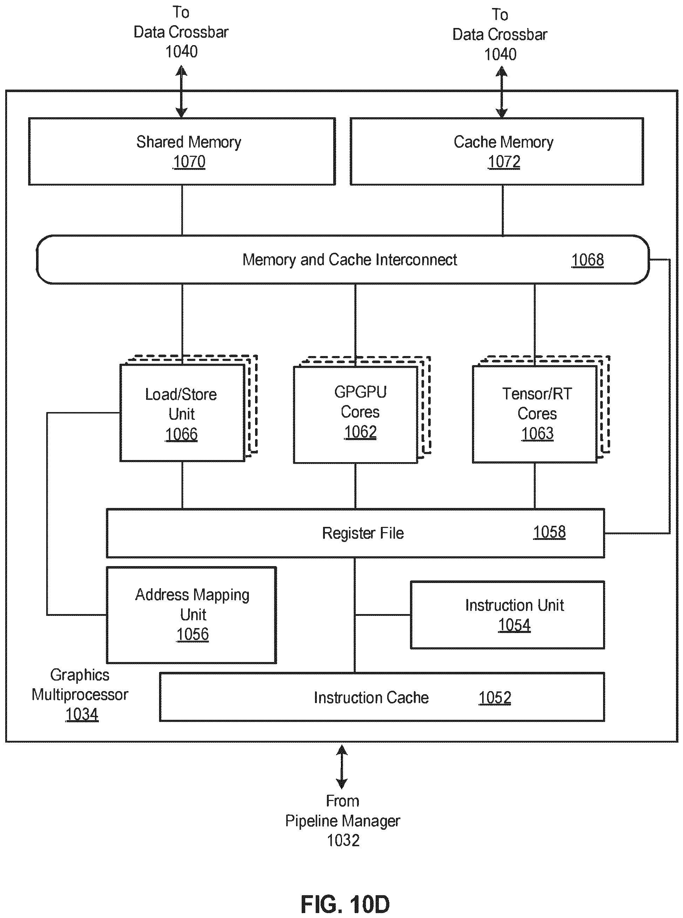

FIG. 10D shows an example of the graphics multiprocessor 1034 in which the graphics multiprocessor 1034 couples with the pipeline manager 1032 of the processing cluster 1014. The graphics multiprocessor 1034 has an execution pipeline including but not limited to an instruction cache 1052, an instruction unit 1054, an address mapping unit 1056, a register file 1058, one or more general purpose graphics processing unit (GPGPU) cores 1062, and one or more load/store units 1066. The GPGPU cores 1062 and load/store units 1066 are coupled with cache memory 1072 and shared memory 1070 via a memory and cache interconnect 1068. The graphics multiprocessor 1034 may additionally include tensor and/or ray-tracing cores 1063 that include

The instruction cache 1052 may receive a stream of instructions to execute from the pipeline manager 1032. The instructions are cached in the instruction cache 1052 and dispatched for execution by the instruction unit 1054. The instruction unit 1054 can dispatch instructions as thread groups (e.g., warps), with each thread of the thread group assigned to a different execution unit within GPGPU core 1062. An instruction can access any of a local, shared, or global address space by specifying an address within a unified address space. The address mapping unit 1056 can be used to translate addresses in the unified address space into a distinct memory address that can be accessed by the load/store units 1066.

The register file 1058 provides a set of registers for the functional units of the graphics multiprocessor 1034. The register file 1058 provides temporary storage for operands connected to the data paths of the functional units (e.g., GPGPU cores 1062, load/store units 1066) of the graphics multiprocessor 1034. The register file 1058 may be divided between each of the functional units such that each functional unit is allocated a dedicated portion of the register file 1058. For example, the register file 1058 may be divided between the different warps being executed by the graphics multiprocessor 1034.

The GPGPU cores 1062 can each include floating point units (FPUs) and/or integer arithmetic logic units (ALUs) that are used to execute instructions of the graphics multiprocessor 1034. In some implementations, the GPGPU cores 1062 can include hardware logic that may otherwise reside within the tensor and/or ray-tracing cores 1063. The GPGPU cores 1062 can be similar in architecture or can differ in architecture. For example and in some examples, a first portion of the GPGPU cores 1062 include a single precision FPU and an integer ALU while a second portion of the GPGPU cores include a double precision FPU. Optionally, the FPUs can implement the IEEE 754-2008 standard for floating point arithmetic or enable variable precision floating point arithmetic. The graphics multiprocessor 1034 can additionally include one or more fixed function or special function units to perform specific functions such as copy rectangle or pixel blending operations. One or more of the GPGPU cores can also include fixed or special function logic.

The GPGPU cores 1062 may include SIMD logic capable of performing a single instruction on multiple sets of data. Optionally, GPGPU cores 1062 can physically execute SIMD4, SIMD8, and SIMD16 instructions and logically execute SIMDI, SIMD2, and SIMD32 instructions. The SIMD instructions for the GPGPU cores can be generated at compile time by a shader compiler or automatically generated when executing programs written and compiled for single program multiple data (SPMD) or SIMT architectures. Multiple threads of a program example and in some examples, eight SIMT threads that perform the same or similar operations can be executed in parallel via a single SIMD8 logic unit.

The memory and cache interconnect 1068 is an interconnect network that connects each of the functional units of the graphics multiprocessor 1034 to the register file 1058 and to the shared memory 1070. For example, the memory and cache interconnect 1068 is a crossbar interconnect that allows the load/store unit 1066 to implement load and store operations between the shared memory 1070 and the register file 1058. The register file 1058 can operate at the same frequency as the GPGPU cores 1062, thus data transfer between the GPGPU cores 1062 and the register file 1058 is very low latency. The shared memory 1070 can be used to enable communication between threads that execute on the functional units within the graphics multiprocessor 1034. The cache memory 1072 can be used as a data cache for example, to cache texture data communicated between the functional units and the texture unit 1036. The shared memory 1070 can also be used as a program managed cached. The shared memory 1070 and the cache memory 1072 can couple with the data crossbar 1040 to enable communication with other components of the processing cluster. Threads executing on the GPGPU cores 1062 can programmatically store data within the shared memory in addition to the automatically cached data that is stored within the cache memory 1072.

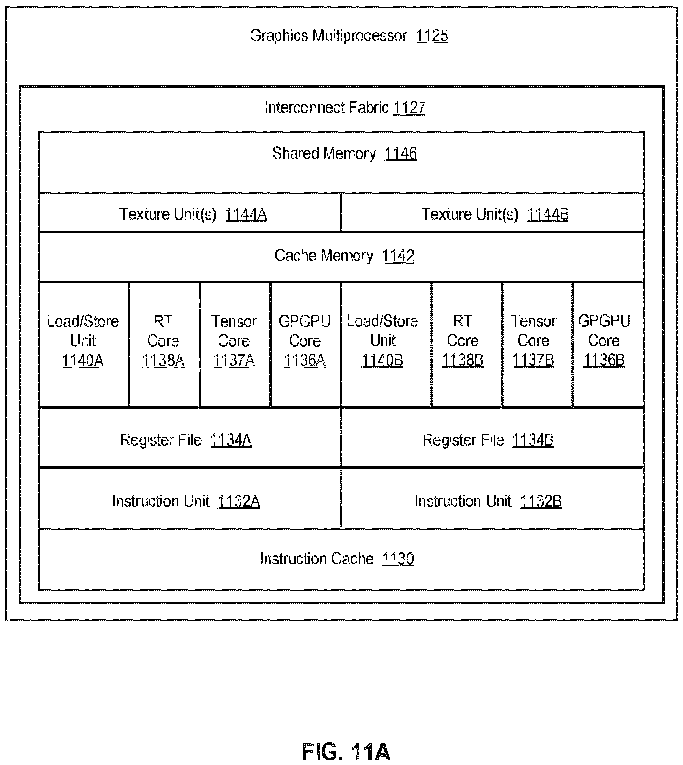

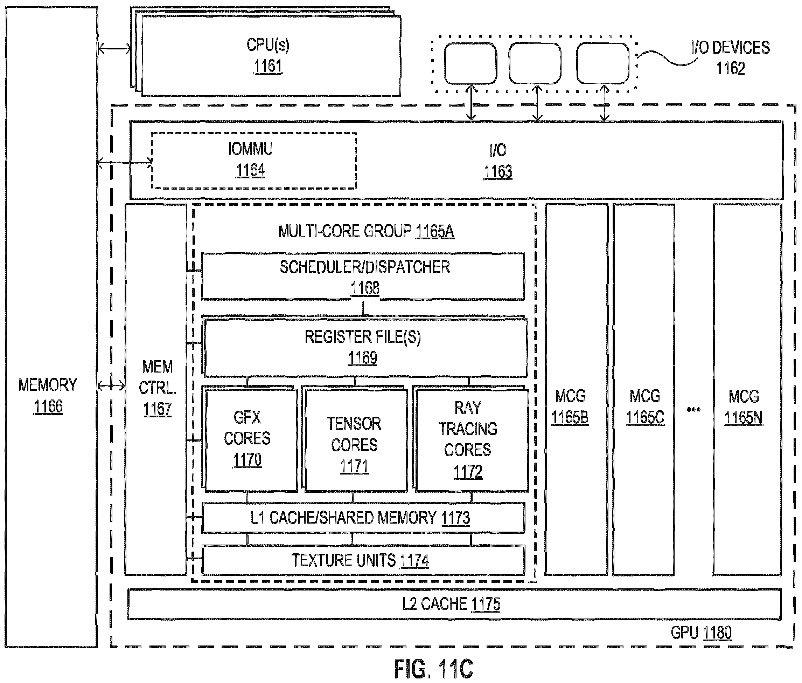

FIGS. 11A-11C illustrate additional graphics multiprocessors, according to examples. FIG. 1 IA-1IB illustrate graphics multiprocessors 1125, 1150, which are related to the graphics multiprocessor 1034 of FIG. 10C and may be used in place of one of those. Therefore, the disclosure of any features in combination with the graphics multiprocessor 1034 herein also discloses a corresponding combination with the graphics multiprocessor(s) 1125, 1150, but is not limited to such. FIG. 11C illustrates a graphics processing unit (GPU) 1180 which includes dedicated sets of graphics processing resources arranged into multi-core groups 1165A-1165N, which correspond to the graphics multiprocessors 1125, 1150. The illustrated graphics multiprocessors 1125, 1150 and the multi-core groups 1165A-1165N can be streaming multiprocessors (SM) capable of simultaneous execution of a large number of execution threads.

The graphics multiprocessor 1125 of FIG. 11A includes multiple additional instances of execution resource units relative to the graphics multiprocessor 1034 of FIG. 10D. For example, the graphics multiprocessor 1125 can include multiple instances of the instruction unit 1132A-1132B, register file 1134A-1134B, and texture unit(s) 1144A-1144B. The graphics multiprocessor 1125 also includes multiple sets of graphics or compute execution units (e.g., GPGPU core 1136A-1136B, tensor core 1137A-1137B, ray-tracing core 1138A-1138B) and multiple sets of load/store units 1140A-1140B. The execution resource units have a common instruction cache 1130, texture and/or data cache memory 1142, and shared memory 1146.

The various components can communicate via an interconnect fabric 1127. The interconnect fabric 1127 may include one or more crossbar switches to enable communication between the various components of the graphics multiprocessor 1125. The interconnect fabric 1127 may be a separate, high-speed network fabric layer upon which each component of the graphics multiprocessor 1125 is stacked. The components of the graphics multiprocessor 1125 communicate with remote components via the interconnect fabric 1127. For example, the cores 1136A-II36B, 1137A-1137B, and 113SA-1138B can each communicate with shared memory 1146 via the interconnect fabric 1127. The interconnect fabric 1127 can arbitrate communication within the graphics multiprocessor 1125 to ensure a fair bandwidth allocation between components.

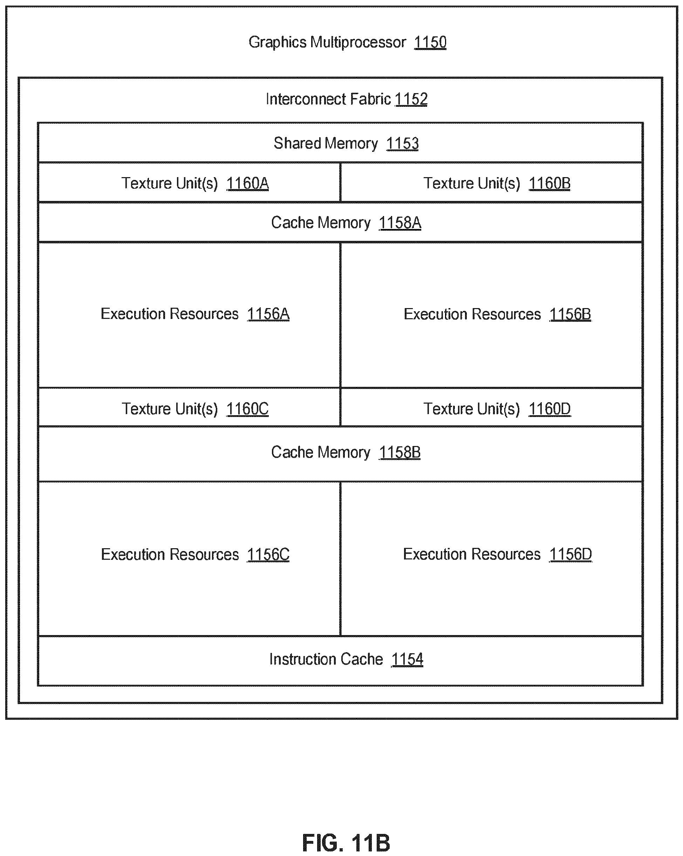

The graphics multiprocessor 1150 of FIG. 11B includes multiple sets of execution resources 1156A-1156D, where each set of execution resource includes multiple instruction units, register files, GPGPU cores, and load store units, as illustrated in FIG. 10D and FIG. 1 IA. The execution resources 1156A-1156D can work in concert with texture unit(s) 1160A-1160D for texture operations, while sharing an instruction cache 1154, and shared memory 1153. For example, the execution resources 1156A-1156D can share an instruction cache 1154 and shared memory 1153, as well as multiple instances of a texture and/or data cache memory 1158A-1158B. The various components can communicate via an interconnect fabric 1152 similar to the interconnect fabric 1127 of FIG. 1IA.

Persons skilled in the art will understand that the architecture described in FIG. 1, 10A- 10D, and 1 IA-1IB are descriptive and not limiting as to the scope of the present examples. Thus, the techniques described herein may be implemented on any properly configured processing unit, including, without limitation, one or more mobile application processors, one or more desktop or server central processing units (CPUs) including multi-core CPUs, one or more parallel processing units, such as the parallel processing unit 1002 of FIG. 10A, as well as one or more graphics processors or special purpose processing units, without departure from the scope of the examples described herein.

The parallel processor or GPGPU as described herein may be communicatively coupled to host/processor cores to accelerate graphics operations, machine-learning operations, pattern analysis operations, and various general-purpose GPU (GPGPU) functions. The GPU may be communicatively coupled to the host processor/cores over a bus or other interconnect (e.g., a high-proprietary protocols). In other examples, the GPU may be integrated on the same package or chip as the cores and communicatively coupled to the cores over an internal processor bus/interconnect (i.e., internal to the package or chip). Regardless of the manner in which the GPU is connected, the processor cores may allocate work to the GPU in the form of sequences of commands/instructions contained in a work descriptor. The GPU then uses dedicated circuitry/logic for efficiently processing these commands/instructions.

FIG. 11C illustrates a graphics processing unit (GPU) 1180 which includes dedicated sets of graphics processing resources arranged into multi-core groups 1165A-1165N. While the details of only a single multi-core group 1165A are provided, it will be appreciated that the other multi-core groups 1165B-1165N may be equipped with the same or similar sets of graphics processing resources. Details described with respect to the multi-core groups 1165A-1165N may also apply to any graphics multiprocessor 1034, 1125, 1150 described herein.

As illustrated, a multi-core group 1165A may include a set of graphics cores 1170, a set of tensor cores 1171, and a set of ray tracing cores 1172. A scheduler/dispatcher 1168 schedules and dispatches the graphics threads for execution on the various cores 1170, 1171, 1172. A set of register files 1169 store operand values used by the cores 1170, 1171, 1172 when executing the graphics threads. These may include, for example, integer registers for storing integer values, floating point registers for storing floating point values, vector registers for storing packed data elements (integer and/or floating-point data elements) and tile registers for storing tensor/matrix values. The tile registers may be implemented as combined sets of vector registers.

One or more combined level 1 (LI) caches and shared memory units 1173 store graphics data such as texture data, vertex data, pixel data, ray data, bounding volume data, etc., locally within each multi-core group 1165A. One or more texture units 1174 can also be used to perform texturing operations, such as texture mapping and sampling. A Level 2 (L2) cache 1175 shared by all or a subset of the multi-core groups 1165A-1165N stores graphics data and/or instructions for multiple concurrent graphics threads. As illustrated, the L2 cache 1175 may be shared across a plurality of multi-core groups 1165A-1165N. One or more memory controllers 1167 couple the GPU 1180 to a memory 1166 which may be a system memory (e.g., DRAM) and/or a dedicated graphics memory (e.g., GDDR6 memory).

Input/output (1/0) circuitry 1163 couples the GPU 1180 to one or more 1/0 devices 1162 such as digital signal processors (DSPs), network controllers, or user input devices. An on- chip interconnect may be used to couple the 1/0 devices 1162 to the GPU 1180 and memory 1166. One or more 1/0 memory management units (IOMMUs) 1164 of the 1/0 circuitry 1163 couple the multiple sets of page tables to map virtual addresses to physical addresses in system memory 1166. The 1/0 devices 1162, CPU(s) 1161, and GPU(s) 1180 may then share the same virtual address space.

In one implementation of the IOMMU 1164, the IOMMU 1164 supports virtualization. In this case, it may manage a first set of page tables to map guest/graphics virtual addresses to guest/graphics physical addresses and a second set of page tables to map the guest/graphics physical addresses to system/host physical addresses (e.g., within system memory 1166). The base addresses of each of the first and second sets of page tables may be stored in control registers and swapped out on a context switch (e.g., so that the new context is provided with access to the relevant set of page tables). While not illustrated in FIG. 11C, each of the cores 1170, 1171, 1172 and/or multi-core groups 1165A-1165N may include translation lookaside buffers (TLBs) to cache guest virtual to guest physical translations, guest physical to host physical translations, and guest virtual to host physical translations.

The CPU(s) 1161, GPUs 1180, and 1/0 devices 1162 may be integrated on a single semiconductor chip and/or chip package. The illustrated memory 1166 may be integrated on the same chip or may be coupled to the memory controllers 1167 via an off-chip interface. In one implementation, the memory 1166 comprises GDDR6 memory which shares the same virtual address space as other physical system-level memories, although the underlying principles described herein are not limited to this specific implementation.

The tensor cores 1171 may include a plurality of execution units specifically designed to perform matrix operations, which are the fundamental compute operation used to perform deep learning operations. For example, simultaneous matrix multiplication operations may be used for neural network training and inferencing. The tensor cores 1171 may perform matrix processing using a variety of operand precisions including single precision floating-point (e.g., 32 bits), half- precision floating point (e.g., 16 bits), integer words (16 bits), bytes (8 bits), and half-bytes (4 bits). For example, a neural network implementation extracts features of each rendered scene, potentially combining details from multiple frames, to construct a high-quality final image.

In deep learning implementations, parallel matrix multiplication work may be scheduled for execution on the tensor cores 1171. The training of neural networks, in particular, requires a significant number of matrix dot product operations. In order to process an inner- product formulation of an N x N x N matrix multiply, the tensor cores 1171 may include at least N dot-product processing elements. Before the matrix multiply begins, one entire matrix is loaded into tile registers and at least one column of a second matrix is loaded each cycle for N cycles. Matrix elements may be stored at different precisions depending on the particular implementation, including 16-bit words, 8-bit bytes (e.g., INT8) and 4-bit half-bytes (e.g., INT4). Different precision modes may be specified for the tensor cores 1171 to ensure that the most efficient precision is used for different workloads (e.g., such as inferencing workloads which can tolerate quantization to bytes and half-bytes). Supported formats additionally include 64-bit floating point (FP64) and non-IEEE floating point formats such as the bfloatl6 format (e.g., Brain floating point), a 16-bit floating point format with one sign bit, eight exponent bits, and eight significand bits, of which seven are explicitly stored. One example includes support for a reduced precision tensor-float (TF32) mode, which performs computations using the range of FP32 (8- bits) and the precision of FP16 (10-bits). Reduced precision TF32 operations can be performed on FP32 inputs and produce FP32 outputs at higher performance relative to FP32 and increased precision relative to FP16. In some examples, one or more 8-bit floating point formats (FPS) are supported.

In some examples the tensor cores 1171 support a sparse mode of operation for matrices in which the vast majority of values are zero. The tensor cores 1171 include support for sparse input matrices that are encoded in a sparse matrix representation (e.g., coordinate list encoding (COO), compressed sparse row (CSR), compress sparse column (CSC), etc.). The tensor cores 1171 also include support for compressed sparse matrix representations in the event that the sparse matrix representation may be further compressed. Compressed, encoded, and/or compressed and encoded matrix data, along with associated compression and/or encoding metadata, can be read by the tensor cores 1171 and the non-zero values can be extracted. For example, for a given input matrix A, a non-zero value can be loaded from the compressed and/or encoded representation of at least a portion of matrix A. Based on the location in matrix A for the non-zero value, which may be determined from index or coordinate metadata associated with the non-zero value, a corresponding value in input matrix B may be loaded. Depending on the operation to be performed (e.g., multiply), the load of the value from input matrix B may be bypassed if the corresponding value is a zero value. In some examples, the pairings of values for certain operations, such as multiply operations, may be pre-scanned by scheduler logic and only operations between non-zero inputs are scheduled. Depending on the dimensions of matrix A and matrix B and the operation to be performed, output matrix C may be dense or sparse. Where output matrix C is sparse and depending on the configuration of the tensor cores 1171, output matrix C may be output in a compressed format, a sparse encoding, or a compressed sparse encoding.

The ray tracing cores 1172 may accelerate ray tracing operations for both real-time ray tracing and non-real-time ray tracing implementations. In particular, the ray tracing cores 1172 may include ray traversal/intersection circuitry for performing ray traversal using bounding volume hierarchies (BVHs) and identifying intersections between rays and primitives enclosed within the BVH volumes. The ray tracing cores 1172 may also include circuitry for performing depth testing and culling (e.g., using a Z buffer or similar arrangement). In one implementation, the ray tracing cores 1172 perform traversal and intersection operations in concert with the image denoising techniques described herein, at least a portion of which may be executed on the tensor cores 1171. For example, the tensor cores 1171 may implement a deep learning neural network to perform denoising of frames generated by the ray tracing cores 1172. However, the CPU(s) 1161, graphics cores 1170, and/or ray tracing cores 1172 may also implement all or a portion of the denoising and/or deep learning algorithms.

In addition, as described above, a distributed approach to denoising may be employed in which the GPU 1180 is in a computing device coupled to other computing devices over a network or high-speed interconnect. In this distributed approach, the interconnected computing devices may share neural network learning/training data to improve the speed with which the overall system learns to perform denoising for different types of image frames and/or different graphics applications.

The ray tracing cores 1172 may process all BVH traversal and/or ray-primitive intersections, saving the graphics cores 1170 from being overloaded with thousands of instructions per ray. For example, each ray tracing core 1172 includes a first set of specialized circuitry for performing bounding box tests (e.g., for traversal operations) and/or a second set of specialized circuitry for performing the ray-triangle intersection tests (e.g., intersecting rays which have been traversed). Thus, for example, the multi-core group 1165A can simply launch a ray probe, and the ray tracing cores 1172 independently perform ray traversal and intersection and return hit data (e.g., a hit, no hit, multiple hits, etc.) to the thread context. The other cores 1170, 1171 are freed to perform other graphics or compute work while the ray tracing cores 1172 perform the traversal and intersection operations.

Optionally, each ray tracing core 1172 may include a traversal unit to perform BVH testing operations and/or an intersection unit which performs ray-primitive intersection tests. The intersection unit generates a "hit", "no hit", or "multiple hit" response, which it provides to the appropriate thread. During the traversal and intersection operations, the execution resources of the other cores (e.g., graphics cores 1170 and tensor cores 1171) are freed to perform other forms

In some examples described below, a hybrid rasterization/ray tracing approach is used in which work is distributed between the graphics cores 1170 and ray tracing cores 1172.

The ray tracing cores 1172 (and/or other cores 1170, 1171) may include hardware support for a ray tracing instruction set such as Microsoft's DirectX Ray Tracing (DXR) which includes a DispatchRays command, as well as ray-generation, closest-hit, any-hit, and miss shaders, which enable the assignment of unique sets of shaders and textures for each object. Another ray tracing platform which may be supported by the ray tracing cores 1172, graphics cores 1170 and tensor cores 1171 is Vulkan API (e.g., Vulkan version 1.1.85 and later). Note, however, that the underlying principles described herein are not limited to any particular ray tracing ISA.

In general, the various cores 1172, 1171, 1170 may support a ray tracing instruction set that includes instructions/functions for one or more of ray generation, closest hit, any hit, ray- primitive intersection, per-primitive and hierarchical bounding box construction, miss, visit, and exceptions. More specifically, some examples includes ray tracing instructions to perform one or more of the following functions:
Ray Generation - Ray generation instructions may be executed for each pixel, sample, or other user-defined work assignment.
Closest Hit - A closest hit instruction may be executed to locate the closest intersection point of a ray with primitives within a scene.
Any Hit - An any hit instruction identifies multiple intersections between a ray and primitives within a scene, potentially to identify a new closest intersection point.
Intersection - An intersection instruction performs a ray-primitive intersection test and outputs a result.
Per-primitive Bounding box Construction - This instruction builds a bounding box around a given primitive or group of primitives (e.g., when building a new BVH or other acceleration data structure).
Miss - Indicates that a ray misses all geometry within a scene, or specified region of a scene.
Visit - Indicates the child volumes a ray will traverse.
Exceptions - Includes various types of exception handlers (e.g., invoked for various error conditions).

In some examples the ray tracing cores 1172 may be adapted to accelerate general- purpose compute operations that can be accelerated using computational techniques that are analogous to ray intersection tests. A compute framework can be provided that enables shader programs to be compiled into low level instructions and/or primitives that perform general- purpose compute operations via the ray tracing cores. Exemplary computational problems that can benefit from compute operations performed on the ray tracing cores 1172 include computations involving beam, wave, ray, or particle propagation within a coordinate space. Interactions associated with that propagation can be computed relative to a geometry or mesh within the coordinate space. For example, computations associated with electromagnetic signal propagation through an environment can be accelerated via the use of instructions or primitives that are executed via the ray tracing cores. Diffraction and reflection of the signals by objects in the environment can be computed as direct ray-tracing analogies.

Ray tracing cores 1172 can also be used to perform computations that are not directly analogous to ray tracing. For example, mesh projection, mesh refinement, and volume sampling computations can be accelerated using the ray tracing cores 1172. Generic coordinate space calculations, such as nearest neighbor calculations can also be performed. For example, the set of points near a given point can be discovered by defining a bounding box in the coordinate space around the point. BVH and ray probe logic within the ray tracing cores 1172 can then be used to determine the set of point intersections within the bounding box. The intersections constitute the origin point and the nearest neighbors to that origin point. Computations that are performed using the ray tracing cores 1172 can be performed in parallel with computations performed on the graphics cores 1172 and tensor cores 1171. A shader compiler can be configured to compile a compute shader or other general-purpose graphics processing program into low level primitives that can be parallelized across the graphics cores 1170, tensor cores 1171, and ray tracing cores 1172.

Building larger and larger silicon dies is challenging for a variety of reasons. As silicon dies become larger, manufacturing yields become smaller and process technology requirements for different components may diverge. On the other hand, in order to have a high-performance system, key components should be interconnected by high speed, high bandwidth, low latency interfaces. These contradicting needs pose a challenge to high performance chip development.

Examples described herein provide techniques to disaggregate an architecture of a system on a chip integrated circuit into multiple distinct chiplets that can be packaged onto a common chassis. In some examples, a graphics processing unit or parallel processor is composed packaged integrated circuit that includes distinct units of logic that can be assembled with other chiplets into a larger package. A diverse set of chiplets with different IP core logic can be assembled into a single device. Additionally the chiplets can be integrated into a base die or base chiplet using active interposer technology. The concepts described herein enable the interconnection and communication between the different forms of IP within the GPU. The development of IPs on different process may be mixed. This avoids the complexity of converging multiple IPs, especially on a large SoC with several flavors IPs, to the same process.

Enabling the use of multiple process technologies improves the time to market and provides a cost-effective way to create multiple product SKUs. For customers, this means getting products that are more tailored to their requirements in a cost effective and timely manner. Additionally, the disaggregated IPs are more amenable to being power gated independently, components that are not in use on a given workload can be powered off, reducing overall power consumption.

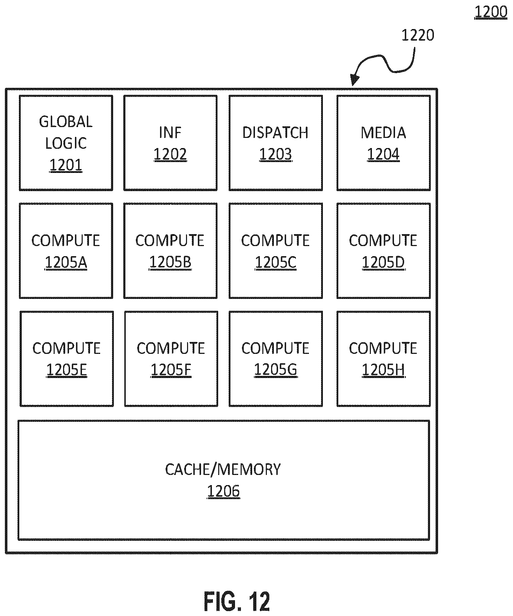

FIG. 12 shows a parallel compute system 1200, according to some examples. In some examples the parallel compute system 1200 includes a parallel processor 1220, which can be a graphics processor or compute accelerator as described herein. The parallel processor 1220 includes a global logic unit 1201, an interface 1202, a thread dispatcher 1203, a media unit 1204, a set of compute units 1205A-1205H, and a cache/memory units 1206. The global logic unit 1201, in some examples, includes global functionality for the parallel processor 1220, including device configuration registers, global schedulers, power management logic, and the like. The interface 1202 can include a front-end interface for the parallel processor 1220. The thread dispatcher 1203 can receive workloads from the interface 1202 and dispatch threads for the workload to the compute units 1205A-1205H. If the workload includes any media operations, at least a portion of those operations can be performed by the media unit 1204. The media unit can also offload some operations to the compute units 1205A-1205H. The cache/memory units 1206 can include cache memory (e.g., L3 cache) and local memory (e.g., HBM, GDDR) for the parallel processor 1220.

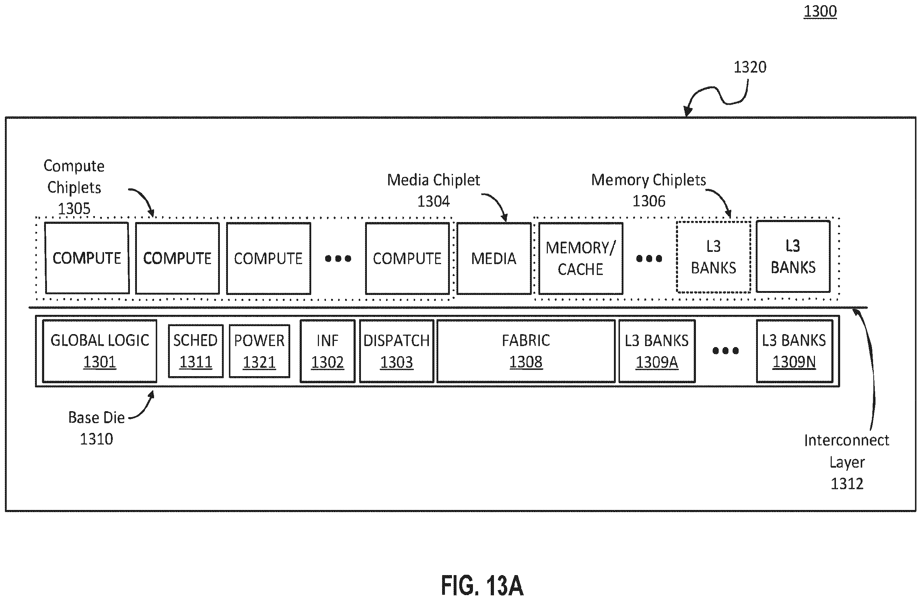

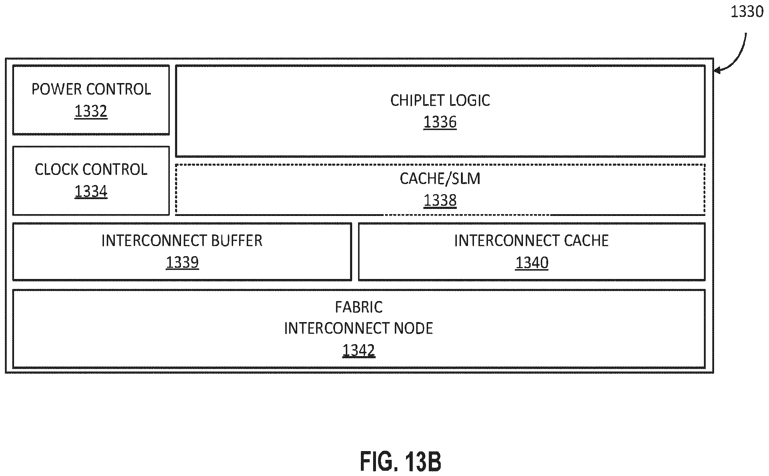

FIGS. 13A-13B illustrate a hybrid logical/physical view of a disaggregated parallel processor, according to examples described herein. FIG. 13A illustrates a disaggregated parallel compute system 1300. FIG. 13B illustrates a chiplet 1330 of the disaggregated parallel compute system 1300.

As shown in FIG. 13A, a disaggregated compute system 1300 can include a parallel processor 1320 in which the various components of the parallel processor SOC are distributed across multiple chiplets. Each chiplet can be a distinct IP core that is independently designed and include but are not limited to compute chiplets 1305, a media chiplet 1304, and memory chiplets 1306. Each chiplet can be separately manufactured using different process technologies. For example, compute chiplets 1305 may be manufactured using the smallest or most advanced process technology available at the time of fabrication, while memory chiplets 1306 or other chiplets (e.g., 1/0, networking, etc.) may be manufactured using a larger or less advanced process technologies.

The various chiplets can be bonded to a base die 1310 and configured to communicate with each other and logic within the base die 1310 via an interconnect layer 1312. In some examples, the base die 1310 can include global logic 1301, which can include scheduler 1311 and power management 1321 logic units, an interface 1302, a dispatch unit 1303, and an interconnect fabric module 1308 coupled with or integrated with one or more L3 cache banks 1309A-1309N. The interconnect fabric 1308 can be an inter-chiplet fabric that is integrated into the base die 1310. Logic chiplets can use the fabric 1308 to relay messages between the various chiplets. Additionally, L3 cache banks 1309A-1309N in the base die and/or L3 cache banks within the memory chiplets 1306 can cache data read from and transmitted to DRAM chiplets within the memory chiplets 1306 and to system memory of a host.

In some examples the global logic 1301 is a microcontroller that can execute firmware to perform scheduler 1311 and power management 1321 functionality for the parallel processor 1320. The microcontroller that executes the global logic can be tailored for the target use case of the parallel processor 1320. The scheduler 1311 can perform global scheduling operations for the parallel processor 1320. The power management 1321 functionality can be used to enable or disable individual chiplets within the parallel processor when those chiplets are not in use.

The various chiplets of the parallel processor 1320 can be designed to perform specific functionality that, in existing designs, would be integrated into a single die. A set of compute chiplets 1305 can include clusters of compute units (e.g., execution units, streaming multiprocessors, etc.) that include programmable logic to execute compute or graphics shader instructions. A media chiplet 1304 can include hardware logic to accelerate media encode and decode operations. Memory chiplets 1306 can include volatile memory (e.g., DRAM) and one or more SRAM cache memory banks (e.g., L3 banks).

As shown in FIG. 13B, each chiplet 1330 can include common components and application specific components. Chiplet logic 1336 within the chiplet 1330 can include the specific components of the chiplet, such as an array of streaming multiprocessors, compute units, or execution units described herein. The chiplet logic 1336 can couple with an optional cache or 1336. The chiplet 1330 can include a fabric interconnect node 1342 that receives commands via the inter-chiplet fabric. Commands and data received via the fabric interconnect node 1342 can be stored temporarily within an interconnect buffer 1339. Data transmitted to and received from the fabric interconnect node 1342 can be stored in an interconnect cache 1340. Power control 1332 and clock control 1334 logic can also be included within the chiplet. The power control 1332 and clock control 1334 logic can receive configuration commands via the fabric can configure dynamic voltage and frequency scaling for the chiplet 1330. In some examples, each chiplet can have an independent clock domain and power domain and can be clock gated and power gated independently of other chiplets.

At least a portion of the components within the illustrated chiplet 1330 can also be included within logic embedded within the base die 1310 of FIG. 13A. For example, logic within the base die that communicates with the fabric can include a version of the fabric interconnect node 1342. Base die logic that can be independently clock or power gated can include a version of the power control 1332 and/or clock control 1334 logic.

Thus, while various examples described herein use the term SOC to describe a device or system having a processor and associated circuitry (e.g., Input/Output ("I/0") circuitry, power delivery circuitry, memory circuitry, etc.) integrated monolithically into a single Integrated Circuit ("IC") die, or chip, the present disclosure is not limited in that respect. For example, in various examples of the present disclosure, a device or system can have one or more processors (e.g., one or more processor cores) and associated circuitry (e.g., Input/Output ("I/0") circuitry, power delivery circuitry, etc.) arranged in a disaggregated collection of discrete dies, tiles and/or chiplets (e.g., one or more discrete processor core die arranged adjacent to one or more other die such as memory die, 1/0 die, etc.). In such disaggregated devices and systems the various dies, tiles and/or chiplets can be physically and electrically coupled together by a package structure including, for example, various packaging substrates, interposers, active interposers, photonic interposers, interconnect bridges and the like. The disaggregated collection of discrete dies, tiles, and/or chiplets can also be part of a System-on-Package ("SoP")."

### Example Core Architectures - In-order and out-of-order core block diagram.

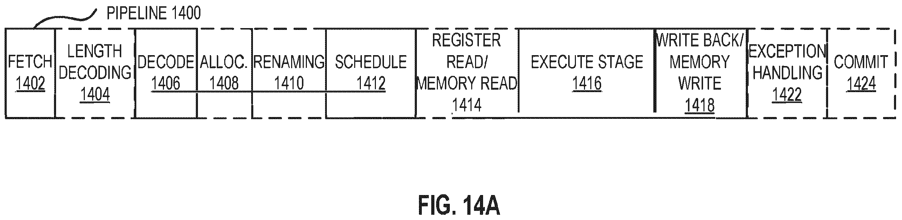

FIG. 14A is a block diagram illustrating both an example in-order pipeline and an example register renaming, out-of-order issue/execution pipeline according to examples. FIG. 14B is a block diagram illustrating both an example in-order architecture core and an example register renaming, out-of-order issue/execution architecture core to be included in a processor according to examples. The solid lined boxes in FIGS. 14A-14B illustrate the in-order pipeline renaming, out-of-order issue/execution pipeline and core. Given that the in-order aspect is a subset of the out-of-order aspect, the out-of-order aspect will be described.

In FIG. 14A, a processor pipeline 1400 includes a fetch stage 1402, an optional length decoding stage 1404, a decode stage 1406, an optional allocation (Alloc) stage 1408, an optional renaming stage 1410, a schedule (also known as a dispatch or issue) stage 1412, an optional register read/memory read stage 1414, an execute stage 1416, a write back/memory write stage 1418, an optional exception handling stage 1422, and an optional commit stage 1424. One or more operations can be performed in each of these processor pipeline stages. For example, during the fetch stage 1402, one or more instructions are fetched from instruction memory, and during the decode stage 1406, the one or more fetched instructions may be decoded, addresses (e.g., load store unit (LSU) addresses) using forwarded register ports may be generated, and branch forwarding (e.g., immediate offset or a link register (LR)) may be performed. In some examples, the decode stage 1406 and the register read/memory read stage 1414 may be combined into one pipeline stage. In some examples, during the execute stage 1416, the decoded instructions may be executed, LSU address/data pipelining to an Advanced Microcontroller Bus (AMB) interface may be performed, multiply and add operations may be performed, arithmetic operations with branch results may be performed, etc.

By way of example, the example register renammg, out-of-order issue/execution architecture core of FIG. 14B may implement the pipeline 1400 as follows: 1) the instruction fetch circuitry 1438 performs the fetch and length decoding stages 1402 and 1404; 2) the decode circuitry 1440 performs the decode stage 1406; 3) the rename/allocator unit circuitry 1452 performs the allocation stage 1408 and renaming stage 1410; 4) the scheduler(s) circuitry 1456 performs the schedule stage 1412; 5) the physical register file(s) circuitry 1458 and the memory unit circuitry 1470 perform the register read/memory read stage 1414; the execution cluster(s) 1460 perform the execute stage 1416; 6) the memory unit circuitry 1470 and the physical register file(s) circuitry 1458 perform the write back/memory write stage 1418; 7) various circuitry may be involved in the exception handling stage 1422; and 8) the retirement unit circuitry 1454 and the physical register file(s) circuitry 1458 perform the commit stage 1424.

FIG. 14B shows a processor core 1490 including front-end unit circuitry 1430 coupled to execution engine unit circuitry 1450, and both are coupled to memory unit circuitry 1470. The core 1490 may be a reduced instruction set architecture computing (RISC) core, a complex instruction set architecture computing (CISC) core, a very long instruction word (VLIW) core, or a hybrid or alternative core type. As yet another option, the core 1490 may be a special-purpose core, general purpose computing graphics processing unit (GPGPU) core, graphics core, or the like.

The front-end unit circuitry 1430 may include branch prediction circuitry 1432 coupled to instruction cache circuitry 1434, which is coupled to an instruction translation lookaside buffer (TLB) 1436, which is coupled to instruction fetch circuitry 1438, which is coupled to decode circuitry 1440. In some examples, the instruction cache circuitry 1434 is included in the memory unit circuitry 1470 rather than the front-end circuitry 1430. The decode circuitry 1440 (or decoder) may decode instructions, and generate as an output one or more micro-operations, micro- code entry points, microinstructions, other instructions, or other control signals, which are decoded from, or which otherwise reflect, or are derived from, the original instructions. The decode circuitry 1440 may further include address generation unit (AGU, not shown) circuitry. In some examples, the AGU generates an LSU address using forwarded register ports, and may further perform branch forwarding (e.g., immediate offset branch forwarding, LR register branch forwarding, etc.). The decode circuitry 1440 may be implemented using various different mechanisms. Examples of suitable mechanisms include, but are not limited to, lookup tables, hardware implementations, programmable logic arrays (PLAs), microcode read only memories (ROMs), etc. In some examples, the core 1490 includes a microcode ROM (not shown) or other medium that stores microcode for certain macroinstructions (e.g., in decode circuitry 1440 or otherwise within the front-end circuitry 1430). In some examples, the decode circuitry 1440 includes a micro-operation (micro-op) or operation cache (not shown) to hold/cache decoded operations, micro-tags, or micro-operations generated during the decode or other stages of the processor pipeline 1400. The decode circuitry 1440 may be coupled to rename/allocator unit circuitry 1452 in the execution engine circuitry 1450.

The execution engine circuitry 1450 includes the rename/allocator unit circuitry 1452 coupled to retirement unit circuitry 1454 and a set of one or more scheduler(s) circuitry 1456. The scheduler(s) circuitry 1456 represents any number of different schedulers, including reservations stations, central instruction window, etc. In some examples, the scheduler(s) circuitry 1456 can include arithmetic logic unit (ALU) scheduler/scheduling circuitry, ALU queues, address generation unit (AGU) scheduler/scheduling circuitry, AGU queues, etc. The scheduler(s) circuitry 1456 is coupled to the physical register file(s) circuitry 1458. Each of the physical register file(s) circuitry 1458 represents one or more physical register files, different ones of which store one or more different data types, such as scalar integer, scalar floating-point, packed integer, packed floating-point, vector integer, vector floating-point, status (e.g., an instruction pointer that

is the address of the next instruction to be executed), etc. In some examples, the physical register file(s) circuitry 1458 includes vector registers unit circuitry, writemask registers unit circuitry, and scalar register unit circuitry. These register units may provide architectural vector registers, vector mask registers, general-purpose registers, etc. The physical register file(s) circuitry 1458 is coupled to the retirement unit circuitry 1454 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 1454 and the physical register file(s) circuitry 1458 are coupled to the execution cluster(s) 1460. The execution cluster(s) 1460 includes a set of one or more execution unit(s) circuitry 1462 and a set of one or more memory access circuitry 1464. The execution unit(s) circuitry 1462 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). While some examples may include a number of execution units or execution unit circuitry dedicated to specific functions or sets of functions, other examples may include only one execution unit circuitry or multiple execution units/execution unit circuitry that all perform all functions. The scheduler(s) circuitry 1456, physical register file(s) circuitry 1458, and execution cluster(s) 1460 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 1464). It should also be understood that where separate pipelines are used, one or more of these pipelines may be out-of-order issue/execution and the rest in-order.

In some examples, the execution engine unit circuitry 1450 may perform load store unit (LSU) address/data pipelining to an Advanced Microcontroller Bus (AMB) interface (not shown), and address phase and writeback, data phase load, store, and branches.

The set of memory access circuitry 1464 is coupled to the memory unit circuitry 1470, which includes data TLB circuitry 1472 coupled to data cache circuitry 1474 coupled to level 2 (L2) cache circuitry 1476. In some examples, the memory access circuitry 1464 may include load unit circuitry, store address unit circuitry, and store data unit circuitry, each of which is coupled to the data TLB circuitry 1472 in the memory unit circuitry 1470. The instruction cache circuitry 1434 is further coupled to the level 2 (L2) cache circuitry 1476 in the memory unit circuitry 1470.

In some examples, the instruction cache 1434 and the data cache 1474 are combined into a single instruction and data cache (not shown) in L2 cache circuitry 1476, level 3 (L3) cache circuitry (not shown), and/or main memory. The L2 cache circuitry 1476 is coupled to one or more other levels of cache and eventually to a main memory.

The core 1490 may support one or more instructions sets (e.g., the x86 instruction set architecture (optionally with some extensions that have been added with newer versions); the MIPS instruction set architecture; the ARM instruction set architecture (optionally with optional additional extensions such as NEON)), including the instruction(s) described herein. In some examples, the core 1490 includes logic to support a packed data instruction set architecture extension (e.g., AVXI, AVX2), thereby allowing the operations used by many multimedia applications to be performed using packed data.

### Example Execution Unit(s) Circuitry.

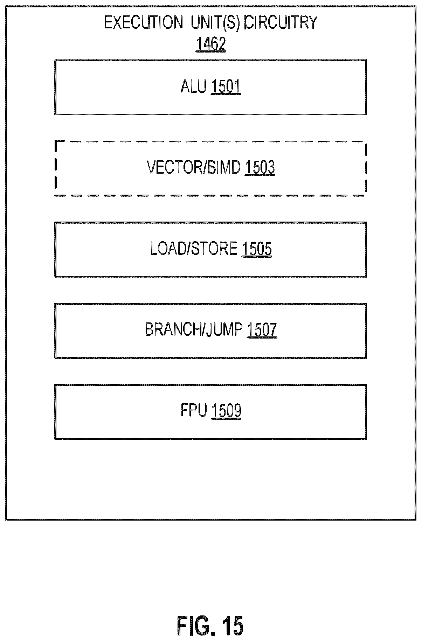

FIG. 15 illustrates examples of execution unit(s) circuitry, such as execution unit(s) circuitry 1462 of FIG. 14B. As illustrated, execution unit(s) circuity 1462 may include one or more ALU circuits 1501, optional vector/single instruction multiple data (SIMD) circuits 1503, load/store circuits 1505, branch/jump circuits 1507, and/or Floating-point unit (FPU) circuits 1509. ALU circuits 1501 perform integer arithmetic and/or Boolean operations. Vector/SIMD circuits 1503 perform vector/SIMD operations on packed data (such as SIMD/vector registers). Load/store circuits 1505 execute load and store instructions to load data from memory into registers or store from registers to memory. Load/store circuits 1505 may also generate addresses. Branch/jump circuits 1507 cause a branch or jump to a memory address depending on the instruction. FPU circuits 1509 perform floating-point arithmetic. The width of the execution unit(s) circuitry 1462 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

### Example Register Architecture.

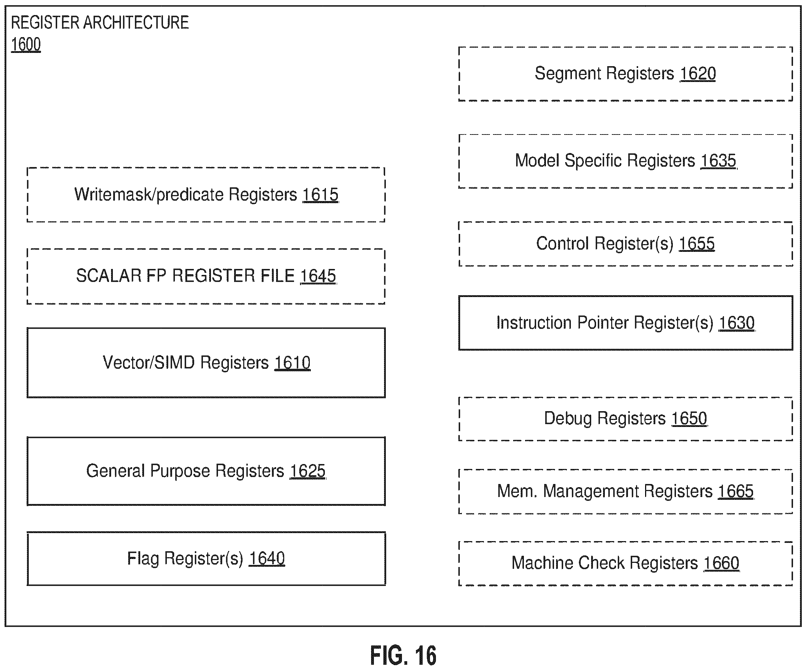

FIG. 16 is a block diagram of a register architecture 1600 according to some examples. As illustrated, the register architecture 1600 includes vector/SIMD registers 1610 that vary from 128-bit to 1,024 bits width. In some examples, the vector/SIMD registers 1610 are physically 512-bits and, depending upon the mapping, only some of the lower bits are used. For example, in some examples, the vector/SIMD registers 1610 are ZMM registers which are 512 bits: the lower 256 bits are used for YMM registers and the lower 128 bits are used for XMM registers. As such, there is an overlay of registers. In some examples, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the example.

In some examples, the register architecture 1600 includes writemask/predicate registers 1615. For example, in some examples, there are 8 writemask/predicate registers (sometimes called k0 through k7) that are each 16-bit, 32-bit, 64-bit, or 128-bit in size. Writemask/predicate registers 1615 may allow for merging (e.g., allowing any set of elements in the destination to be protected from updates during the execution of any operation) and/or zeroing (e.g., zeroing vector masks allow any set of elements in the destination to be zeroed during the execution of any operation). In some examples, each data element position in a given writemask/predicate register 1615 corresponds to a data element position of the destination. In other examples, the writemask/predicate registers 1615 are scalable and consists of a set number of enable bits for a given vector element (e.g., 8 enable bits per 64-bit vector element).

The register architecture 1600 includes a plurality of general-purpose registers 1625. These registers may be 16-bit, 32-bit, 64-bit, etc. and can be used for scalar operations. In some examples, these registers are referenced by the names RAX, RBX, RCX, RDX, RBP, RSI, RDI, RSP, and RS through R15.

In some examples, the register architecture 1600 includes scalar floating-point (FP) register file 1645 which is used for scalar floating-point operations on 32/64/80-bit floating-point data using the x87 instruction set architecture extension or as MMX registers to perform operations on 64-bit packed integer data, as well as to hold operands for some operations performed between the MMX and XMM registers.

One or more flag registers 1640 (e.g., EFLAGS, RFLAGS, etc.) store status and control information for arithmetic, compare, and system operations. For example, the one or more flag registers 1640 may store condition code information such as carry, parity, auxiliary carry, zero, sign, and overflow. In some examples, the one or more flag registers 1640 are called program status and control registers.

Segment registers 1620 contain segment points for use in accessing memory. In some examples, these registers are referenced by the names CS, DS, SS, ES, FS, and GS.

Model specific registers or machine specific registers (MSRs) 1635 control and report on processor performance. Most MSRs 1635 handle system-related functions and are not accessible to an application program. For example, MSRs may provide control for one or more of: performance-monitoring counters, debug extensions, memory type range registers, thermal and power management, instruction-specific support, and/or processor feature/mode support. Machine check registers 1660 consist of control, status, and error reporting MSRs that are used to detect and report on hardware errors. Control register(s) 1655 (e.g., CR0-CR4) determine the operating mode of a processor (e.g., processor 770, 780, 738, 715, and/or 800) and the characteristics of a currently executing task. In some examples, MSRs 1635 are a subset of control registers 1655.

One or more instruction pointer register(s) 1630 store an instruction pointer value. Debug registers 1650 control and allow for the monitoring of a processor or core's debugging operations.

Memory (mem) management registers 1665 specify the locations of data structures used in protected mode memory management. These registers may include a global descriptor table register (GDTR), interrupt descriptor table register (IDTR), task register, and a local descriptor table register (LDTR) register.

Alternative examples may use wider or narrower registers. Additionally, alternative examples may use more, less, or different register files and registers. The register architecture 1600 may, for example, be used in register file 110, or physical register file(s) circuitry 1458.

### Instruction Set Architectures.

An instruction set architecture (ISA) may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down through the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an example ADD instruction has a specific opcode and an instruction format that includes an opcode field to specify that opcode and operand fields to select operands (sourcel/destination and source2); and an occurrence of this ADD instruction in an instruction stream will have specific contents in the operand fields that select specific operands. In addition, though the description below is made in the context of x86 ISA, it is within the knowledge of one skilled in the art to apply the teachings of the present disclosure in another ISA.

### Example Instruction Formats.

Examples of the instruction(s) described herein may be embodied in different formats. Additionally, example systems, architectures, and pipelines are detailed below. Examples of the instruction(s) may be executed on such systems, architectures, and pipelines, but are not limited to those detailed.

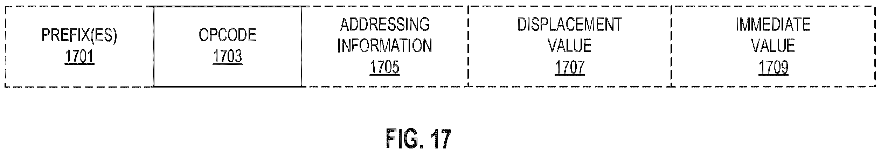

FIG. 17 illustrates examples of an instruction format. As illustrated, an instruction may include multiple components including, but not limited to, one or more fields for: one or more prefixes 1701, an opcode 1703, addressing information 1705 (e.g., register identifiers, memory addressing information, etc.), a displacement value 1707, and/or an immediate value 1709. Note that some instructions utilize some or all the fields of the format whereas others may only use the field for the opcode 1703. In some examples, the order illustrated is the order in which these fields are to be encoded, however, it should be appreciated that in other examples these fields may be encoded in a different order, combined, etc.

The prefix(es) field(s) 1701, when used, modifies an instruction. In some examples, one or more prefixes are used to repeat string instructions (e.g., 0xF0, 0xF2, 0xF3, etc.), to provide section overrides (e.g., 0x2E, 0x36, 0x3E, 0x26, 0x64, 0x65, 0x2E, 0x3E, etc.), to perform bus lock operations, and/or to change operand (e.g., 0x66) and address sizes (e.g., 0x67). Certain instructions require a mandatory prefix (e.g., 0x66, 0xF2, 0xF3, etc.). Certain of these prefixes may be considered "legacy" prefixes. Other prefixes, one or more examples of which are detailed herein, indicate, and/or provide further capability, such as specifying particular registers, etc. The other prefixes typically follow the "legacy" prefixes.

The opcode field 1703 is used to at least partially define the operation to be performed upon a decoding of the instruction. In some examples, a primary opcode encoded in the opcode field 1703 is one, two, or three bytes in length. In other examples, a primary opcode can be a different length. An additional 3-bit opcode field is sometimes encoded in another field.

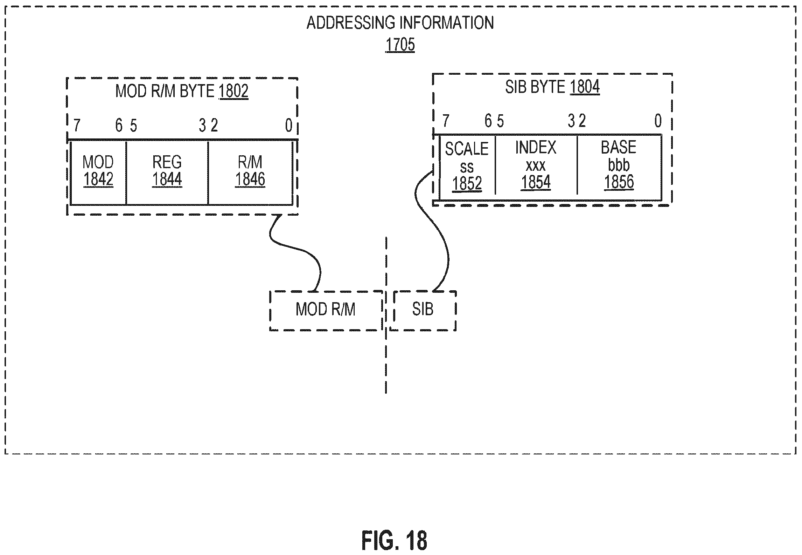

The addressing information field 1705 is used to address one or more operands of the instruction, such as a location in memory or one or more registers. FIG. 18 illustrates examples of the addressing information field 1705. In this illustration, an optional MOD RIM byte 1802 and an optional Scale, Index, Base (SIB) byte 1804 are shown. The MOD RIM byte 1802 and the SIB byte 1804 are used to encode up to two operands of an instruction, each of which is a direct register or effective memory address. Note that both of these fields are optional in that not all instructions include one or more of these fields. The MOD RIM byte 1802 includes a MOD field 1842, a register (reg) field 1844, and RIM field 1846.

The content of the MOD field 1842 distinguishes between memory access and non- memory access modes. In some examples, when the MOD field 1842 has a binary value of 11 (IIb), a register-direct addressing mode is utilized, and otherwise a register-indirect addressing mode is used.

The register field 1844 may encode either the destination register operand or a source register operand or may encode an opcode extension and not be used to encode any instruction operand. The content of register field 1844, directly or through address generation, specifies the locations of a source or destination operand (either in a register or in memory). In some examples, the register field 1844 is supplemented with an additional bit from a prefix (e.g., prefix 1701) to allow for greater addressing.

The RIM field 1846 may be used to encode an instruction operand that references a memory address or may be used to encode either the destination register operand or a source register operand. Note the RIM field 1846 may be combined with the MOD field 1842 to dictate an addressing mode in some examples.

The SIB byte 1804 includes a scale field 1852, an index field 1854, and a base field 1856 to be used in the generation of an address. The scale field 1852 indicates a scaling factor. The index field 1854 specifies an index register to use. In some examples, the index field 1854 is supplemented with an additional bit from a prefix (e.g., prefix 1701) to allow for greater addressing. The base field 1856 specifies a base register to use. In some examples, the base field 1856 is supplemented with an additional bit from a prefix (e.g., prefix 1701) to allow for greater addressing. In practice, the content of the scale field 1852 allows for the scaling of the content of the index field 1854 for memory address generation (e.g., for address generation that uses 2scate * index+ base).

Some addressing forms utilize a displacement value to generate a memory address. For example, a memory address may be generated according to 2scale *index+ base+ displacement, index*scale + displacement, rim + displacement, instruction pointer (RIPIEIP) + displacement, register + displacement, etc. The displacement may be a I-byte, 2-byte, 4-byte, etc. value. In some examples, the displacement field 1707 provides this value. Additionally, in some examples, a displacement factor usage is encoded in the MOD field of the addressing information field 1705 that indicates a compressed displacement scheme for which a displacement value is calculated and stored in the displacement field 1707.

In some examples, the immediate value field 1709 specifies an immediate value for the instruction. An immediate value may be encoded as a 1-byte value, a 2-byte value, a 4-byte value, etc.

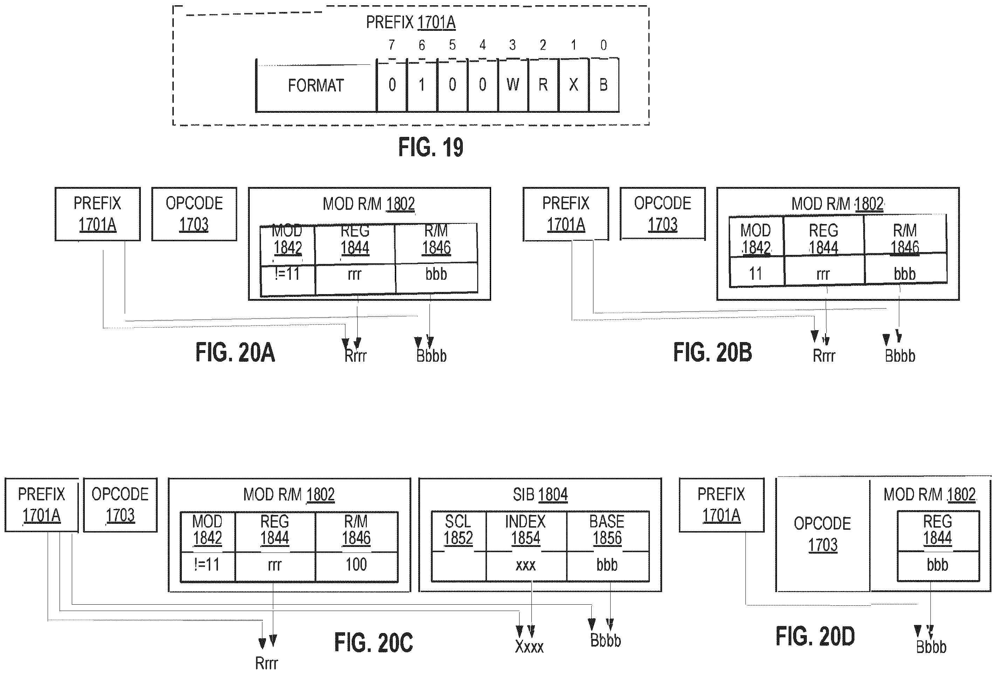

FIG. 19 illustrates examples of a first prefix 1701A. In some examples, the first prefix 1701A is an example of a REX prefix. Instructions that use this prefix may specify general purpose registers, 64-bit packed data registers (e.g., single instruction, multiple data (SIMD) registers or vector registers), and/or control registers and debug registers (e.g., CR8-CR15 and DR8-DR15).

Instructions using the first prefix 1701A may specify up to three registers using 3-bit fields depending on the format: 1) using the reg field 1844 and the RIM field 1846 of the MOD RIM byte 1802; 2) using the MOD RIM byte 1802 with the SIB byte 1804 including using the reg field 1844 and the base field 1856 and index field 1854; or 3) using the register field of an opcode.

In the first prefix 1701A, bit positions of the payload byte 7:4 are set as 0100. Bit position 3 (W) can be used to determine the operand size but may not solely determine operand width. As such, when W = 0, the operand size is determined by a code segment descriptor (CS.D) and when W = 1, the operand size is 64-bit.

Note that the addition of another bit allows for 16 (24) registers to be addressed, whereas the MOD RIM reg field 1844 and MOD RIM RIM field 1846 alone can each only address 8 registers.

In the first prefix 1701A, bit position 2 (R) may be an extension of the MOD RIM reg field 1844 and may be used to modify the MOD RIM reg field 1844 when that field encodes a general-purpose register, a 64-bit packed data register (e.g., an SSE register), or a control or debug register. R is ignored when MOD RIM byte 1802 specifies other registers or defines an extended opcode.

Bit position 1 (X) may modify the SIB byte index field 1854.

Bit position O (B) may modify the base in the MOD RIM RIM field 1846 or the SIB byte base field 1856; or it may modify the opcode register field used for accessing general purpose registers (e.g., general purpose registers 1625).

FIGS. 20A-20D illustrate examples of how the R, X, and B fields of the first prefix 1701A are used. FIG. 20A illustrates Rand B from the first prefix 1701A being used to extend the reg field 1844 and RIM field 1846 of the MOD RIM byte 1802 when the SIB byte 18 04 is not used for memory addressing. FIG. 20B illustrates Rand B from the first prefix 1701A being used to extend the reg field 1844 and R/M field 1846 of the MOD RIM byte 1802 when the SIB byte 18 04 is not used (register-register addressing). FIG. 20C illustrates R, X, and B from the first prefix 1701A being used to extend the reg field 1844 of the MOD RIM byte 1802 and the index field 1854 and base field 1856 when the SIB byte 18 04 being used for memory addressing. FIG. 20(D) illustrates B from the first prefix 1701A being used to extend the reg field 1844 of the MOD RIM byte 1802 when a register is encoded in the opcode 1703.

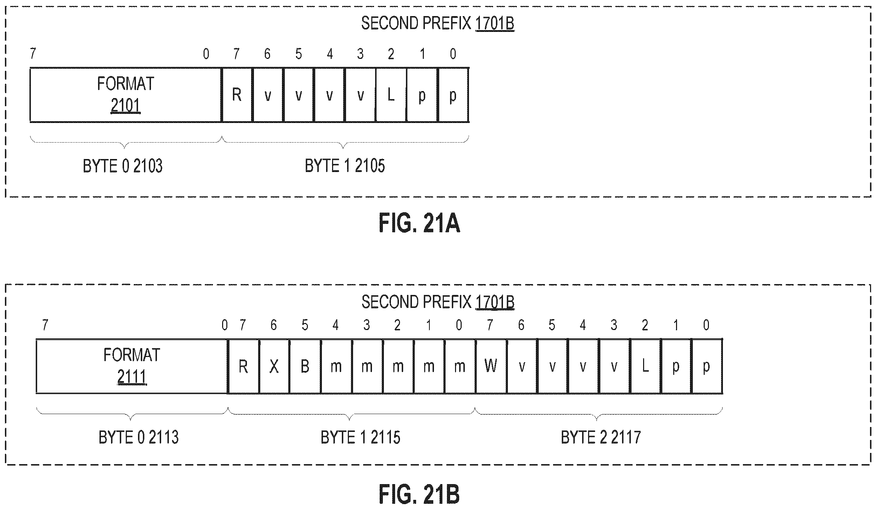

FIGS. 21A-21B illustrate examples of a second prefix 1701B. In some examples, the second prefix 170IB is an example of a VEX prefix. The second prefix 170IB encoding allows instructions to have more than two operands, and allows SIMD vector registers (e.g., vector/SIMD registers 1610) to be longer than 64-bits (e.g., 128-bit and 256-bit). The use of the second prefix 1701B provides for three-operand (or more) syntax. For example, previous two-operand instructions performed operations such as A= A+ B, which overwrites a source operand. The use of the second prefix 1701B enables operands to perform nondestructive operations such as A=B +C.

In some examples, the second prefix 1701B comes in two forms - a two-byte form and a three-byte form. The two-byte second prefix 1701B is used mainly for 128-bit, scalar, and some 256-bit instructions; while the three-byte second prefix 1701B provides a compact replacement of the first prefix 1701A and 3-byte opcode instructions.

FIG. 21A illustrates examples of a two-byte form of the second prefix 1701B. In some examples, a format field 2101 (byte O 2103) contains the value C5H. In some examples, byte 1 2105 includes an "R" value in bit[7]. This value is the complement of the "R" value of the first prefix 1701A. Bit[2] is used to dictate the length (L) of the vector (where a value of O is a scalar or 128-bit vector and a value of 1 is a 256-bit vector). Bits[I:0] provide opcode extensionality equivalent to some legacy prefixes (e.g., 00 = no prefix, 01 = 66H, 10 = F3H, and 11 = F2H). Bits[6:3] shown as vvvv may be used to: 1) encode the first source register operand, specified in inverted (Is complement) form and valid for instructions with 2 or more source operands; 2) encode the destination register operand, specified in ls complement form for certain vector shifts; or 3) not encode any operand, the field is reserved and should contain a certain value, such as 11llb.

Instructions that use this prefix may use the MOD RIM RIM field 1846 to encode the instruction operand that references a memory address or encode either the destination register.

Instructions that use this prefix may use the MOD RIM reg field 1844 to encode either the destination register operand or a source register operand, or to be treated as an opcode extension and not used to encode any instruction operand.

For instruction syntax that support four operands, vvvv, the MOD RIM RIM field 1846 and the MOD RIM reg field 1844 encode three of the four operands. Bits[7:4] of the immediate value field 1709 are then used to encode the third source register operand.

FIG. 21B illustrates examples ofa three-byte form of the second prefix 1701B. In some examples, a format field 2111 (byte 0 2113) contains the value C4H. Byte 1 2115 includes in bits[7:5] "R," "X," and "B" which are the complements of the same values of the first prefix 1701A. Bits[4:0] of byte 1 2115 (shown as mmmmm) include content to encode, as need, one or more implied leading opcode bytes. For example, 00001 implies a 0FH leading opcode, 00010 implies a 0F38H leading opcode, 00011 implies a 0F3AH leading opcode, etc.

Bit[7] of byte 2 2117 is used similar to W of the first prefix 1701A including helping to determine promotable operand sizes. Bit[2] is used to dictate the length (L) of the vector (where a value of 0 is a scalar or 128-bit vector and a value of 1 is a 256-bit vector). Bits[I:0] provide opcode extensionality equivalent to some legacy prefixes (e.g., 00 = no prefix, 01 = 66H, 10 = F3H, and 11 = F2H). Bits[6:3], shown as vvvv, may be used to: 1) encode the first source register operand, specified in inverted (ls complement) form and valid for instructions with 2 or more source operands; 2) encode the destination register operand, specified in Is complement form for certain vector shifts; or 3) not encode any operand, the field is reserved and should contain a certain value, such as 11llb.

Instructions that use this prefix may use the MOD RIM RIM field 1846 to encode the instruction operand that references a memory address or encode either the destination register operand or a source register operand.

Instructions that use this prefix may use the MOD RIM reg field 1844 to encode either the destination register operand or a source register operand, or to be treated as an opcode extension and not used to encode any instruction operand.

For instruction syntax that support four operands, vvvv, the MOD RIM RIM field 1846, and the MOD RIM reg field 1844 encode three of the four operands. Bits[7:4] of the immediate value field 1709 are then used to encode the third source register operand.

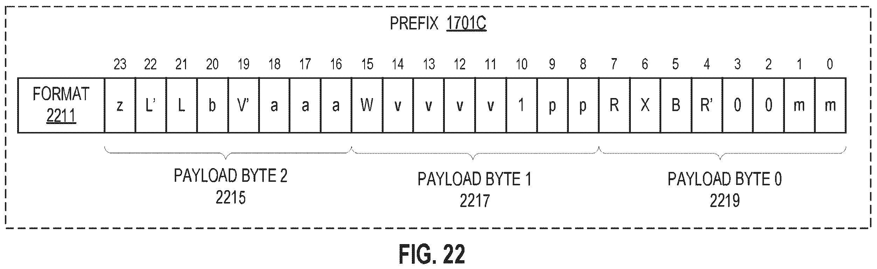

FIG. 22 illustrates examples of a third prefix 1701C. In some examples, the third prefix 1701C is an example of an EVEX prefix. The third prefix 1701C is a four-byte prefix.

The third prefix 1701C can encode 32 vector registers (e.g., 128-bit, 256-bit, and 512- bit registers) in 64-bit mode. In some examples, instructions that utilize a writemask/opmask (see discussion of registers in a previous figure, such as FIG. 16) or predication utilize this prefix. Opmask register allow for conditional processing or selection control. Opmask instructions, whose source/destination operands are opmask registers and treat the content of an opmask register as a single value, are encoded using the second prefix 1701B.

The third prefix 1701C may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the third prefix 1701C is a format field 2211 that has a value, in some examples, of 62H. Subsequent bytes are referred to as payload bytes 2215-2219 and collectively form a 24-bit value of P[23:0] providing specific capability in the form of one or more fields (detailed herein).

In some examples, P[I:0] of payload byte 2219 are identical to the low two mm bits. P[3:2] are reserved in some examples. Bit P[4] (R') allows access to the high 16 vector register set when combined with P[7] and the MOD RIM reg field 1844. P[6] can also provide access to a high 16 vector register when SIB-type addressing is not needed. P[7:5] consist of R, X, and B which are operand specifier modifier bits for vector register, general purpose register, memory addressing and allow access to the next set of 8 registers beyond the low 8 registers when combined with the MOD RIM register field 1844 and MOD RIM RIM field 1846. P[9:8] provide opcode extensionality equivalent to some legacy prefixes (e.g., 00 = no prefix, 01 = 66H, 10 = F3H, and 11 = F2H). P[IO] in some examples is a fixed value of 1. P[I4:11], shown as vvvv, may be used to: 1) encode the first source register operand, specified in inverted (Is complement) form and valid for instructions with 2 or more source operands; 2) encode the destination register operand, specified in Is complement form for certain vector shifts; or 3) not encode any operand, the field is reserved and should contain a certain value, such as 111lb.

P[I5] is similar to W of the first prefix 1701A and second prefix 1701B and may serve as an opcode extension bit or operand size promotion.

P[18:16] specify the index of a register in the opmask (writemask) registers (e.g., writemask/predicate registers 1615). In some examples, the specific value aaa = 000 has a special behavior implying no opmask is used for the particular instruction (this may be implemented in a variety of ways including the use of an opmask hardwired to all ones or hardware that bypasses the masking hardware). When merging, vector masks allow any set of elements in the destination to be protected from updates during the execution of any operation (specified by the base operation and the augmentation operation); in other some examples, preserving the old value of each element of the destination where the corresponding mask bit has a 0. In contrast, when zeroing vector masks allow any set of elements in the destination to be zeroed during the execution of any operation (specified by the base operation and the augmentation operation); in some examples, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While examples are described in which the opmask field's content selects one of a number of opmask registers that contains the opmask to be used (and thus the opmask field's content indirectly identifies that masking to be performed), alternative examples instead or additional allow the mask write field's content to directly specify the masking to be performed.

P[I9] can be combined with P[I4:11] to encode a second source vector register in a non-destructive source syntax which can access an upper 16 vector registers using P[I9]. P[20] encodes multiple functionalities, which differs across different classes of instructions and can affect the meaning of the vector length/ rounding control specifier field (P[22:21]). P[23] indicates support for merging-writemasking (e.g., when set to 0) or support for zeroing and merging-writemasking (e.g., when set to 1).

Example examples of encoding of registers in instructions using the third prefix 1701C are detailed in the following tables.

**Table 4: 32-Register Support in 64-bit Mode**

| | 4 | 3 | [2:0] | REG. TYPE | COMMON USAGES |
|---|---|---|---|---|---|
| REG | R' | R | MOD *RIM* reg | GPR, Vector | Destination or Source |
| vwv | V' | vvvv | | GPR, Vector | 2nd Source or Destination |
| RM | X | B | MOD *RIM RIM* | GPR, Vector | 1st Source or Destination |
| BASE | 0 | B | MOD *RIM RIM* | GPR | Memory addressing |
| INDEX | 0 | X | SIB.index | GPR | Memory addressing |
| VIDX | V' | X | SIB.index | Vector | VSIB memory addressing |

**Table 5: Encoding Register Specifiers in 32-bit Mode**

| | [2:0] | | REG. TYPE | COMMON USAGES |
|---|---|---|---|---|
| REG | | MOD R/Mreg | GPR, Vector | Destination or Source |
| vvvv | vvvv | | GPR, Vector | 2^{nd} Source or Destination |
| RM | | MOD *RIM RIM* | GPR, Vector | 1^{st} Source or Destination |
| BASE | | MOD *RIM RIM* | GPR | Memory addressing |
| INDEX | | SIB.index | GPR | Memory addressing |
| VIDX | | SIB.index | Vector | VSIB memory addressing |

**Table 6: Opmask Register Specifier Encoding**

| | [2:0] | REG. TYPE | COMMON USAGES |
|---|---|---|---|
| REG | MODR/MReg | k0-k7 | Source |
| vwv | Vvvv | k0-k7 | 2^{nd} Source |
| RM | MOD *RIM RIM* | k0-k7 | 1^{st} Source |
| {kl} | Aaa | k0-k7 | Opmask |

### Graphics Execution Units

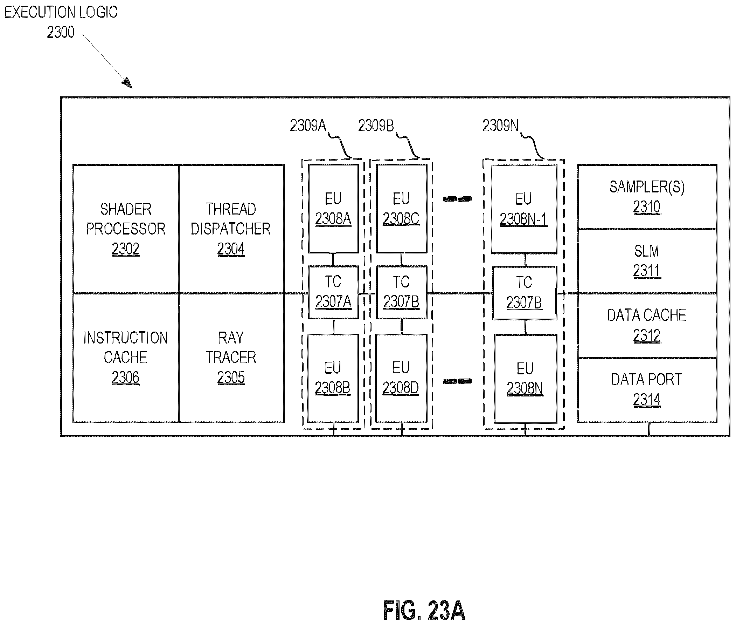

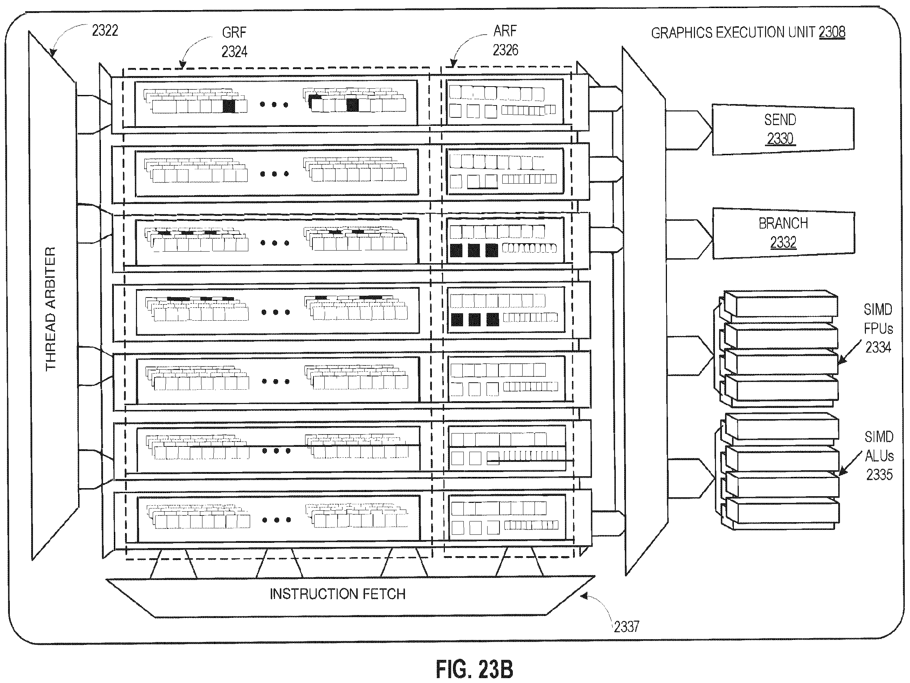

FIGS. 23A-23B illustrate thread execution logic 2300 including an array of processing elements employed in a graphics processor core according to examples described herein any other figure herein can operate or function in any manner similar to that described elsewhere herein, but are not limited to such. FIG. 23A is representative of an execution unit within a general-purpose graphics processor, while FIG. 23B is representative of an execution unit that may be used within a compute accelerator.

As illustrated in FIG. 23A, in some examples thread execution logic 2300 includes a shader processor 2302, a thread dispatcher 2304, instruction cache 2306, a scalable execution unit array including a plurality of execution units 2308A-2308N, a sampler 2310, shared local memory 2311, a data cache 2312, and a data port 2314. In some examples the scalable execution unit array can dynamically scale by enabling or disabling one or more execution units (e.g., any of execution units 2308A, 2308B, 2308C, 2308D, through 2308N-1 and 2308N) based on the computational requirements of a workload. In some examples the included components are interconnected via an interconnect fabric that links to each of the components. In some examples, thread execution logic 2300 includes one or more connections to memory, such as system memory or cache memory, through one or more of instruction cache 2306, data port 2314, sampler 2310, and execution units 2308A-2308N. In some examples, each execution unit (e.g. 2308A) is a stand- alone programmable general-purpose computational unit that is capable of executing multiple simultaneous hardware threads while processing multiple data elements in parallel for each thread. In various examples, the array of execution units 2308A-2308N is scalable to include any number individual execution units.

In some examples, the execution units 2308A-2308N are primarily used to execute shader programs. A shader processor 2302 can process the various shader programs and dispatch execution threads associated with the shader programs via a thread dispatcher 2304. In some examples the thread dispatcher includes logic to arbitrate thread initiation requests from the graphics and media pipelines and instantiate the requested threads on one or more execution unit in the execution units 2308A-2308N. For example, a geometry pipeline can dispatch vertex, tessellation, or geometry shaders to the thread execution logic for processing. In some examples, thread dispatcher 2304 can also process runtime thread spawning requests from the executing shader programs.

In some examples, the execution units 2308A-2308N support an instruction set that includes native support for many standard 3D graphics shader instructions, such that shader programs from graphics libraries (e.g., Direct 3D and OpenGL) are executed with a minimal translation. The execution units support vertex and geometry processing (e.g., vertex programs, geometry programs, vertex shaders), pixel processing (e.g., pixel shaders, fragment shaders) and 2308A-2308N is capable of multi-issue single instruction multiple data (SIMD) execution and multi-threaded operation enables an efficient execution environment in the face of higher latency memory accesses. Each hardware thread within each execution unit has a dedicated high- bandwidth register file and associated independent thread-state. Execution is multi-issue per clock to pipelines capable of integer, single and double precision floating point operations, SIMD branch capability, logical operations, transcendental operations, and other miscellaneous operations. While waiting for data from memory or one of the shared functions, dependency logic within the execution units 2308A-2308N causes a waiting thread to sleep until the requested data has been returned. While the waiting thread is sleeping, hardware resources may be devoted to processing other threads. For example, during a delay associated with a vertex shader operation, an execution unit can perform operations for a pixel shader, fragment shader, or another type of shader program, including a different vertex shader. Various examples can apply to use execution by use of Single Instruction Multiple Thread (SIMT) as an alternate to use of SIMD or in addition to use of SIMD. Reference to a SIMD core or operation can apply also to SIMT or apply to SIMD in combination with SIMT.

Each execution unit in execution units 2308A-2308N operates on arrays of data elements. The number of data elements is the "execution size," or the number of channels for the instruction. An execution channel is a logical unit of execution for data element access, masking, and flow control within instructions. The number of channels may be independent of the number of physical Arithmetic Logic Units (ALUs) or Floating Point Units (FPUs) for a particular graphics processor. In some examples, execution units 2308A-2308N support integer and floating-point data types.

The execution unit instruction set includes SIMD instructions. The var10us data elements can be stored as a packed data type in a register and the execution unit will process the various elements based on the data size of the elements. For example, when operating on a 256- bit wide vector, the 256 bits of the vector are stored in a register and the execution unit operates on the vector as four separate 64-bit packed data elements (Quad-Word (QW) size data elements), eight separate 32-bit packed data elements (Double Word (DW) size data elements), sixteen separate 16-bit packed data elements (Word (W) size data elements), or thirty-two separate 8-bit data elements (byte (B) size data elements). However, different vector widths and register sizes are possible.

In some examples one or more execution units can be combined into a fused execution unit 2309A-2309N having thread control logic (2307A-2307N) that is common to the fused EUs to execute a separate SIMD hardware thread. The number of EUs in a fused EU group can vary according to examples. Additionally, various SIMD widths can be performed per-EU, including but not limited to SIMD8, SIMD16, and SIMD32. Each fused graphics execution unit 2309A- 2309N includes at least two execution units. For example, fused execution unit 2309A includes a first EU 2308A, second EU 2308B, and thread control logic 2307A that is common to the first EU 2308A and the second EU 2308B. The thread control logic 2307A controls threads executed on the fused graphics execution unit 2309A, allowing each EU within the fused execution units 2309A-2309N to execute using a common instruction pointer register.

One or more internal instruction caches (e.g., 2306) are included in the thread execution logic 2300 to cache thread instructions for the execution units. In some examples, one or more data caches (e.g., 2312) are included to cache thread data during thread execution. Threads executing on the execution logic 2300 can also store explicitly managed data in the shared local memory 2311. In some examples, a sampler 2310 is included to provide texture sampling for 3D operations and media sampling for media operations. In some examples, sampler 2310 includes specialized texture or media sampling functionality to process texture or media data during the sampling process before providing the sampled data to an execution unit.

During execution, the graphics and media pipelines send thread initiation requests to thread execution logic 2300 via thread spawning and dispatch logic. Once a group of geometric objects has been processed and rasterized into pixel data, pixel processor logic (e.g., pixel shader logic, fragment shader logic, etc.) within the shader processor 2302 is invoked to further compute output information and cause results to be written to output surfaces (e.g., color buffers, depth buffers, stencil buffers, etc.). In some examples, a pixel shader or fragment shader calculates the values of the various vertex attributes that are to be interpolated across the rasterized object. In some examples, pixel processor logic within the shader processor 2302 then executes an application programming interface (API)-supplied pixel or fragment shader program. To execute the shader program, the shader processor 2302 dispatches threads to an execution unit (e.g., 2308A) via thread dispatcher 2304. In some examples, shader processor 2302 uses texture sampling logic in the sampler 2310 to access texture data in texture maps stored in memory. Arithmetic operations on the texture data and the input geometry data compute pixel color data for each geometric fragment, or discards one or more pixels from further processing.

In some examples, the data port 2314 provides a memory access mechanism for the thread execution logic 2300 to output processed data to memory for further processing on a graphics processor output pipeline. In some examples, the data port 2314 includes or couples to one or more cache memories (e.g., data cache 2312) to cache data for memory access via the data port.

In some examples, the execution logic 2300 can also include a ray tracer 2305 that can provide ray tracing acceleration functionality. The ray tracer 2305 can support a ray tracing instruction set that includes instructions/functions for ray generation.

FIG. 23B illustrates exemplary internal details of an execution unit 2308, according to examples. A graphics execution unit 2308 can include an instruction fetch unit 2337, a general register file array (GRF) 2324, an architectural register file array (ARF) 2326, a thread arbiter 2322, a send unit 2330, a branch unit 2332, a set of SIMD floating point units (FPUs) 2334, and in some examples a set of dedicated integer SIMD ALUs 2335. The GRF 2324 and ARF 2326 includes the set of general register files and architecture register files associated with each simultaneous hardware thread that may be active in the graphics execution unit 2308. In some examples, per thread architectural state is maintained in the ARF 2326, while data used during thread execution is stored in the GRF 2324. The execution state of each thread, including the instruction pointers for each thread, can be held in thread-specific registers in the ARF 2326.

In some examples the graphics execution unit 2308 has an architecture that is a combination of Simultaneous Multi-Threading (SMT) and fine-grained Interleaved Multi- Threading (IMT). The architecture has a modular configuration that can be fine-tuned at design time based on a target number of simultaneous threads and number of registers per execution unit, where execution unit resources are divided across logic used to execute multiple simultaneous threads. The number of logical threads that may be executed by the graphics execution unit 2308 is not limited to the number of hardware threads, and multiple logical threads can be assigned to each hardware thread.

In some examples, the graphics execution unit 2308 can co-issue multiple instructions, which may each be different instructions. The thread arbiter 2322 of the graphics execution unit thread 2308 can dispatch the instructions to one of the send unit 2330, branch unit 2332, or SIMD FPU(s) 2334 for execution. Each execution thread can access 128 general-purpose registers within the GRF 2324, where each register can store 32 bytes, accessible as a SIMD 8-element vector of 32-bit data elements. In some examples, each execution unit thread has access to 4 Kbytes within the GRF 2324, although examples are not so limited, and greater or fewer register resources may be provided in other examples. In some examples the graphics execution unit 2308 is partitioned into seven hardware threads that can independently perform computational operations, although the number of threads per execution unit can also vary according to examples seven threads may access 4 Kbytes, the GRF 2324 can store a total of 28 Kbytes. Where 16 threads may access 4Kbytes, the GRF 2324 can store a total of 64Kbytes. Flexible addressing modes can permit registers to be addressed together to build effectively wider registers or to represent strided rectangular block data structures.

In some examples, memory operations, sampler operations, and other longer-latency system communications are dispatched via "send" instructions that are executed by the message passing send unit 2330. In some examples, branch instructions are dispatched to a dedicated branch unit 2332 to facilitate SIMD divergence and eventual convergence.

In some examples the graphics execution unit 2308 includes one or more SIMD floating point units (FPU(s)) 2334 to perform floating-point operations. In some examples, the FPU(s) 2334 also support integer computation. In some examples the FPU(s) 2334 can SIMD execute up to M number of 32-bit floating-point (or integer) operations, or SIMD execute up to 2M 16-bit integer or 16-bit floating-point operations. In some examples, at least one of the FPU(s) provides extended math capability to support high-throughput transcendental math functions and double precision 64-bit floating-point. In some examples, a set of 8-bit integer SIMD ALUs 2335 are also present, and may be specifically optimized to perform operations associated with machine learning computations.

In some examples, arrays of multiple instances of the graphics execution unit 2308 can be instantiated in a graphics sub-core grouping (e.g., a sub-slice). For scalability, product architects can choose the exact number of execution units per sub-core grouping. In some examples the execution unit 2308 can execute instructions across a plurality of execution channels. In a further example, each thread executed on the graphics execution unit 2308 is executed on a different channel.

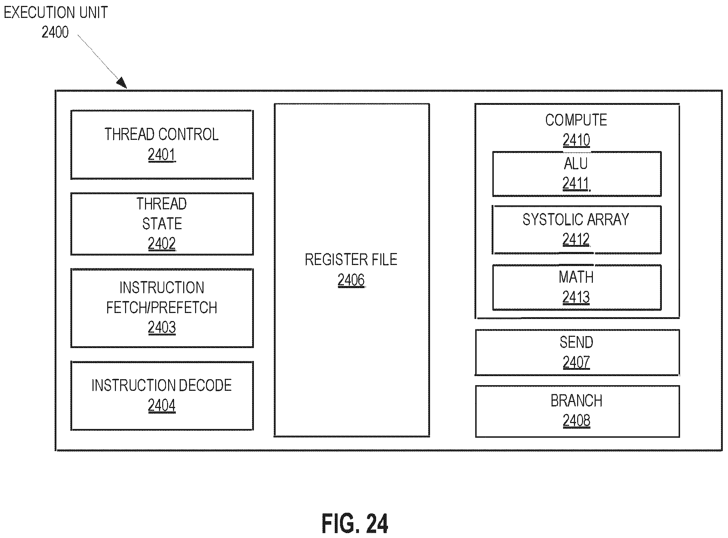

FIG. 24 illustrates an additional execution unit 2400, according to an example. In some examples, the execution unit 2400 includes a thread control unit 2401, a thread state unit 2402, an instruction fetch/prefetch unit 2403, and an instruction decode unit 2404. The execution unit 2400 additionally includes a register file 2406 that stores registers that can be assigned to hardware threads within the execution unit. The execution unit 2400 additionally includes a send unit 2407 and a branch unit 2408. In some examples, the send unit 2407 and branch unit 2408 can operate similarly as the send unit 2330 and a branch unit 2332 of the graphics execution unit 2308 of FIG. 23B.

The execution unit 2400 also includes a compute unit 2410 that includes multiple different types of functional units. In some examples the compute unit 2410 includes an ALU unit 2411 that includes an array of arithmetic logic units. The ALU unit 2411 can be configured to perform 64-bit, 32-bit, and 16-bit integer and floating point operations. Integer and floating point operations may be performed simultaneously. The compute unit 2410 can also include a systolic array 2412, and a math unit 2413. The systolic array 2412 includes a W wide and D deep network of data processing units that can be used to perform vector or other data-parallel operations in a systolic manner. In some examples the systolic array 2412 can be configured to perform matrix operations, such as matrix dot product operations. In some examples the systolic array 2412 support 16-bit floating point operations, as well as 8-bit and 4-bit integer operations. In some examples the systolic array 2412 can be configured to accelerate machine learning operations. In such examples, the systolic array 2412 can be configured with support for the bfloat 16-bit floating point format. In some examples, a math unit 2413 can be included to perform a specific subset of mathematical operations in an efficient and lower-power manner than ALU unit 2411. The math unit 2413 can include a variant of math logic that may be found in shared function logic of a graphics processing engine provided by other examples (e.g., math logic of a shared function logic). In some examples the math unit 2413 can be configured to perform 32-bit and 64-bit floating point operations.

The thread control unit 2401 includes logic to control the execution of threads within the execution unit. The thread control unit 2401 can include thread arbitration logic to start, stop, and preempt execution of threads within the execution unit 2400. The thread state unit 2402 can be used to store thread state for threads assigned to execute on the execution unit 2400. Storing the thread state within the execution unit 2400 enables the rapid pre-emption of threads when those threads become blocked or idle. The instruction fetch/prefetch unit 2403 can fetch instructions from an instruction cache of higher level execution logic (e.g., instruction cache 2306 as in FIG. 23A). The instruction fetch/prefetch unit 2403 can also issue prefetch requests for instructions to be loaded into the instruction cache based on an analysis of currently executing threads. The instruction decode unit 2404 can be used to decode instructions to be executed by the compute units. In some examples, the instruction decode unit 2404 can be used as a secondary decoder to decode complex instructions into constituent micro-operations.

The execution unit 2400 additionally includes a register file 2406 that can be used by hardware threads executing on the execution unit 2400. Registers in the register file 2406 can be divided across the logic used to execute multiple simultaneous threads within the compute unit 2410 of the execution unit 2400. The number of logical threads that may be executed by the graphics execution unit 2400 is not limited to the number of hardware threads, and multiple logical threads can be assigned to each hardware thread. The size of the register file 2406 can vary across examples based on the number of supported hardware threads. In some examples, register renaming may be used to dynamically allocate registers to hardware threads.

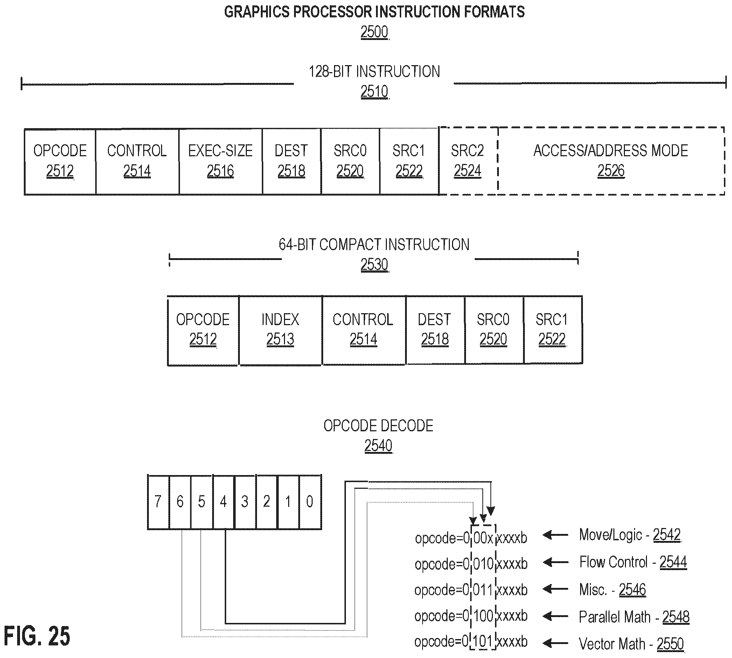

FIG. 25 is a block diagram illustrating a graphics processor instruction formats 2500 according to some examples. In one or more example, the graphics processor execution units support an instruction set having instructions in multiple formats. The solid lined boxes illustrate the components that are generally included in an execution unit instruction, while the dashed lines include components that are optional or that are only included in a sub-set of the instructions. In some examples, instruction format 2500 described and illustrated are macro-instructions, in that they are instructions supplied to the execution unit, as opposed to micro-operations resulting from instruction decode once the instruction is processed.

In some examples, the graphics processor execution units natively support instructions in a 128-bit instruction format 2510. A 64-bit compacted instruction format 2530 is available for some instructions based on the selected instruction, instruction options, and number of operands. The native 128-bit instruction format 2510 provides access to all instruction options, while some options and operations are restricted in the 64-bit format 2530. The native instructions available in the 64-bit format 2530 vary by example. In some examples, the instruction is compacted in part using a set of index values in an index field 2513. The execution unit hardware references a set of compaction tables based on the index values and uses the compaction table outputs to reconstruct a native instruction in the 128-bit instruction format 2510. Other sizes and formats of instruction can be used.

For each format, instruction opcode 2512 defines the operation that the execution unit is to perform. The execution units execute each instruction in parallel across the multiple data elements of each operand. For example, in response to an add instruction the execution unit performs a simultaneous add operation across each color channel representing a texture element or picture element. By default, the execution unit performs each instruction across all data channels of the operands. In some examples, instruction control field 2514 enables control over certain execution options, such as channels selection (e.g., predication) and data channel order (e.g., swizzle). For instructions in the 128-bit instruction format 2510 an exec-size field 2516 limits the number of data channels that will be executed in parallel. In some examples, exec-size field 2516 is not available for use in the 64-bit compact instruction format 2530.

Some execution unit instructions have up to three operands including two source operands, src0 2520, srcl 2522, and one destination 2518. In some examples, the execution units support dual destination instructions, where one of the destinations is implied. Data manipulation determines the number of source operands. An instruction's last source operand can be an immediate (e.g., hard-coded) value passed with the instruction.

In some examples, the 128-bit instruction format 2510 includes an access/address mode field 2526 specifying, for example, whether direct register addressing mode or indirect register addressing mode is used. When direct register addressing mode is used, the register address of one or more operands is directly provided by bits in the instruction.

In some examples, the 128-bit instruction format 2510 includes an access/address mode field 2526, which specifies an address mode and/or an access mode for the instruction. In some examples the access mode is used to define a data access alignment for the instruction. Some examples support access modes including a 16-byte aligned access mode and a 1-byte aligned access mode, where the byte alignment of the access mode determines the access alignment of the instruction operands. For example, when in a first mode, the instruction may use byte-aligned addressing for source and destination operands and when in a second mode, the instruction may use 16-byte-aligned addressing for all source and destination operands.

In some examples, the address mode portion of the access/address mode field 2526 determines whether the instruction is to use direct or indirect addressing. When direct register addressing mode is used bits in the instruction directly provide the register address of one or more operands. When indirect register addressing mode is used, the register address of one or more operands may be computed based on an address register value and an address immediate field in the instruction.

In some examples instructions are grouped based on opcode 2512 bit-fields to simplify Opcode decode 2540. For an 8-bit opcode, bits 4, 5, and 6 allow the execution unit to determine the type of opcode. The precise opcode grouping shown is merely an example. In some examples, a move and logic opcode group 2542 includes data movement and logic instructions (e.g., move (mov), compare (cmp)). In some examples, move and logic group 2542 shares the five most significant bits (MSB), where move (mov) instructions are in the form of 0000xxxxb and logic instructions are in the form of 000lxxxxb. A flow control instruction group 2544 (e.g., call, jump (jmp)) includes instructions in the form of 00IOxxxxb (e.g., 0x20). A miscellaneous instruction group 2546 includes a mix of instructions, including synchronization instructions (e.g., wait, send) in the form of 00llxxxxb (e.g., 0x30). A parallel math instruction group 2548 includes component-wise arithmetic instructions (e.g., add, multiply (mul)) in the form of 0lO0xxxxb (e.g., 0x40). The parallel math group 2548 performs the arithmetic operations in parallel across data channels. The vector math group 2550 includes arithmetic instructions (e.g., dp4) in the form of calculations on vector operands. The illustrated opcode decode 2540, in some examples, can be used to determine which portion of an execution unit will be used to execute a decoded instruction. For example, some instructions may be designated as systolic instructions that will be performed by a systolic array. Other instructions, such as ray-tracing instructions (not shown) can be routed to a ray-tracing core or ray-tracing logic within a slice or partition of execution logic.

### Graphics Pipeline

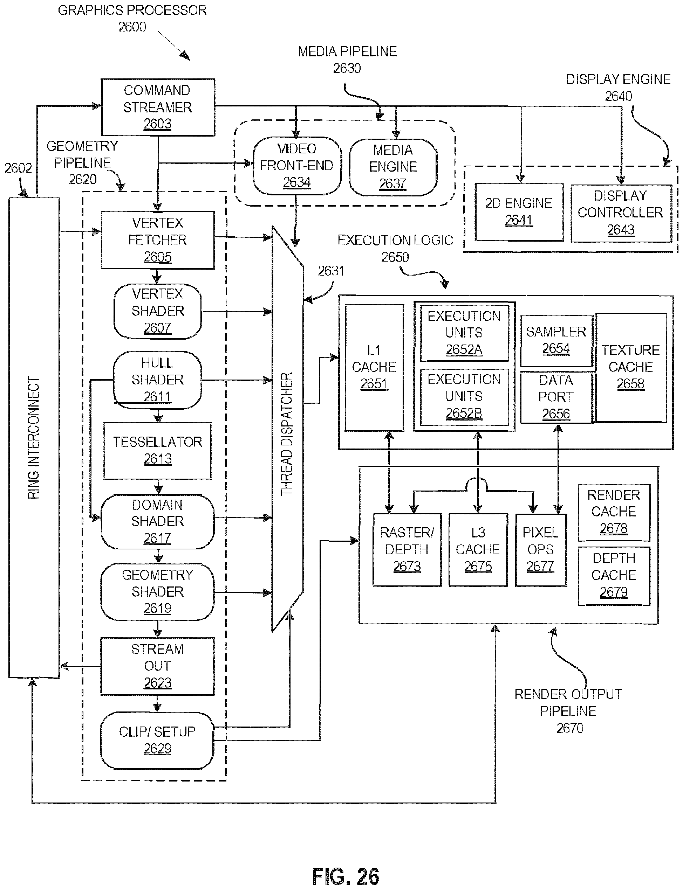

FIG. 26 is a block diagram of another example of a graphics processor 2600. Elements of FIG. 26 having the same reference numbers (or names) as the elements of any other figure herein can operate or function in any manner similar to that described elsewhere herein, but are not limited to such.

In some examples, graphics processor 2600 includes a geometry pipeline 2620, a media pipeline 2630, a display engine 2640, thread execution logic 2650, and a render output pipeline 2670. In some examples, graphics processor 2600 is a graphics processor within a multi-core processing system that includes one or more general-purpose processing cores. The graphics processor is controlled by register writes to one or more control registers (not shown) or via commands issued to graphics processor 2600 via a ring interconnect 2602. In some examples, ring interconnect 2602 couples graphics processor 2600 to other processing components, such as other graphics processors or general-purpose processors. Commands from ring interconnect 2602 are interpreted by a command streamer 2603, which supplies instructions to individual components of the geometry pipeline 2620 or the media pipeline 2630.

In some examples, command streamer 2603 directs the operation of a vertex fetcher 2605 that reads vertex data from memory and executes vertex-processing commands provided by command streamer 2603. In some examples, vertex fetcher 2605 provides vertex data to a vertex shader 2607, which performs coordinate space transformation and lighting operations to each vertex. In some examples, vertex fetcher 2605 and vertex shader 2607 execute vertex-processing instructions by dispatching execution threads to execution units 2652A-2652B via a thread dispatcher 2631.

In some examples, execution units 2652A-2652B are an array of vector processors having an instruction set for performing graphics and media operations. In some examples, execution units 2652A-2652B have an attached Ll cache 2651 that is specific for each array or shared between the arrays. The cache can be configured as a data cache, an instruction cache, or a single cache that is partitioned to contain data and instructions in different partitions.

In some examples, geometry pipeline 2620 includes tessellation components to perform hardware-accelerated tessellation of 3D objects. In some examples, a programmable hull shader 2611 configures the tessellation operations. A programmable domain shader 2617 provides back- end evaluation of tessellation output. A tessellator 2613 operates at the direction of hull shader 2611 and contains special purpose logic to generate a set of detailed geometric objects based on a coarse geometric model that is provided as input to geometry pipeline 2620. In some examples, if tessellation is not used, tessellation components (e.g., hull shader 2611, tessellator 2613, and domain shader 2617) can be bypassed.

In some examples, complete geometric objects can be processed by a geometry shader 2619 via one or more threads dispatched to execution units 2652A-2652B, or can proceed directly to the clipper 2629. In some examples, the geometry shader operates on entire geometric objects, rather than vertices or patches of vertices as in previous stages of the graphics pipeline. If the tessellation is disabled the geometry shader 2619 receives input from the vertex shader 2607. In some examples, geometry shader 2619 is programmable by a geometry shader program to perform geometry tessellation if the tessellation units are disabled.

Before rasterization, a clipper 2629 processes vertex data. The clipper 2629 may be a fixed function clipper or a programmable clipper having clipping and geometry shader functions. In some examples, a rasterizer and depth test component 2673 in the render output pipeline 2670 dispatches pixel shaders to convert the geometric objects into per pixel representations. In some examples, pixel shader logic is included in thread execution logic 2650. In some examples, an application can bypass the rasterizer and depth test component 2673 and access un-rasterized vertex data via a stream out unit 2623.

The graphics processor 2600 has an interconnect bus, interconnect fabric, or some other interconnect mechanism that allows data and message passing amongst the major components of the processor. In some examples, execution units 2652A-2652B and associated logic units (e.g., Ll cache 2651, sampler 2654, texture cache 2658, etc.) interconnect via a data port 2656 to perform memory access and communicate with render output pipeline components of the processor. In some examples, sampler 2654, caches 2651, 2658 and execution units 2652A- 2652B each have separate memory access paths. In some examples the texture cache 2658 can also be configured as a sampler cache.

In some examples, render output pipeline 2670 contains a rasterizer and depth test component 2673 that converts vertex-based objects into an associated pixel-based representation. In some examples, the rasterizer logic includes a windower/masker unit to perform fixed function available in some examples. A pixel operations component 2677 performs pixel-based operations on the data, though in some instances, pixel operations associated with 2D operations (e.g. bit block image transfers with blending) are performed by the 2D engine 2641, or substituted at display time by the display controller 2643 using overlay display planes. In some examples, a shared L3 cache 2675 is available to all graphics components, allowing the sharing of data without the use of main system memory.

In some examples, graphics processor media pipeline 2630 includes a media engine 2637 and a video front-end 2634. In some examples, video front-end 2634 receives pipeline commands from the command streamer 2603. In some examples, media pipeline 2630 includes a separate command streamer. In some examples, video front-end 2634 processes media commands before sending the command to the media engine 2637. In some examples, media engine 2637 includes thread spawning functionality to spawn threads for dispatch to thread execution logic 2650 via thread dispatcher 2631.

In some examples, graphics processor 2600 includes a display engine 2640. In some examples, display engine 2640 is external to processor 2600 and couples with the graphics processor via the ring interconnect 2602, or some other interconnect bus or fabric. In some examples, display engine 2640 includes a 2D engine 2641 and a display controller 2643. In some examples, display engine 2640 contains special purpose logic capable of operating independently of the 3D pipeline. In some examples, display controller 2643 couples with a display device (not shown), which may be a system integrated display device, as in a laptop computer, or an external display device attached via a display device connector.

In some examples, the geometry pipeline 2620 and media pipeline 2630 are configurable to perform operations based on multiple graphics and media programming interfaces and are not specific to any one application programming interface (API). In some examples, driver software for the graphics processor translates API calls that are specific to a particular graphics or media library into commands that can be processed by the graphics processor. In some examples, support is provided for the Open Graphics Library (OpenGL), Open Computing Language (OpenCL), and/or Vulkan graphics and compute API, all from the Khronos Group. In some examples, support may also be provided for the Direct3D library from the Microsoft Corporation. In some examples, a combination of these libraries may be supported. Support may also be provided for the Open Source Computer Vision Library (OpenCV). A future API with a compatible 3D pipeline would also be supported if a mapping can be made from the pipeline of the future API to the pipeline of the graphics processor.

### Graphics Pipeline Programming

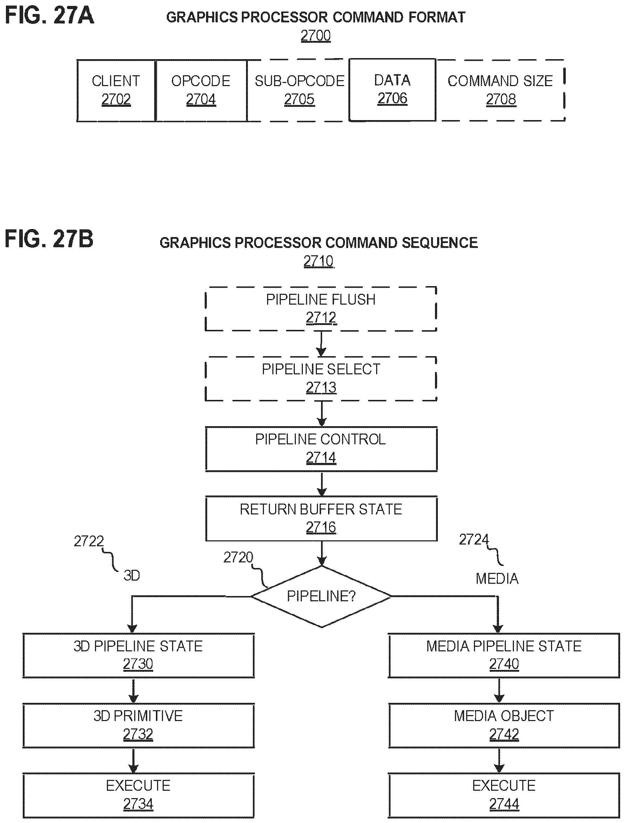

FIG. 27A is a block diagram illustrating a graphics processor command format 2700 according to some examples. FIG. 27B is a block diagram illustrating a graphics processor command sequence 2710 according to an example. The solid lined boxes in FIG. 27A illustrate the components that are generally included in a graphics command while the dashed lines include components that are optional or that are only included in a sub-set of the graphics commands. The exemplary graphics processor command format 2700 of FIG. 27A includes data fields to identify a client 2702, a command operation code (opcode) 2704, and data 2706 for the command. A sub- opcode 2705 and a command size 2708 are also included in some commands.

In some examples, client 2702 specifies the client unit of the graphics device that processes the command data. In some examples, a graphics processor command parser examines the client field of each command to condition the further processing of the command and route the command data to the appropriate client unit. In some examples, the graphics processor client units include a memory interface unit, a render unit, a 2D unit, a 3D unit, and a media unit. Each client unit has a corresponding processing pipeline that processes the commands. Once the command is received by the client unit, the client unit reads the opcode 2704 and, if present, sub- opcode 2705 to determine the operation to perform. The client unit performs the command using information in data field 2706. For some commands, an explicit command size 2708 is expected to specify the size of the command. In some examples, the command parser automatically determines the size of at least some of the commands based on the command opcode. In some examples commands are aligned via multiples of a double word. Other command formats can be used.

The flow diagram in FIG. 27B illustrates an exemplary graphics processor command sequence 2710. In some examples, software or firmware of a data processing system that features an example of a graphics processor uses a version of the command sequence shown to set up, execute, and terminate a set of graphics operations. A sample command sequence is shown and described for purposes of example only as examples are not limited to these specific commands or to this command sequence. Moreover, the commands may be issued as batch of commands in a command sequence, such that the graphics processor will process the sequence of commands in at least partially concurrence.

In some examples, the graphics processor command sequence 2710 may begin with a pipeline flush command 2712 to cause any active graphics pipeline to complete the currently pending commands for the pipeline. In some examples, the 3D pipeline 2722 and the media graphics pipeline to complete any pending commands. In response to a pipeline flush, the command parser for the graphics processor will pause command processing until the active drawing engines complete pending operations and the relevant read caches are invalidated. Optionally, any data in the render cache that is marked 'dirty' can be flushed to memory. In some examples, pipeline flush command 2712 can be used for pipeline synchronization or before placing the graphics processor into a low power state.

In some examples, a pipeline select command 2713 is used when a command sequence requires the graphics processor to explicitly switch between pipelines. In some examples, a pipeline select command 2713 is required only once within an execution context before issuing pipeline commands unless the context is to issue commands for both pipelines. In some examples, a pipeline flush command 2712 is required immediately before a pipeline switch via the pipeline select command 2713.

In some examples, a pipeline control command 2714 configures a graphics pipeline for operation and is used to program the 3D pipeline 2722 and the media pipeline 2724. In some examples, pipeline control command 2714 configures the pipeline state for the active pipeline. In some examples, the pipeline control command 2714 is used for pipeline synchronization and to clear data from one or more cache memories within the active pipeline before processing a batch of commands.

In some examples, return buffer state commands 2716 are used to configure a set of return buffers for the respective pipelines to write data. Some pipeline operations require the allocation, selection, or configuration of one or more return buffers into which the operations write intermediate data during processing. In some examples, the graphics processor also uses one or more return buffers to store output data and to perform cross thread communication. In some examples, the return buffer state 2716 includes selecting the size and number of return buffers to use for a set of pipeline operations.

The remaining commands in the command sequence differ based on the active pipeline for operations. Based on a pipeline determination 2720, the command sequence is tailored to the 3D pipeline 2722 beginning with the 3D pipeline state 2730 or the media pipeline 2724 beginning at the media pipeline state 2740.

The commands to configure the 3D pipeline state 2730 include 3D state setting commands for vertex buffer state, vertex element state, constant color state, depth buffer state, and other state variables that are to be configured before 3D primitive commands are processed. The values of these commands are determined at least in part based on the particular 3D API in use. In some examples, 3D pipeline state 2730 commands are also able to selectively disable or bypass certain pipeline elements if those elements will not be used.

In some examples, 3D primitive 2732 command is used to submit 3D primitives to be processed by the 3D pipeline. Commands and associated parameters that are passed to the graphics processor via the 3D primitive 2732 command are forwarded to the vertex fetch function in the graphics pipeline. The vertex fetch function uses the 3D primitive 2732 command data to generate vertex data structures. The vertex data structures are stored in one or more return buffers. In some examples, 3D primitive 2732 command is used to perform vertex operations on 3D primitives via vertex shaders. To process vertex shaders, 3D pipeline 2722 dispatches shader execution threads to graphics processor execution units.

In some examples, 3D pipeline 2722 is triggered via an execute 2734 command or event. In some examples, a register write triggers command execution. In some examples execution is triggered via a 'go' or 'kick' command in the command sequence. In some examples, command execution is triggered using a pipeline synchronization command to flush the command sequence through the graphics pipeline. The 3D pipeline will perform geometry processing for the 3D primitives. Once operations are complete, the resulting geometric objects are rasterized and the pixel engine colors the resulting pixels. Additional commands to control pixel shading and pixel back end operations may also be included for those operations.

In some examples, the graphics processor command sequence 2710 follows the media pipeline 2724 path when performing media operations. In general, the specific use and manner of programming for the media pipeline 2724 depends on the media or compute operations to be performed. Specific media decode operations may be offloaded to the media pipeline during media decode. In some examples, the media pipeline can also be bypassed and media decode can be performed in whole or in part using resources provided by one or more general-purpose processing cores. In some examples, the media pipeline also includes elements for general- purpose graphics processor unit (GPGPU) operations, where the graphics processor is used to perform SIMD vector operations using computational shader programs that are not explicitly related to the rendering of graphics primitives.

In some examples, media pipeline 2724 is configured in a similar manner as the 3D pipeline 2722. A set of commands to configure the media pipeline state 2740 are dispatched or placed into a command queue before the media object commands 2742. In some examples, commands for the media pipeline state 2740 include data to configure the media pipeline elements that will be used to process the media objects. This includes data to configure the video decode examples, commands for the media pipeline state 2740 also support the use of one or more pointers to "indirect" state elements that contain a batch of state settings.

In some examples, media object commands 2742 supply pointers to media objects for processing by the media pipeline. The media objects include memory buffers containing video data to be processed. In some examples, all media pipeline states must be valid before issuing a media object command 2742. Once the pipeline state is configured and media object commands 2742 are queued, the media pipeline 2724 is triggered via an execute command 2744 or an equivalent execute event (e.g., register write). Output from media pipeline 2724 may then be post processed by operations provided by the 3D pipeline 2722 or the media pipeline 2724. In some examples, GPGPU operations are configured and executed in a similar manner as media operations.

Program code may be applied to input information to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), a field programmable gate array (FPGA), a microprocessor, or any combination thereof.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Examples of the mechanisms disclosed herein may be implemented in hardware, software, firmware, or a combination of such implementation approaches. Examples may be implemented as computer programs or program code executing on programmable systems comprising at least one processor, a storage system (including volatile and non-volatile memory and/or storage elements), at least one input device, and at least one output device.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memones (SRAMs), erasable programmable read-only memones (EPROMs), flash memories, electrically erasable programmable read-only memories (EEPROMs), phase change memory (PCM), magnetic or optical cards, or any other type of media suitable for storing electronic instructions.

Accordingly, examples also include non-transitory, tangible machine-readable media containing instructions or containing design data, such as Hardware Description Language (HDL), which defines structures, circuits, apparatuses, processors and/or system features described herein. Such examples may also be referred to as program products.

### Emulation (including binary translation, code morphing, etc.).

In some cases, an instruction converter may be used to convert an instruction from a source instruction set architecture to a target instruction set architecture. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

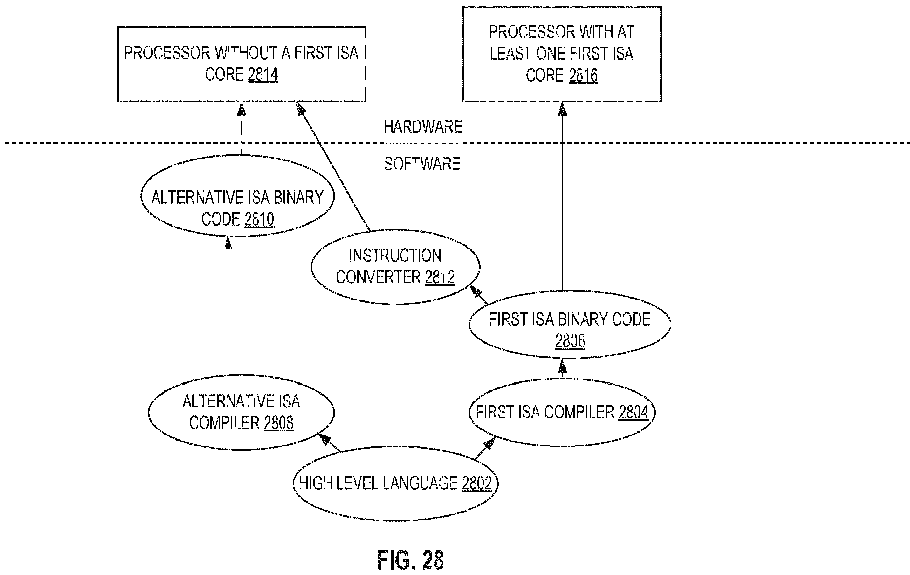

FIG. 28 is a block diagram illustrating the use of a software instruction converter to convert binary instructions in a source ISA to binary instructions in a target ISA according to examples. In the illustrated example, the instruction converter is a software instruction converter, although alternatively the instruction converter may be implemented in software, firmware, hardware, or various combinations thereof. FIG. 28 shows a program in a high-level language 2802 may be compiled using a first ISA compiler 2804 to generate first ISA binary code 2806 that may be natively executed by a processor with at least one first ISA core 2816. The processor with at least one first ISA core 2816 represents any processor that can perform substantially the same functions as an Intel^{®} processor with at least one first ISA core by compatibly executing or otherwise processing (1) a substantial portion of the first ISA or (2) object code versions of applications or other software targeted to run on an Intel processor with at least one first ISA core, in order to achieve substantially the same result as a processor with at least one first ISA core. The first ISA compiler 2804 represents a compiler that is operable to generate first ISA binary code 2806 (e.g., object code) that can, with or without additional linkage processing, be executed on the processor with at least one first ISA core 2816. Similarly, FIG. 28 shows the program in the high-level language 2802 may be compiled using an alternative ISA compiler 2808 to generate alternative ISA binary code 2810 that may be natively executed by a processor without a first ISA code that may be natively executed by the processor without a first ISA core 2814. This converted code is not necessarily to be the same as the alternative ISA binary code 2810; however, the converted code will accomplish the general operation and be made up of instructions from the alternative ISA. Thus, the instruction converter 2812 represents software, firmware, hardware, or a combination thereof that, through emulation, simulation or any other process, allows a processor or other electronic device that does not have a first ISA processor or core to execute the first ISA binary code 2806.

### IP Core Implementations

One or more aspects of at least some examples may be implemented by representative code stored on a machine-readable medium which represents and/or defines logic within an integrated circuit such as a processor. For example, the machine-readable medium may include instructions which represent various logic within the processor. When read by a machine, the instructions may cause the machine to fabricate the logic to perform the techniques described herein. Such representations, known as "IP cores," are reusable units of logic for an integrated circuit that may be stored on a tangible, machine-readable medium as a hardware model that describes the structure of the integrated circuit. The hardware model may be supplied to various customers or manufacturing facilities, which load the hardware model on fabrication machines that manufacture the integrated circuit. The integrated circuit may be fabricated such that the circuit performs operations described in association with any of the examples described herein.

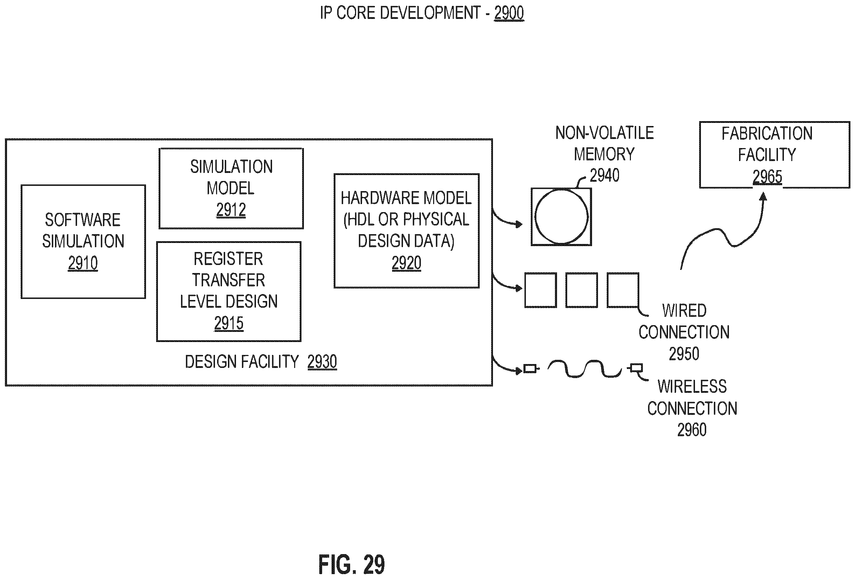

FIG. 29 is a block diagram illustrating an IP core development system 2900 that may be used to manufacture an integrated circuit to perform operations according to some examples. The IP core development system 2900 may be used to generate modular, re-usable designs that can be incorporated into a larger design or used to construct an entire integrated circuit (e.g., an SOC integrated circuit). A design facility 2930 can generate a software simulation 2910 of an IP core design in a high-level programming language (e.g., CIC++). The software simulation 2910 can be used to design, test, and verify the behavior of the IP core using a simulation model 2912. The simulation model 2912 may include functional, behavioral, and/or timing simulations. A register transfer level (RTL) design 2915 can then be created or synthesized from the simulation model 2912. The RTL design 2915 is an abstraction of the behavior of the integrated circuit that models the flow of digital signals between hardware registers, including the associated logic performed using the modeled digital signals. In addition to an RTL design 2915, lower-level designs at the logic level or transistor level may also be created, designed, or synthesized. Thus, the particular details of the initial design and simulation may vary.

The RTL design 2915 or equivalent may be further synthesized by the design facility into a hardware model 2920, which may be in a hardware description language (HDL), or some other representation of physical design data. The HDL may be further simulated or tested to verify the IP core design. The IP core design can be stored for delivery to a 3rd party fabrication facility 2965 using non-volatile memory 2940 (e.g., hard disk, flash memory, or any non-volatile storage medium). Alternatively, the IP core design may be transmitted (e.g., via the Internet) over a wired connection 2950 or wireless connection 2960. The fabrication facility 2965 may then fabricate an integrated circuit that is based at least in part on the IP core design. The fabricated integrated circuit can be configured to perform operations in accordance with at least some examples described herein.

### APPARATUS AND METHOD FOR ATTACK-RESISTANT ENCRYPTION AND DECRYPTION

Fault-injection attacks (FIA) are becoming increasingly prevalent as a practical physical attack on secret keys used by AES hardware accelerators.. FIAs reduces the key search space by employing differential fault analysis (DFA) of ciphertexts corrupted by laser/voltage/clock pulses. FIA on conventional AES-256 engines typically targets the last 3 round iterations to induce bitflips on intermediate circuit nodes using directed laser pulses and voltage/clock glitches. Faults injected during upstream AES rounds (0-10) rapidly cascade out due to the avalanche effect of AES encryption, rendering first-order DFA impractical for realistic attacks. However, faults injected during round13, round12, and round11 computations propagate down the AES logic cone probabilistically corrupting 1, 4 and 16 ciphertext bytes, respectively. Current AES attack countermeasures for fault-injection incurs significant silicon and power overheads, limiting the adoption of such countermeasures.

Some existing solutions employ arithmetic and parity checkers in the AES datapath, to check for faults injected to non-linear and linear portions of AES, respectively. Arithmetic checkers employ composite-field arithmetic-based inverse checker to detect faults injected to non-linear inverse blocks. Parity checkers detect errors injected to linear portions such as key addition, MixColumns and affine transformations. This solution, however, incurs a significant (e.g., 40%) increase in area and power. It is also a significant challenge for design teams to converge their memory encryption engines (e.g., multi-key total memory encryption (MKTME) engines) with significant pressure on area and power budgets. Furthermore, the current solution is not scalable with future memory technologies, where memory bandwidth requirements are constantly on the rise.

The last three rounds of AES operations are targeted by FIA attacks to induce bitflips that produce exploitable faulty patterns in the output ciphertext. To provide fault-injection resistance, embodiments of the invention perform redundant time-interleaved computations on any-one, any-two, or all-three of the last three rounds using the round datapath and compare the outputs of the "regular" and "redundant" rounds. Any mismatch between redundant and regular round outputs indicates the presence of a fault. Specifically, faults injected during upstream AES rounds (0-10) rapidly cascade out due to the avalanche effect of AES encryption, rendering first-order DFA impractical for realistic attacks. However, faults injected during round13, round12, and round11 computations propagate down the AES logic cone probabilistically corrupting 1, 4 and 16 ciphertext bytes, respectively. Differential cryptanalysis of faulty ciphertexts obtained by laser FIA on an unprotected AES engine can significantly contract the key search space down to 1-40b, motivating FIA countermeasures that protect the last 3 vulnerable AES rounds.

Embodiments of the invention include AES cryptography circuitry which uses different isomorphic GF(2⁴)² composite-fields while implementing the AES datapath to maximize the spatial and temporal differences between regular and redundant computations. The difference in AES arithmetic coupled with randomized byte flows, generates different fault profiles for faults injected on identical nodes. Redundant AES round computations and reconfigurable byte dataflows enable real-time detection of corrupted ciphertext with fault coverage up to 99.98%, while limiting area overhead to 12%. This reduces the area/power overhead by 3.3x compared to existing solutions.

### A. Example Processor Implementations

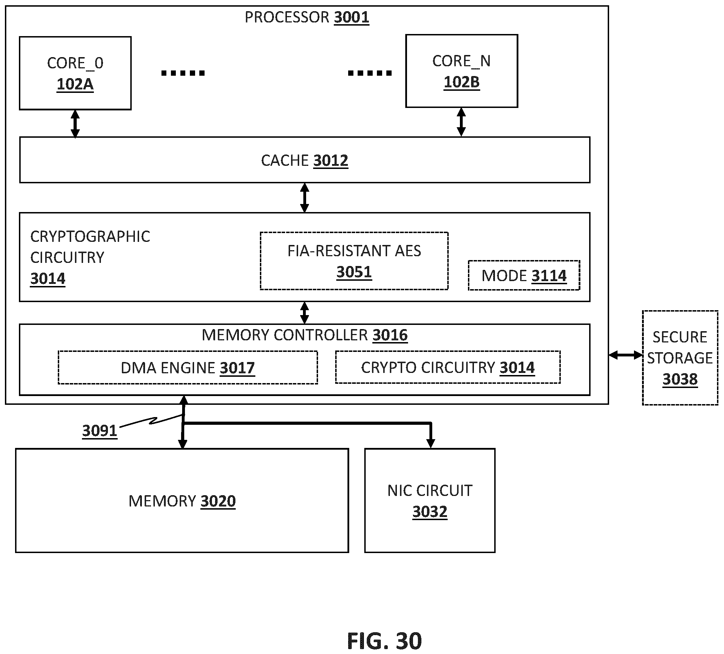

**FIG. 30** illustrates an example processor 3001 on which embodiments of the invention may be implemented. A plurality of cores 102A-B each include instruction fetch circuitry, instruction decode circuitry, execution circuitry, and the various registers 110 described above with respect to core 102 illustrated in **FIG. 1****.** The plurality of cores 102A-B are coupled to a shared cache 3012 (e.g., an L3 cache) and are coupled to a memory 3020 via a memory controller 3016.

In certain examples, memory access (e.g., store or load) requests for memory 3020 generated by a core 102A-B (e.g., by an address generation unit (AGU) of the execution circuitry) may be serviced by a cache within a core 102A-B and/or the shared cache 3012. Additionally, or alternatively (e.g., for a cache miss), memory access requests may be serviced by memory 3020. The memory access requests generated by cores 102A-B may be load or store operations. A load operation reads data from the memory 3020 into a cache of a processor, e.g., cache 3012 and a store operation writes data to the memory 3020. In certain examples, memory controller circuitry 3016 includes a direct memory access engine 3017, e.g., for performing accesses into memory 3020. Memory may be a volatile memory (e.g., DRAM), non-volatile or persistent memory (e.g., non-volatile DIMM or non-volatile DRAM) and/or secondary (e.g., external) memory (e.g., not directly accessible by a processor). In certain examples, memory controller circuitry 3017 is to perform compression and/or decompression of data, e.g., where multiple bits/bytes that are repeated in a data line are removed to allow for compression according to that repetition (e.g., repetition based compression/decompression). Various other compression techniques may also be used.

In some implementations, the cryptographic circuitry 3014 may receive a memory access request from one or more of its cores 102A-B (e.g., a load or store operation) which includes an address, and data to be encrypted (e.g., plaintext). The memory access request may be associated with a corresponding key (e.g., a key assigned to the hardware/software entity responsible for the request). For a store operation, the cryptographic circuitry 3014 may encrypt the data using the key to generate ciphertext (encrypted data) which is then stored to the memory 3020. For a load operation, the cryptographic circuitry 3014 may read a requested ciphertext from a specified address in the memory 3020 and decrypt the ciphertext using the key (or a different key).

In some embodiments, cryptographic circuitry 3014 is used by the plurality of cores 102A-B to perform cryptographic operations as described herein. While illustrated in **FIG. 30** adjacent to the memory controller 3016 (e.g., coupled between the memory controller 3014 and the shared cache 3012 and/or between levels of the cache hierarchy), the cryptographic circuitry 2014 may be integral to the memory controller 3016 or distributed across locations within the memory/cache subsystem.

A mode register 3114 may be programmed with mode control bits to configure the corresponding cryptographic circuitry 3014 in a particular operational mode. In some embodiments, programming of the mode register 3114 is limited to trusted software components. Thus, an application or virtual machine must request configuration changes via the virtual machine monitor and/or via firmware executed on a security processor. In some embodiments, the mode register 3114 may configure FIA-resistant AES circuitry 3051 to operate in accordance with the FIA-resistant AES techniques described herein (e.g., using different isomorphic GF(2⁴)² composite-fields).

By way of an overview, the Advanced Encryption Standard (AES) is based on the Rijndael block cipher, where a plurality of transformations are executed using a secret key (e.g., a MKTME key) to transform intelligible data (plaintext) into an encrypted format (cipher text). The transformations may include key expansion, substitution box (S-box), ShiftRows, MixColumns, and AddRoundKey. The key size indicates the number of transformation rounds that encrypt the plaintext. Each round consists of several processing steps, including one that depends on the encryption key. A plurality of reverse rounds are applied to transform the ciphertext back into plaintext using the encryption key.

Data blocks of 128 bits may be generated using cipher keys with lengths of 128, 192 and 256 bits. An AES implementation transforms the plaintext into cipher text or cipher text into plaintext in 10, 12, or 14 consecutive rounds, with the number of rounds dependent on the length of the key.

In key expansion operations, a key schedule transforms the keys of size 128, 192 or 256 bits into 10, 12, or 14 round keys of 128 bits, respectively. A round key may be a value derived from the cipher key which is used to process the plaintext data in rounds as 128-bit blocks. For example, a round key may be added to the encryption state (e.g., in an AES state register) using an Exclusive-OR (XOR) operation.

An S-box includes a non-linear byte substitution table to process the state. For example, in a 128-bit (16 bytes) input to the round, each byte is replaced by another byte according to the byte substitution table. The S-box is computationally intensive and the most computationally complex transformation of AES. In a ShiftRows transformation, the last three rows of the state are cyclically shifted by different offsets (e.g., row 0 by zero bytes, row 1 by one byte, row 2 by two bytes, and row 3 by three bytes). In a MixColumns operation, the columns of the state are mixed independently of the other columns to produce new columns. The MixColumns function takes four bytes as input and outputs four bytes, where each input byte affects all four output bytes. For example, the state may be a 16-byte state that is divided into four columns. For example, the state input to the MixColumns operation may be the output of the S-box operation that has been shifted according to the Shiftrows transformation.

In certain examples, additional processor components, such as network interface circuitry (NIC) 3032, may rely on cryptographic circuitry 3014 to encrypt and decrypt data in memory 3020. Alternatively, or additionally, these components may include their own integrated cryptographic circuitry for performing at least some of the FIA-resistant AES operations described herein.

### B. Embodiments of FIA-Resistant EAS Circuitry and Methods

The FIA-resistant AES circuitry 3051 may be implemented in hardware (e.g., as an ASIC) or with a combination of hardware and firmware/software. For example, certain functional components described below may be implemented in circuitry while others may be implemented by executing firmware/software (e.g., executed by a controller integral to the AES circuitry 3051).

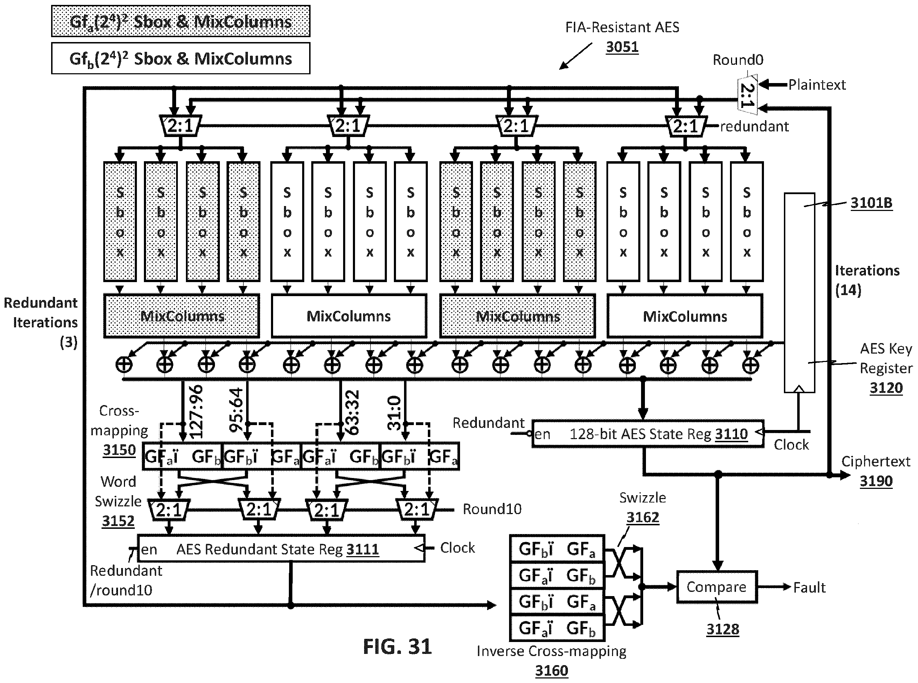

In one embodiment, the FIA-resistant AES circuitry 3051 is configured as a single-cycle datapath executing 14 iterative rounds using 16 byte-slices implemented with a pair of isomorphic composite-field GF(2⁴)² representations. Referring to **FIG. 31****,** in one embodiment, the round datapath is split into two groups, each containing eight S-box modules and two MixColumns modules. In particular, eight Sbox modules and two MixColumns module are implemented with a first isomorphic composite field representation, GFₐ(2⁴)², operating on input bytes [15:12, 7:4] (as indicated with patterned shading) and the other eight Sbox modules and two MixColumns module are implemented with another isomorphic composite field representation, GF_{b}(2⁴)²(as indicated with no shading), operating on input bytes [11:8, 3:0].

The FIA-resistant AES circuitry 3051 also executes up to three redundant iterations that are time-interleaved with the last three AES rounds. It should be noted that these specific details are not required for complying with the underlying principles of the invention. For example, *N* redundant iterations may be performed for *N* AES rounds, for any non-zero value of N.

In some embodiments, rounds 0-10 operate in a mode with intermediate output bytes written into the 128b state register 3110 at the end of every clock cycle. Additionally, in one embodiment, the output of round10 is cross-mapped (GFₐ→GF_{b}, GF_{b}→GFₐ), by cross-mapping circuitry 3150 and word-swizzled (127:96←→495:64, 63:32←→431:0) by word swizzle circuitry 3152, and written into a redundant state register 3111.

During rounds 11-13, the dataflow alternates between normal and redundant modes by alternating processing of input bytes from the state register 3110 or redundant-state register 3111 and writing outputs back into the corresponding source. The redundant rounds (11r-13r) repeat computations calculated by their regular counterparts (rounds 11-13) but on an isomorphically cross-mapped, swizzled version of the regular round input. As a result, faults injected on identical circuit nodes during regular and redundant rounds produce widely differing fault profiles at the round output registers.

In some embodiments, an inverse cross-mapping circuit 3160 and swizzle circuit 3162 convert redundant state outputs back to the original GF(2⁴)² representation before comparison circuitry 3128 compares them with corresponding results from the AES state register 3110. As indicated, upon detecting a mismatch, the comparison circuitry 3128 generates a "Fault" signal indicating the presence of corrupted bits in the output ciphertext.

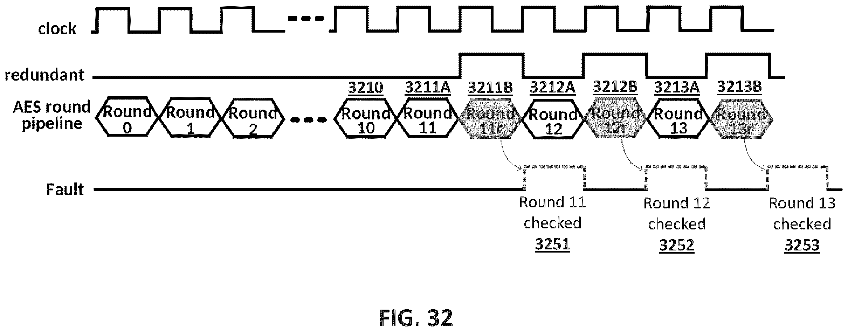

**FIG. 32** illustrates a cycle diagram for one embodiment of the AES data path. Redundant round operations, round11r 3211B, round12r 3212B, and round13r 3213B, are interspersed with their regular counterparts 3211A, 3212A, and 3213A, respectively, and checked for faults in the subsequent cycle, as indicated at 3251, 3252, and 3253, respectively. The FIA-resistant engine 3051 can be configured (e.g., via mode register 3114) to check any-one/any-two/all-three final rounds, resulting in a total latency of 15/16/17 cycles, respectively to generate an AES-256 ciphertext 3190.

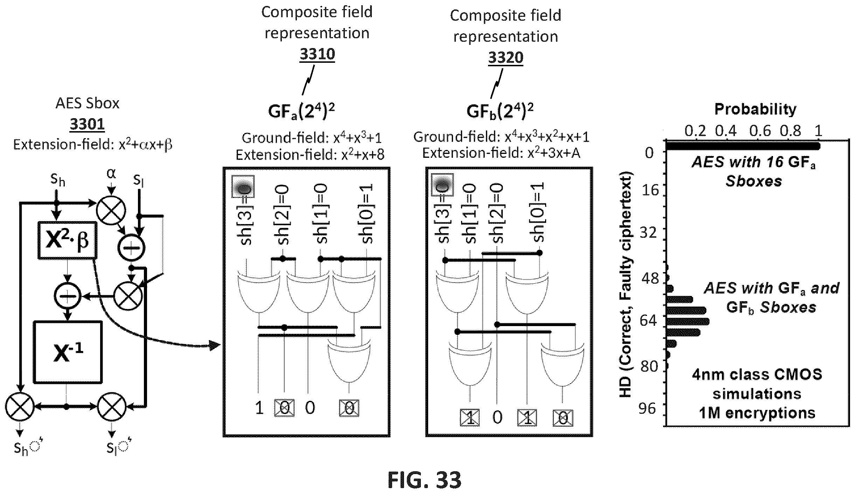

The choice of composite-field polynomials significantly impacts circuit realizations of the groups 3101A-B of Sbox and MixColumns datapaths. **FIG. 33** illustrates example logic gates for implementing ground-field polynomials (x⁴+x³+1, x⁴+x³+x²+x+1) and extension-field polynomials (x²+x+8, x²+3x+A) selected for (GFₐ, GF_{b}), respectively, selected from 2880 isomorphic GF(2⁴)² representations to maximize separation of fault-propagation characteristics for identically-injected faults.

FIA simulations show no separation (hamming distance=0) between correct and faulty ciphertext from redundant computations on a homogeneous GFₐ data path, while the use of GFₐ and GF_{b} byteslices produces uniformly dissimilar ciphertexts (mean hamming distance=64) when identical nodes are injected with faults.

In some embodiments, side-channel resistance is incorporated into the FIA-resistant AES circuitry 3051 by masking internal circuit nodes during the regular and redundant round iterations to disrupt correlations between the power/EM signatures and secret keys. For example, a random mask may be generated by an on-die pseudo-random number generator (RNG) and added to input plaintext prior to the AddRoundkey operation in round0. The presence of mask components in downstream circuit nodes corrupts the fidelity of attacker's statistical power models, preventing accurate correlations (e.g., via differential power analysis).

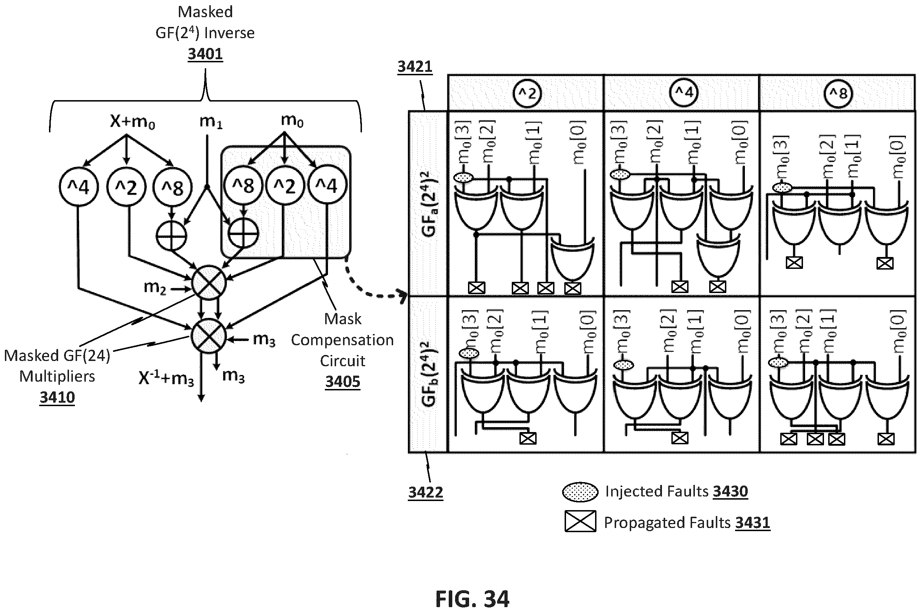

**FIG. 34** illustrates an example of masked GF(2⁴) inverse circuitry 3401. Mask compensation circuits 3405 provide protection from FIA with randomly generated mask components (m₂, m₄, and ms) using GFₐ and GF_{b} datapaths, in combination with word-swizzling during the time-interleaved redundant rounds. In some embodiments, the randomly generated mask components are also cross-mapped and word-swizzled between GFₐ and GF_{b} during redundant computations. The mask compensation circuits 3405 operate on 128b inputs from a mask register or redundant mask register depending on the computation mode. Similar to the AES round datapath, the choice of GFₐ and GF_{b} polynomials influences circuit realizations of the mask compensation circuits, generating different fault profiles for injected faults targeting masking circuit nodes.

Example circuit realizations for the GFₐ(2⁴)² and GF_{b}(2⁴)² composite-field representations for different polynomial components of the datapath are illustrated in two rows, 3421 and 3422, respectively. Injected faults 3430 are shown as a bitflip on mask bit m0[3], which transmits eight faults 3431 across the ^2, ^4 and ^8 outputs in the GFₐ implementation (row 3421), while the GF_{b} datapath (row 3422) propagates 6 downstream faults 3431 triggering a mismatch when regular and redundant round outputs are compared with each other in the subsequent cycle.

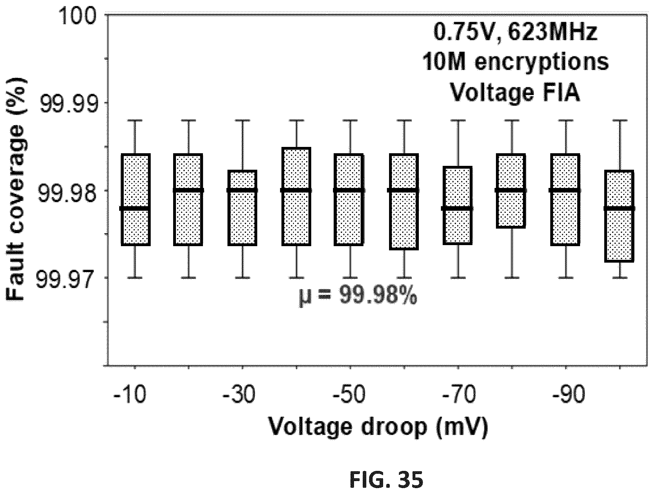

Referring to **FIG. 35****,** when a working embodiment of the FIA-resistant AES circuitry was tested with FIA attacks, the results showed a mean total fault coverage of 99.98% from undervoltage attacks, representing a 5000x improvement in fault-injection attack resistance compared to existing AES circuitry implementations.

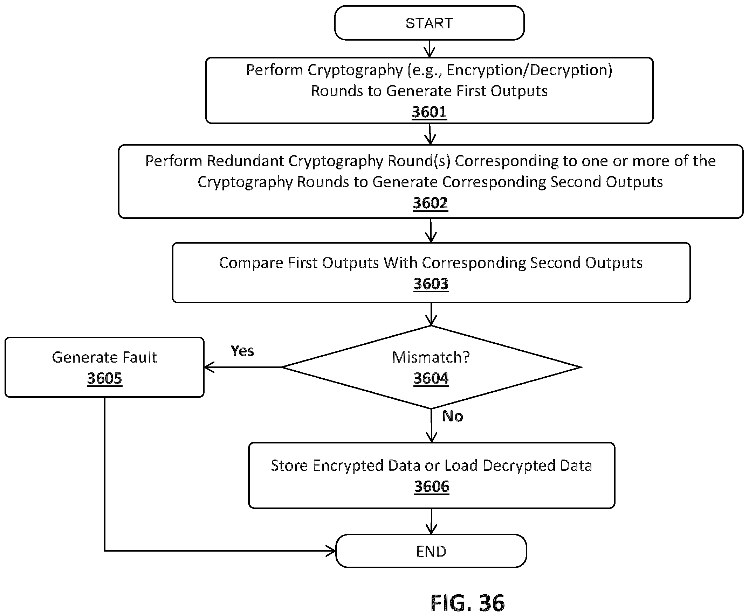

A method in accordance with one embodiment of the invention is illustrated in **FIG. 36****.** The method may be performed on the various architectures described herein, but is not limited to any particular processor or system architecture.

At 3601, a plurality of encryption or decryption rounds are performed to generate first outputs and, at 3602, redundant encryption/decryption rounds are performed corresponding to one or more of the encryption/decryption rounds to generate second outputs. At 3603, the first outputs are compared with the second outputs. If a mismatch is detected, determined at 3604, then a fault is generated at 3605. If no mismatch is detected, then at 3606 the encrypted data is stored to memory (for encryption) or the decrypted data is loaded from memory (for decryption).

Embodiments of the invention may include various steps, which have been described above. The steps may be embodied in machine-executable instructions which may be used to cause a general-purpose or special-purpose processor to perform the steps. Alternatively, these steps may be performed by specific hardware components that contain hardwired logic for performing the steps, or by any combination of programmed computer components and custom hardware components.

### EXAMPLES

The following are example implementations of different embodiments of the invention.

Example 1. A processor, comprising: execution circuitry to execute instructions and generate memory access requests including load requests to read data from memory and store requests to store data to memory; and cryptographic circuitry to perform a plurality of rounds of encryption or decryption to encrypt or decrypt the data, respectively, the cryptographic circuitry to perform one or more redundant rounds for a corresponding one or more of the plurality of rounds, the one or more redundant rounds to include spatial or temporal differences relative to the corresponding one or more rounds; the cryptographic circuitry to generate a fault upon detecting a mismatch between an output of a redundant round output and an output of a corresponding round.

Example 2. The processor of example 1 wherein the one or more redundant rounds are to be time-interleaved with the corresponding one or more rounds.

Example 3. The processor of examples 1 or 2 wherein the cryptographic circuitry is to modify inputs to the corresponding one or more rounds to generate corresponding inputs to the one or more redundant rounds.

Example 4. The processor of any of examples 1-3 wherein the inputs to the corresponding one or more rounds are to be isomorphically cross-mapped and swizzled to generate the corresponding inputs to the one or more redundant rounds.

Example 5. The processor of any of examples 1-4 wherein the cryptographic circuitry comprises: a first state register to store an encryption or decryption state for the plurality of rounds; and a second state register to store a redundant encryption or decryption state for the one or more redundant rounds.

Example 6. The processor of any of examples 1-5 wherein the cryptographic circuitry further comprises: circuitry to convert the redundant encryption or decryption state to a converted state representation corresponding to the encryption or decryption state.

Example 7. The processor of any of examples 1-6 wherein the cryptographic circuitry further comprises: comparison circuitry to compare the converted state representation to the encryption or decryption state to detect the mismatch.

Example 8. The processor of any of examples 1-7 wherein the cryptographic circuitry comprises: a first N Sbox circuits and a first M MixColumns circuits to be implemented with a first isomorphic composite field representation operating on a first set of input bytes in each round of the plurality of rounds; and a second N Sbox circuits and a second M MixColumns circuits to be implemented with a second isomorphic composite field representation operating on a second set of input bytes in each round of the plurality of rounds.

Example 9. A method, comprising: performing cryptography rounds to generate first outputs; performing redundant cryptography rounds corresponding to one or more of the cryptography rounds to generate corresponding second outputs; comparing each of the second outputs to a corresponding first output to detect any mismatches; storing encrypted data or loading decrypted data corresponding to the cryptography rounds if no mismatch is detected; and generating an error or fault condition if a mismatch is detected.

Example 10. The method of example 9 wherein the one or more redundant cryptography rounds are to be time-interleaved with the corresponding one or more of the cryptography rounds.

Example 11. The method of examples 9 or 10 further comprising: modifying inputs to the one or more cryptography rounds to generate corresponding inputs to the one or more redundant cryptography rounds.

Example 12. The method of any of examples 9-11 wherein the inputs to the one or more cryptography rounds are to be isomorphically cross-mapped and swizzled to generate the corresponding inputs to the one or more redundant cryptography rounds.

Example 13. The method of any of examples 9-13 further comprising: storing an encryption or decryption state for the plurality of cryptography rounds in a first state register; and storing a redundant encryption or decryption state for the one or more redundant cryptography rounds in a second state register.

Example 14. The method of any of examples 9-13, further comprising: converting the redundant encryption or decryption state to a converted state representation corresponding to the encryption or decryption state.

Example 15. The method of any of examples 9-14 further comprising: comparing the converted state representation to the encryption or decryption state to detect the mismatch.

Example 16. A machine-readable medium having program code stored thereon which, when executed by a machine, causes the machine to perform operations, comprising: performing cryptography rounds to generate first outputs; performing redundant cryptography rounds corresponding to one or more of the cryptography rounds to generate corresponding second outputs; comparing each of the second outputs to a corresponding first output to detect any mismatches; storing encrypted data or loading decrypted data corresponding to the cryptography rounds if no mismatch is detected; and generating an error or fault condition if a mismatch is detected.

Example 17. The machine-readable medium of example 16 wherein the one or more redundant cryptography rounds are to be time-interleaved with the corresponding one or more of the cryptography rounds.

Example 18. The machine-readable medium of examples 16 or 17 further comprising: modifying inputs to the one or more cryptography rounds to generate corresponding inputs to the one or more redundant cryptography rounds.

Example 19. The machine-readable medium of any of examples 16-18 wherein the inputs to the one or more cryptography rounds are to be isomorphically cross-mapped and swizzled to generate the corresponding inputs to the one or more redundant cryptography rounds.

Example 20. The machine-readable medium of any of examples 16-19 further comprising program code to cause the operations of: storing an encryption or decryption state for the plurality of cryptography rounds in a first state register; and storing a redundant encryption or decryption state for the one or more redundant cryptography rounds in a second state register.

Example 21. The machine-readable medium of any of examples 16-20, further comprising program code to cause the operations of: converting the redundant encryption or decryption state to a converted state representation corresponding to the encryption or decryption state.

Example 22. The machine-readable medium of any of examples 16-21 further comprising program code to cause the operations of: comparing the converted state representation to the encryption or decryption state to detect the mismatch.

As described herein, instructions may refer to specific configurations of hardware such as application specific integrated circuits (ASICs) configured to perform certain operations or having a predetermined functionality or software instructions stored in memory embodied in a non-transitory computer readable medium. Thus, the techniques shown in the Figures can be implemented using code and data stored and executed on one or more electronic devices (e.g., an end station, a network element, etc.). Such electronic devices store and communicate (internally and/or with other electronic devices over a network) code and data using computer machine-readable media, such as non-transitory computer machine-readable storage media (e.g., magnetic disks; optical disks; random access memory; read only memory; flash memory devices; phase-change memory) and transitory computer machine-readable communication media (e.g., electrical, optical, acoustical or other form of propagated signals - such as carrier waves, infrared signals, digital signals, etc.). In addition, such electronic devices typically include a set of one or more processors coupled to one or more other components, such as one or more storage devices (non-transitory machine-readable storage media), user input/output devices (e.g., a keyboard, a touchscreen, and/or a display), and network connections. The coupling of the set of processors and other components is typically through one or more busses and bridges (also termed as bus controllers). The storage device and signals carrying the network traffic respectively represent one or more machine-readable storage media and machine-readable communication media. Thus, the storage device of a given electronic device typically stores code and/or data for execution on the set of one or more processors of that electronic device. Of course, one or more parts of an embodiment of the invention may be implemented using different combinations of software, firmware, and/or hardware. Throughout this detailed description, for the purposes of explanation, numerous specific details were set forth in order to provide a thorough understanding of the present invention. It will be apparent, however, to one skilled in the art that the invention may be practiced without some of these specific details. In certain instances, well known structures and functions were not described in elaborate detail in order to avoid obscuring the subject matter of the present invention. Accordingly, the scope and spirit of the invention should be judged in terms of the claims which follow.

## Claims

1. A processor, comprising:
execution circuitry to execute instructions and generate memory access requests including load requests to read data from memory and store requests to store data to memory; and
cryptographic circuitry to perform a plurality of rounds of encryption or decryption to encrypt or decrypt the data, respectively, the cryptographic circuitry to perform one or more redundant rounds for a corresponding one or more of the plurality of rounds, the one or more redundant rounds to include spatial or temporal differences relative to the corresponding one or more rounds;
the cryptographic circuitry to generate a fault upon detecting a mismatch between an output of a redundant round output and an output of a corresponding round.

2. The processor of claim 1 wherein the one or more redundant rounds are to be time-interleaved with the corresponding one or more rounds.

3. The processor of claim 1 or 2 wherein the cryptographic circuitry is to modify inputs to the corresponding one or more rounds to generate corresponding inputs to the one or more redundant rounds.

4. The processor of claim 3 wherein the inputs to the corresponding one or more rounds are to be isomorphically cross-mapped and swizzled to generate the corresponding inputs to the one or more redundant rounds.

5. The processor of any of claims 1 to 4 wherein the cryptographic circuitry comprises:
a first state register to store an encryption or decryption state for the plurality of rounds; and
a second state register to store a redundant encryption or decryption state for the one or more redundant rounds.

6. The processor of claim 5 wherein the cryptographic circuitry further comprises:
circuitry to convert the redundant encryption or decryption state to a converted state representation corresponding to the encryption or decryption state.

7. The processor of claim 6 wherein the cryptographic circuitry further comprises:
comparison circuitry to compare the converted state representation to the encryption or decryption state to detect the mismatch.

8. The processor of any of claims 1 to 7 wherein the cryptographic circuitry comprises:
a first N Sbox circuits and a first M MixColumns circuits to be implemented with a first isomorphic composite field representation operating on a first set of input bytes in each round of the plurality of rounds; and
a second N Sbox circuits and a second M MixColumns circuits to be implemented with a second isomorphic composite field representation operating on a second set of input bytes in each round of the plurality of rounds.

9. A method, comprising:
performing cryptography rounds to generate first outputs;
performing redundant cryptography rounds corresponding to one or more of the cryptography rounds to generate corresponding second outputs;
comparing each of the second outputs to a corresponding first output to detect any mismatches;
storing encrypted data or loading decrypted data corresponding to the cryptography rounds if no mismatch is detected; and
generating an error or fault condition if a mismatch is detected.

10. The method of claim 9 wherein the one or more redundant cryptography rounds are to be time-interleaved with the corresponding one or more of the cryptography rounds.

11. The method of claim 9 or 10 further comprising:
modifying inputs to the one or more cryptography rounds to generate corresponding inputs to the one or more redundant cryptography rounds.

12. The method of claim 11 wherein the inputs to the one or more cryptography rounds are to be isomorphically cross-mapped and swizzled to generate the corresponding inputs to the one or more redundant cryptography rounds.

13. The method of any of claims 9 to 12 further comprising:
storing an encryption or decryption state for the plurality of cryptography rounds in a first state register; and
storing a redundant encryption or decryption state for the one or more redundant cryptography rounds in a second state register.

14. The method of claim 13, further comprising:
converting the redundant encryption or decryption state to a converted state representation corresponding to the encryption or decryption state.

15. The method of claim 14 further comprising:
comparing the converted state representation to the encryption or decryption state to detect the mismatch.
